# FASCICULE DE BREVET EUROPEEN

(11) **EP 1 786 223 B1**
(45) Date de publication et mention de la délivrance du brevet: **15.07.2009**
(21) Numéro de dépôt: 06291760.4
(22) Date de dépôt: 14.11.2006
(51) Int. Cl.: H04W 24/06

(54) **Simulation et gestion des ressources d'un réseau de téléphonie mobile**
Simulierung und Verwaltung von Ressource eines mobilen Telephonnetzes
Simulation and management of resources of a mobile telephone network

(30) Priorité: 14.11.2005 FR 0511508
(43) Date de publication de la demande: 16.05.2007
(73) Titulaire: Societé Française du Radiotéléphone, 75008 Paris (FR)
(72) Inventeur: Barbosa da Torre, Serge, 75020 Paris (FR); Fattouch, Imad, 75013 Paris (FR); Chrabieh, Rabih, San Diego, CA 92109 (US)
(74) Mandataire: Debay, Yves

(56) Documents cités:
- WO-A-03/037018
- US-A- 5 561 841

## Description

La présente invention concerne le domaine de la téléphonie mobile et en particulier les réseaux de téléphonie mobile de troisième génération (3G) tels que, par exemple, les systèmes de communication du type UMTS (« Universal Mobile Telecommunications System », selon la terminologie anglaise) défini par le standard 3GPP (« Third Generation Partnership Project », selon la terminologie anglaise).

Un problème dans le domaine de la téléphonie mobile en général est la gestion des ressources radio (en anglais « Radio Resources Management » RRM) en fonction de la topologie des réseaux et de leur utilisation par les abonnés. Les réseaux de téléphonie mobile nécessitent en effet une gestion des ressources radio utilisées, au moins dans le sens descendant (« downlink », selon la terminologie anglaise), c'est-à-dire des émetteurs vers les terminaux mobiles communicants présents dans leur zone d'influence. Ce problème se complexifie avec le développement des nouvelles technologies de télécommunication et notamment avec l'arrivée des systèmes de troisième génération offrant la possibilité aux abonnés d'utiliser leurs terminaux mobiles communicants comme des terminaux de navigation sur Internet, avec une bande passante de l'ordre du mégaoctet par seconde. Dans ces systèmes, les taux de transmission au sein d'une cellule du réseau varient énormément et rapidement en fonction de l'utilisation des différents services par les utilisateurs. Il est donc important de permettre une gestion dynamique efficace du débit de données transitant par les émetteurs pour les différents terminaux mobiles communicants présents dans leur zone d'influence et de surveiller la qualité des services fournis.

Dans les systèmes de téléphonie mobile de la génération du GSM (« Global System for Mobile communication », selon la terminologie anglaise), les données transmises par fréquences radio sont organisées selon des trames de données divisées en une pluralité d'intervalles de temps permettant à autant d'utilisateurs d'utiliser une même fréquence pour leur communication grâce à leur terminal mobile communicant. Cette division des trames de données permettant un multiplexage des signaux dans le temps est appelée « accès multiple par division du temps » (« Time Division Multiple Access », TDMA, selon la terminologie anglaise).

Dans les systèmes de troisième génération, les données peuvent être transmises grâce à différents codages qui permettent à une pluralité de terminaux mobiles communicants d'utiliser une même fréquence radio mais avec des codes différents. Cette technologie, appelée « accès multiple par division du code » (« Code Division Multiple Access », CDMA, selon la terminologie anglaise), consiste en un multiplexage des signaux par des codes. Les réseaux de téléphonie moderne peuvent utiliser les deux types de division des fréquences radio pour la transmission des données. Par exemple, les systèmes de type UMTS-TDD (pour l'anglais « Universal Mobile Telecommunications System - Time Division Duplex ») utilisent la technologie TD-CDMA (pour l'anglais « Time Division - Code Division Multiple Access »). Certaines évolutions de l'UMTS comme les Technologies WCDMA (pour l'anglais « Wide-Band Code Division Multiple Access ») et HSDPA (pour l'anglais « High Speed Downlink Packet Access ») permettent d'atteindre des bandes passantes élevées pour la transmission des données, au moins dans le sens descendant (« Downlink »). Les réseaux de téléphonie mobile moderne utilisent la technologie de l'aiguillage (PS) par paquets (« packet switch », selon la terminologie anglaise), utilisée pour Internet et selon laquelle les données sont transmises par paquets définis par un ensemble de données transitant en même temps et dont certaines données correspondent à un entête (« header », selon la terminologie anglaise) permettant l'aiguillage et donc l'adressage du paquet vers sa cible au travers du réseau, par exemple de type GPRS (« General Packet Radio Service », selon la terminologie anglaise). Les réseaux de téléphonie mobile utilisent également la technologie de l'aiguillage par circuit (« circuit switch », selon la terminologie anglaise) pour le transit des données correspondant aux informations sonores nécessaires aux communications téléphoniques au travers du réseau. La gestion des ressources des réseaux de téléphonie mobile moderne doit donc non seulement intégrer une gestion de la division dans le temps des trames de transmission de données mais également de la division par le codage, ainsi que du type d'aiguillage (« packet switch » ou « circuit switch », c'est-à-dire par paquets ou par circuit) utilisé pour le transit des paquets au sein du réseau.

Enfin, les réseaux de téléphonie mobile moderne nécessitent une gestion de la puissance des émetteurs en fonction du nombre de terminaux mobiles communicants d'utilisateurs présents dans leur zone d'influence et en fonction de la distance séparant ces terminaux des émetteurs, mais également en fonction de l'utilisation des différents types de services, plus ou moins coûteux en ressources, offerts par les opérateurs téléphoniques aux utilisateurs de terminaux mobiles communicants.

Il est connu dans l'art antérieur des solutions permettant une prévision statistique du trafic au sein d'un réseau, par exemple grâce à la méthode de « Monte Carlo », mais ces solutions de simulations statiques ne rendent pas compte de l'aspect temporellement dynamique des communications passées au sein du réseau puisqu'elles reposent sur des itérations d'estimations statistiques du trafic à différents temps. Ces solutions ne permettent pas de « contrôle d'admission des appels » (CAC, pour l'anglais « Call Admission Control »), c'est-à-dire de contrôler l'admission ou le rejet des appels en fonction de l'utilisation des ressources des émetteurs. De plus, ces solutions ne permettent pas non plus de « contrôle de charge » (LC, pour l'anglais « Load Control »), c'est-à-dire de contrôler l'utilisation des trames de voie de support (B) disponibles pour les communications au sein d'une cellule couverte par un émetteur. Enfin, ces solutions ne permettent pas de contrôle du débit offert aux différents utilisateurs de terminaux communicants présents dans une cellule couverte par un émetteur du réseau.

Il est également connu, notamment par la demande de brevet WO 03/037018 A1, des méthodes d'optimisation de la performance d'un réseau basées sur le calcul d'au moins une fonction de coût centralisée au lieu d'optimiser les ressources séparément. Cette fonction de coût regroupe des indicateurs de performance (permettant de déterminer la qualité des services), des paramètres de configuration (avec des valeurs déterminées) et un nombre déterminé de cellules considérées. Ces méthodes consistent à faire varier les valeurs des paramètres de configuration pour estimer de nouveau les indicateurs de performance et à comparer les résultats de la fonction de coût selon les paramètres pour déterminer si la performance du réseau est améliorée et conserver les paramètres le cas échéant. Ce type de solution présente les inconvénients de ne pas fournir de méthodologie de simulation et de ne se baser que sur des paramètres statiques au sein de cellules simulées sans qu'une répartition réaliste des communications ne soit prise en compte

Il est également connu, notamment par la demande de brevet US 5,561,841, des méthodes de planification de réseau basées sur la création d'un modèle sur une carte digitale, l'ajout de propriétés relatives au réseau et aux communications. Ces méthodes consistent à construire un réseau avec des paramètres de fonctionnement, puis à l'analyser de façon à permettre une optimisation sur la base de résultats statistiques des simulations. Ce type de solution présente les inconvénients de n'enseigner que des simulations d'un réseau statique et de nécessiter la construction d'un modèle du réseau et une analyse statistique des résultats pour l'optimisation du fonctionnement du réseau.

Il est également connu, notamment par la demande de brevet EP 1 427 233 A1, des solutions consistant en une simulation du réseau dans lequel sont identifiés les stations de base et les terminaux mobiles communicants générant des interférences affectant une communication considérée. Ces solutions présentent les inconvénients de démarrer à partir d'un état instable du réseau à un instant donné car elles consistent à rechercher des éventuelles interférences affectant une communication considérée d'un terminal mobile communicant et générées par des communications passées dans un nombre restreint de cellules autour de ce terminal. Ce type de solution présente les inconvénients de ne pas prendre en compte les interférences générées par la communication considérée sur les autres communications et de ne pas permettre directement une optimisation du réseau grâce à une re-convergence efficace du réseau vers un état stable.

Il est également connu dans l'art antérieur des solutions consistant en une simulation dynamique des communications au sein d'un réseau de téléphonie mobile. Ces solutions présentent l'avantage de simuler la réalité mais présentent les inconvénients d'être limitées à un ensemble de 30 ou 40 cellules car elles nécessitent de nombreux paramètres et donc énormément de ressources de calcul. Ces solutions sont donc trop lourdes à implémenter et inexploitables dans un réseau opérationnel.

La présente invention a pour but de supprimer les inconvénients de l'art antérieur en proposant une méthode de simulation et d'optimisation de l'exploitation des ressources d'un réseau de téléphonie mobile nécessitant de moindres capacités de calcul pour son implémentation et permettant un contrôle dynamique, en fonction du trafic, de l'ensemble des ressources du réseau et de l'utilisation des différents types de services offerts aux utilisateurs de terminaux communicants présents dans la zone de couverture du réseau, ainsi qu'une surveillance de la qualité des prestations offertes.

Ce but est atteint par un Procédé de simulation et d'optimisation de l'exploitation des ressources disponibles dans une zone de couverture d'un réseau de téléphonie mobile consistant en un ensemble de zones d'influence, dites cellules, d'une pluralité d'émetteurs/récepteurs, dits serveurs, dont l'exploitation des ressources dépend des transmissions d'ensembles de données, dits paquets, requises par au moins un terminal mobile communicant, dit requérant, présent dans leur zone d'influence, caractérisé, d'une part, en ce qu'il est mis en oeuvre par des moyens de traitement d'au moins un système d'optimisation de ressources et, d'autre part, en ce qu'il comporte les étapes suivantes :
- définition, par un module gestionnaire d'évènements du système d'optimisation, d'une variation, dite perturbation, d'au moins une transmission de paquets requise au sein du réseau, la perturbation étant définie à partir d'au moins une carte de répartition statistique stockée dans des moyens de mémorisation du système d'optimisation et comportant des données représentatives de transmissions de paquets de données d'une pluralité de terminaux mobiles communicants présents dans une zone géographique déterminée pendant une tranche horaire déterminée,
- sélection d'un ensemble de cellules comportant au moins la cellule dans laquelle la perturbation a lieu et définissant une zone simulée au sein de la carte de répartition, par un module de contrôle d'exploitation des ressources, puis utilisation d'un algorithme de parcours, par le module de contrôle d'exploitation, pour définir un chemin de parcours de la zone simulée et optimiser successivement les ressources des serveurs couvrant les cellules successives du chemin de parcours,
- définition, par le module gestionnaire d'évènements, de données représentatives d'au moins un paramètre relatif à la transmission des paquets au sein de chacune des cellules de la zone simulée, parmi au moins des paramètres de multiplexage du paquet dans le temps, de multiplexage du paquet par des codes et de puissance requise.

Selon une autre particularité, l'étape de définition d'au moins un paramètre parmi des paramètres de multiplexage du paquet dans le temps, de multiplexage du paquet par des codes et de puissance requise, par le module gestionnaire d'évènements, comporte au moins une des étapes suivantes :
- définition de périodes de temps, dites sous-trames, permettant le multiplexage des paquets dans le temps au cours d'au moins une trame de transmission,
- définition de codes permettant le multiplexage des paquets par des codes au cours d'au moins une trame de transmission,
- définition de la puissance allouée à chacun des paquets au cours d'au moins une trame de transmission,
- définition d'un type de tranche de temps utilisé pour la transmission des paquets selon les différents types de services fournis par les serveurs, ce type de tranche de temps correspondant soit à une tranche à débit total, soit à une tranche à demi-débit, soit à une tranche exclusivement à paquets, soit à une tranche mixte.

Selon une autre particularité, l'étape de définition de codes comporte une étape de détermination du nombre de codes attribués à chacun des paquets et une étape de détermination du type de modulation utilisé pour ces codes.

Selon une autre particularité, les étapes de définition des sous-trames, de définition des codes et de définition de la puissance sont mises en oeuvre, pour chacun des paquets, par un module planificateur de paquets permettant de déterminer les codes et les sous-trames grâce auxquels chacun des paquets sera transmis au cours d'au moins une trame de transmission, ainsi que la puissance allouée à chacun des paquets.

Selon une autre particularité, l'étape de définition des sous-trames est remplacée par une étape d'évaluation d'une portion de temps occupée par la transmission de chacun des paquets, sans définir de sous-trames mais en ne considérant que la durée totale pendant laquelle chacun des paquets est transmis.

Selon une autre particularité, l'étape d'évaluation de la portion de temps occupée par la transmission de chacun des paquets repose sur une approximation consistant en un calcul de la puissance moyenne utilisée au cours du temps pour la transmission de chacun des paquets et en un étalement de la puissance sur la portion de temps totale occupée par chacun des paquets, grâce à l'utilisation, par le module gestionnaire d'évènements, d'au moins un algorithme parmi les algorithmes suivants de répartition temporelle des paquets :
- algorithme, dit de transmission individuelle, selon lequel un seul paquet est transmis au cours de chacune des sous-trames en utilisant alors toute la puissance disponible pendant cette sous-trame,
- algorithme, dit de transmission groupée, selon lequel une pluralité de paquets est transmise pendant une même portion de temps, grâce à un multiplexage par des codes, ces paquets utilisant alors chacun une portion de la puissance totale disponible.

Selon une autre particularité, le procédé comporte une étape de détermination de l'interférence perçue par chacun des serveurs responsables de la transmission de chacun des paquets pendant la portion de temps au cours de laquelle ils sont transmis, cette étape étant mise en oeuvre grâce à l'étape de définition de la puissance allouée à chacun des paquets au cours d'au moins une trame de transmission et à l'utilisation des algorithmes de répartition temporelle des paquets par le module gestionnaire d'évènements, cette détermination de l'interférence perçue permettant un calcul d'un rapport signal sur bruit pour chacun des paquets.

Selon une autre particularité, l'utilisation de l'algorithme de transmission groupée par le module gestionnaire d'évènements s'accompagne d'une étape d'allocation de différentes portions de temps aux différents paquets transmis au cours d'une trame de transmission, grâce à l'utilisation d'un algorithme parmi les algorithmes suivants d'allocation de portion de temps :
- algorithme, dit égalitaire, selon lequel la portion de temps allouée à chacun des paquets est fonction du temps total de la trame de transmission divisé par le nombre de paquets à transmettre,
- algorithme, dit maximisant, selon lequel la portion de temps allouée à chacun des paquets est fonction d'une valeur d'au moins un paramètre relatif à la transmission du paquet divisée par la somme des valeurs de ce(s) paramètre(s) pour les autres paquets.

Selon une autre particularité, le procédé comporte une étape préalable d'établissement d'au moins une carte de répartition comportant des données représentatives du trafic et de la localisation des serveurs dans la zone de couverture du réseau, ces données représentatives du trafic correspondant à des mesures quantitatives et qualitatives de la localisation d'une pluralité de terminaux mobiles communicants et de serveurs opérant dans la zone de couverture du réseau et des transmissions de paquets de données effectuées au cours de tranches horaires choisies pour leur significativité statistique, les données correspondant à ces mesures étant enregistrées dans les moyens de mémorisation du système d'optimisation.

Selon une autre particularité, le procédé comporte une étape d'établissement d'au moins une carte de répartition comportant des données représentatives du trafic et de la localisation des serveurs dans la zone de couverture du réseau, les données représentatives du trafic étant générées par le module gestionnaire d'évènements et représentant, d'une part, la localisation d'une pluralité de terminaux mobiles communicants distribués aléatoirement dans la zone de couverture du réseau selon une densité prédéterminée et, d'autre part, les transmissions de paquets de données requises par ces terminaux assignées aléatoirement aux différents terminaux présents dans le réseau, à partir de lois aléatoires stockées dans les moyens de mémorisation du système d'optimisation.

Selon une autre particularité, le procédé comporte une étape d'enregistrement dans les moyens de mémorisation du système d'optimisation d'au moins un algorithme de parcours permettant au module de contrôle d'exploitation de définir un chemin de parcours consistant en une sélection d'une cellule quelconque de la zone simulée puis en une pluralité d'itérations d'une sélection d'une cellule adjacente à la cellule sélectionnée précédemment, jusqu'à ce que toutes les cellules de la zone simulée aient été successivement sélectionnées dans un ordre croissant en fonction de leur distance par rapport à la première cellule sélectionnée.

Selon une autre particularité, le procédé comporte une étape d'enregistrement dans les moyens de mémorisation du système d'optimisation d'au moins un algorithme de parcours définissant des cercles concentriques centrés autour de la cellule dans laquelle a lieu la perturbation et permettant au module de contrôle d'exploitation de définir un chemin de parcours consistant en des sélections successives des cellules de la zone simulée par lesquelles passent ces cercles concentriques dans un ordre croissant en fonction de la distance de ces cellules par rapport à la première cellule sélectionnée.

Selon une autre particularité, l'étape d'utilisation de l'algorithme de parcours par le module de contrôle d'exploitation s'accompagne d'une étape de création de données représentatives d'une grille de découpage de la zone simulée en divisions comportant chacune un index obtenu à partir des coordonnées des cellules et permettant de localiser chacune des divisions et de les classer dans un ordre croissant en fonction de leur distance par rapport à une division centrale.

Selon une autre particularité, l'étape d'utilisation, par le module de contrôle d'exploitation, d'un algorithme de parcours résulte en une définition de cercles concentriques centrés autour de la cellule dans laquelle a lieu la perturbation et s'accompagne d'une étape de définition d'un chemin de parcours comportant au moins un vecteur indiquant le trajet à parcourir d'une division à l'autre au sein de la zone simulée, pour permettre des sélections successives des divisions de la zone simulée par lesquelles passent ces cercles concentriques et des sélections successives des cellules contenues dans chacune de ces divisions dans un ordre croissant en fonction de leur distance par rapport à une division centrale.

Selon une autre particularité, les données représentatives de la grille de découpage de la zone simulée en divisions comportent des données représentatives des coordonnées de la division permettant au module de contrôle d'exploitation de déterminer la localisation des cellules ainsi que des divisions et cellules voisines.

Selon une autre particularité, l'étape d'utilisation de l'algorithme de parcours par le module de contrôle d'exploitation s'accompagne d'une étape de création, pour chaque cellule de la zone simulée, de données représentatives des cellules voisines dans la zone simulée, de façon à définir un chemin de parcours de chacune des cellules les unes après les autres.

Selon une autre particularité, le chemin de parcours des cellules au sein d'une division est déterminé de façon aléatoire.

Selon une autre particularité, l'étape d'utilisation de l'algorithme de parcours par le module de contrôle d'exploitation s'accompagne d'une création, pour chaque cellule de la zone simulée, de données représentatives d'un marqueur indiquant les cellules déjà parcourues pendant le parcours de la zone simulée par le module de contrôle d'exploitation.

Selon une autre particularité, l'étape de définition de la perturbation consiste en une sélection aléatoire et automatique d'un terminal mobile communicant dans une carte de répartition extraite des moyens de mémorisation du système d'optimisation et en ce que l'étape de sélection d'un ensemble de cellules définissant une zone simulée au sein de la carte de répartition consiste en une sélection d'au moins un serveur dont la cellule peut couvrir l'emplacement auquel se trouve ce terminal dans la carte de répartition.

Selon une autre particularité, les étapes de définition de la perturbation et de sélection d'un ensemble de cellules définissant une zone simulée au sein de la carte de répartition consistent en une sélection d'un terminal mobile communicant présent dans la zone de couverture du réseau et d'au moins les serveurs dont les cellules peuvent couvrir l'emplacement auquel se trouve ce terminal dans la carte de répartition, à partir d'informations saisies et enregistrées par un utilisateur système d'optimisation de ressources, grâce à des moyens interactifs entre l'utilisateur et le système d'optimisation de ressources.

Selon une autre particularité, d'une part, l'étape de définition de la perturbation est mise en oeuvre lors d'une requête de transmission d'un paquet de données par un terminal mobile requérant présent dans la zone de couverture d'un réseau de téléphonie mobile opérationnel et consiste en une localisation du terminal mobile communicant requérant dans la zone de couverture du réseau et une identification du type de transmission qu'il requiert et, d'autre part, l'étape de sélection d'un ensemble de cellules définissant une zone simulée au sein de la carte de répartition consiste en une sélection d'au moins un serveur dont la cellule peut couvrir l'emplacement auquel se trouve ce terminal dans la carte de répartition.

Selon une autre particularité, l'étape de définition de données représentatives d'au moins un paramètre relatif à la transmission des paquets est mise en oeuvre par le système d'optimisation de ressources, soit de façon aléatoire et automatique, soit à partir d'informations saisies et enregistrées par un utilisateur du système d'optimisation de ressources, soit à partir de paramètres de transmission requis par un terminal mobile communicant lors d'une requête de transmission.

Selon une autre particularité, l'étape de définition de la perturbation par le module gestionnaire d'évènements comporte au moins une des étapes suivantes :
- requête d'une nouvelle transmission, gérée par un module de contrôle des évènements,
- fin d'une transmission, gérée par le module de contrôle des évènements,
- expiration d'un délai de transmission, gérée par le module de contrôle des évènements,
- simulation de la mobilité du terminal mobile communicant responsable de la perturbation, gérée par un module de simulation de mobilité,
- changement des transmissions de paquets en cours, gérée par un module planificateur de paquets.

Selon une autre particularité, l'étape de simulation de la mobilité du terminal mobile communicant responsable de la perturbation consiste en l'une des étapes suivantes :
- modélisation d'une vitesse de déplacement du terminal mobile communicant par changement du rapport signal sur bruit requis, permettant une modélisation du niveau de pertes ou du gain du aux variations de la force du signal perçu par les terminaux (2) mobiles communicants, ou
- changement de la localisation du terminal mobile communicant dans la carte de répartition par sélection d'un terminal mobile communicant voisin dans la carte.

Selon une autre particularité, le procédé comporte une étape de contrôle du trafic entre les serveurs de la zone simulée et les terminaux mobiles communicants présents dans la zone simulée, mise en oeuvre par un module de contrôle du trafic du système d'optimisation définissant, pour chacune des transmissions en cours, des sessions de transmission de paquets, des supports de transmission et des canaux de transmission de ces paquets, cette étape s'accompagnant d'au moins une des étapes de définition des paramètres de multiplexage et de puissance.

Selon une autre particularité, l'étape de contrôle du trafic par le module de contrôle du trafic du système d'optimisation consiste en une définition d'une pluralité de paramètres relatifs aux services et aux ressources utilisés par les terminaux mobiles communicants présents dans la zone simulée, cette définition résultant d'au moins une étape d'extraction de données représentatives de ces paramètres, à partir d'une carte de répartition, et d'une éventuelle étape de création de données représentatives de ces paramètres, à partir d'informations saisie par un utilisateur du système d'optimisation, de façon à permettre au moins une des étapes suivantes :
- définition de sessions correspondant à des transmissions de paquets de données entre les serveurs de la zone simulée et chacun des terminaux mobiles communicants présents, avec définition des paquets transitant au cours des sessions ;
- définition d'au moins un support associé à chacune des transmissions de chacun des terminaux mobiles communicants, avec définition d'au moins un paramètre parmi des paramètres relatifs au type du support, au rythme du support, à la qualité du signal requise, aux canaux de transmission utilisés pour chacune des cellules et à la gamme de puissances autorisée.

Selon une autre particularité, le procédé comporte une étape de contrôle de l'admissibilité de la transmission de ce paquet, par un module de contrôle d'admission des appels du système d'optimisation de ressources réalisant une définition d'un ensemble, dit ensemble actif, de cellules disponibles au sein de la zone simulée, par vérification de la disponibilité, dans la zone simulée, d'au moins un paramètre parmi la puissance, les canaux et les paramètres de multiplexage par codes et par le temps ou le type de tranches de temps utilisé, puis classement des serveurs de l'ensemble actif en fonction de leur participation à la puissance totale des signaux échangés avec le terminal mobile communicant, le module de contrôle d'admission des appels effectuant alors une décision, en fonction du trafic, de l'admissibilité de la transmission de ce paquet grâce à au moins une voie de transmission, dite support, et au moins un canal de transmission du paquet via au moins un serveur couvrant une des cellules de l'ensemble actif.

Selon une autre particularité, le procédé comporte une étape de contrôle d'exploitation, mise en oeuvre par un module de contrôle d'exploitation du système d'optimisation lors d'une variation du nombre de paquets transmis au sein de la zone simulée et consistant en une vérification d'au moins un paramètre utilisé par les terminaux mobiles communicants dans les cellules constituant la zone simulée parmi au moins la puissance et les paramètres de multiplexage par codes et par le temps ou le type de tranches de temps utilisé, puis ajustement de ce(s) paramètre(s) pour au moins un serveur couvrant au moins une cellule de la zone simulée.

Selon une autre particularité, le procédé comporte une étape de contrôle de charge pour chacune des cellules de la zone simulée, mise en oeuvre par un module de contrôle de charge du système d'optimisation, lors d'une utilisation excessive des ressources d'au moins un serveur de la zone simulée, consistant en l'utilisation d'au moins un algorithme de contrôle de charge parmi au moins un algorithme de contrôle de charge à puissance constante, au moins un algorithme de contrôle de charge par tranches de temps et au moins un algorithme de contrôle de charge à puissance variable préalablement enregistrés dans les moyens de mémorisation du système d'optimisation et comportant les étapes suivantes :
- vérification des ressources exploitées, au niveau d'au moins un paramètre parmi la puissance, les canaux utilisés et les paramètre de multiplexage par codes et par le temps ou le type de tranches de temps utilisé, dans les cellules constituant la zone simulée, pour sélectionner au moins un serveur dont les ressources sont exploitées de manière excessive ;
- sélection d'au moins un paquet parmi les paquets, dits paquets excessifs, utilisant le maximum de puissance ou utilisant un débit maximum sur les canaux de transmission entre les terminaux mobiles communicants présents et le serveur dont les ressources sont exploitées de manière excessive ;
- décision entre un rejet du paquet excessif sélectionné et un déclassement des paramètres de transmission du paquet excessif sélectionné.

Selon une autre particularité, l'étape de décision entre un rejet du paquet excessif sélectionné et un déclassement des paramètres de transmission du paquet excessif sélectionné, lors du contrôle de charge par le module de contrôle de charge, dépend de l'algorithme de contrôle de charge utilisé et comporte les étapes suivantes :
- vérification du type d'aiguillage, par circuit ou par paquet, utilisé par le paquet excessif sélectionné ;
- vérification des paramètres du support utilisé par le paquet excessif sélectionné ;
- vérification d'une liste de serveurs de l'ensemble actif classés en fonction de leur participation à la puissance totale des signaux échangés avec le terminal mobile communicant, pour déterminer si il existe un autre serveur apte à permettre la transmission du paquet excessif sélectionné, lorsque la puissance du signal fourni par un serveur n'est pas suffisante.

Selon une autre particularité, l'étape de décision entre un rejet du paquet excessif sélectionné et un déclassement des paramètres de transmission du paquet excessif sélectionné, lors de l'étape de contrôle de charge, par utilisation d'au moins un algorithme de contrôle de charge à puissance constante, consiste en un maintien constant de la puissance initialement allouée aux paquets pendant toute la durée de leur transmission et en un déclassement des paramètres de multiplexage par codes, en fonction du rapport signal sur bruit instantané, de façon à réduire le débit du paquet excessif sélectionné tout en maintenant le rapport signal sur bruit au-dessus de sa valeur requise, ou en un rejet du paquet excessif sélectionné si le rapport signal sur bruit requis ne peut pas être maintenu.

Selon une autre particularité, l'étape de décision entre un rejet du paquet excessif sélectionné et un déclassement des paramètres de transmission du paquet excessif sélectionné, lors de l'étape de contrôle de charge, par utilisation d'au moins un algorithme de contrôle de charge à puissance variable, consiste :
- soit en un maintien constant des paramètres de multiplexage par codes initialement alloués aux paquets et en un déclassement des paramètres de puissance, en fonction du rapport signal sur bruit instantané, de façon à réduire le débit du paquet excessif sélectionné tout en maintenant le rapport signal sur bruit au-dessus de sa valeur requise,
- soit en un déclassement des paramètres de multiplexage par codes, en fonction du rapport signal sur bruit instantané, de façon à réduire le débit du paquet excessif sélectionné tout en maintenant le rapport signal sur bruit au-dessus de sa valeur requise, lorsque la puissance ne peut pas être régulée,
- soit en un rejet du paquet excessif sélectionné si le rapport signal sur bruit requis ne peut pas être maintenu.

Selon une autre particularité, le procédé comporte une étape de contrôle de charge pour chacune des cellules de la zone simulée, mise en oeuvre par un module de contrôle de charge du système d'optimisation, par utilisation d'au moins un algorithme de contrôle de charge par tranches de temps, soit lorsqu'une tranche de temps mixte n'est utilisée pour la transmission que d'un paquet à aiguillage par circuit alors qu'elle permet normalement ou la transmission à la fois de paquets à aiguillage par paquets et de paquets à aiguillage par circuit, soit lorsqu'un paquet est abandonné, cette étape de contrôle de charge consistant en une allocation de ressources égalitaires à l'ensemble des paquets en cours de transmission, en fonction de la capacité des terminaux mobiles communicants responsables de ces transmissions et en un éventuel rejet du paquet le plus récent si le nombre de paquets en cours de transmission excède une valeur prédéterminée.

Selon une autre particularité, le procédé comporte une étape de contrôle de charge pour chacune des cellules de la zone simulée, mise en oeuvre par un module de contrôle de charge du système d'optimisation, lors d'une diminution de l'utilisation des ressources d'au moins un serveur de la zone simulée, consistant en l'utilisation d'au moins un algorithme de contrôle de charge préalablement enregistré dans les moyens de mémorisation du système d'optimisation, et comportant les étapes suivantes :
- vérification des ressources exploitées, au niveau d'au moins un paramètre parmi la puissance, les canaux utilisés et les paramètres de multiplexage par codes et par le temps ou le type de tranches de temps utilisé, dans la zone simulée, pour détecter au moins un serveur possédant des ressources inexploitées ;
- sélection d'au moins un paquet parmi les paquets, dits défavorisés, utilisant un débit minimum sur les canaux de transmission du serveur possédant des ressources inexploitées ;
- surclassement des paramètres de transmission du paquet défavorisé sélectionné, par augmentation d'une valeur d'au moins un paramètre du support utilisé par ce paquet défavorisé sélectionné jusqu'à atteindre un niveau d'exploitation satisfaisant, défini dans l'algorithme de contrôle de charge.

Selon une autre particularité, l'étape de contrôle de charge de chacune des cellules de la zone simulée est associée à une étape de détection d'éventuelles oscillations entre deux valeurs d'au moins un paramètre du support utilisé par un paquet en cours de reconfiguration par le module de contrôle de charge et, le cas échéant, d'une attribution de la valeur minimum atteinte par l'oscillation à ce paramètre.

Selon une autre particularité, l'étape de contrôle de charge de chacune des cellules de la zone simulée est mise en oeuvre par activation du module de contrôle de charge par le module de contrôle d'exploitation, pour améliorer la qualité de la transmission des paquets des différents terminaux mobiles communicants présents dans au moins une cellule dans laquelle a lieu la perturbation définie par le module gestionnaire d'évènements.

Selon une autre particularité, l'étape de contrôle de charge de chacune des cellules de la zone simulée est mise en oeuvre par activation automatique du module de contrôle de charge, lorsque la puissance requise par un canal de transmission d'un paquet augmente au-delà d'un maximum autorisé, et consiste en une sélection automatique de ce paquet comme paquet excessif puis un déclassement des paramètres de transmission de ce paquet excessif sélectionné.

Selon une autre particularité, l'étape de contrôle de l'admissibilité de la transmission du paquet du terminal mobile requérant consiste en l'utilisation, par le module de contrôle d'admission, d'au moins un algorithme de contrôle d'admissibilité parmi au moins un algorithme de contrôle d'admissibilité en fonction du codage et au moins un algorithme de contrôle d'admissibilité en fonction de tranches de temps, préalablement enregistrés dans les moyens de mémorisation du système d'optimisation et comporte les étapes suivantes :
- définition de l'ensemble actif de cellules disponibles pour la transmission du paquet du terminal requérant, par mesure et classement d'une pluralité de serveurs de la zone simulée, dont le nombre dépend de la localisation et du type du terminal requérant;
- vérification de la disponibilité de ressources, pour chacune des cellules de la zone simulée, au niveau d'au moins un paramètre parmi la puissance, les canaux et les paramètres de multiplexage par codes et par le temps ou le type de tranches de temps utilisé, puis classement des serveurs de l'ensemble actif en fonction de leur participation à la puissance totale des signaux échangés avec le terminal mobile communicant ;
- définition de la puissance requise par les canaux de transmission du paquet pour chacune des cellules et vérification que cette puissance requise par chacune des cellules n'excède pas la puissance maximum du support définie pour la transmission du paquet du terminal requérant ;
- vérification que le statut d'au moins une des cellules permet l'admission de transmissions de données par un nouveau terminal mobile communicant.

Selon une autre particularité, l'utilisation, par le module de contrôle d'admission, d'au moins un algorithme de contrôle d'admissibilité en fonction du codage résulte en une décision, en fonction du trafic, de l'admissibilité de la transmission du paquet du terminal mobile requérant, cette décision consistant en l'une des étapes suivantes :
- acceptation de la transmission du paquet du terminal requérant, lorsque les conditions nécessaires pour l'admission d'une nouvelle transmission sont remplies, après sélection d'un serveur pour la transmission du paquet et sélection du support à utiliser pour cette transmission, avec allocation de paramètres de codage initiaux les plus élevés possibles dans le serveur, en fonction du nombre de canaux disponibles et de la puissance requise, puis allocation d'une portion de temps initiale;
- rejet de la transmission du paquet du terminal mobile requérant par le serveur, lorsque le nombre de canaux disponibles est insuffisant ou lorsque la puissance requise est trop élevée, même pour les paramètres de codage les moins élevés disponibles sur le serveur.

Selon une autre particularité, l'utilisation, par le module de contrôle d'admission, d'au moins un algorithme de contrôle d'admissibilité en fonction de tranches de temps résulte en une décision, en fonction du trafic, de l'admissibilité de la transmission du paquet du terminal mobile requérant, cette décision consistant en l'une des étapes suivantes lorsque le paquet utilise un aiguillage par circuit :
- acceptation de la transmission du paquet du terminal requérant, lorsque les conditions nécessaires pour l'admission d'une nouvelle transmission sont remplies, après sélection d'un serveur pour la transmission du paquet et sélection du support à utiliser pour cette transmission, avec allocation d'une tranche de temps du type débit total si une telle tranche de temps est disponible sur le serveur ou allocation d'une tranche de temps du type demi-débit si le paquet est un appel en demi-débit ;
- reconfiguration par utilisation d'au moins un algorithme de reconfiguration de la transmission de données lorsque les conditions nécessaires pour l'admission d'une nouvelle transmission ne sont pas remplies et que les moyens de mémorisation du système d'optimisation stockent au moins un algorithme de reconfiguration, pour permettre une modification des données relatives au support, et augmenter les chances d'admission de la transmission ;
- rejet de la transmission du paquet du terminal mobile requérant, lorsque les conditions nécessaires à l'admission ne sont pas remplies et que les moyens de mémorisation du système d'optimisation ne stockent pas d'algorithme de reconfiguration ou que le trafic au sein de la zone simulée ne permet pas une reconfiguration efficace de la transmission du paquet.

Selon une autre particularité, l'étape de reconfiguration par utilisation d'au moins un algorithme de reconfiguration de la transmission du paquet, mise en oeuvre par le module de contrôle d'admission lorsque les conditions nécessaires pour l'admission d'une nouvelle transmission, définies par l'algorithme de contrôle d'admissibilité en fonction de tranches de temps, n'ont pas été remplies et que les moyens de mémorisation du système d'optimisation stockent au moins un algorithme de reconfiguration, résulte :
- soit en une recherche d'un appel auquel une tranche de temps de type débit total est allouée, puis, le cas échéant, allocation d'une tranche de type demi-débit à cet appel et allocation de la tranche de temps de type débit total ainsi libérée à la nouvelle transmission ;
- soit en une recherche d'une tranche de temps de type mixte, et, le cas échéant, allocation de cette tranche de temps mixte à la nouvelle transmission, puis adaptation de cette tranche de temps mixte à la nouvelle transmission à aiguillage par circuit.

Selon une autre particularité, l'utilisation, par le module de contrôle d'admission, d'au moins un algorithme de contrôle d'admissibilité en fonction de tranches de temps résulte en une décision, en fonction du trafic, de l'admissibilité de la transmission du paquet du terminal mobile requérant, cette décision consistant en l'une des étapes suivantes lorsque le paquet utilise un aiguillage par paquets :
- recherche d'un bloc de transmission consistant en une combinaison de tranches de temps du type exclusivement à paquets et de tranches de temps du type mixte dans un support puis, le cas échéant, acceptation de la transmission du paquet du terminal requérant et allocation de ce bloc à la nouvelle transmission ;
- rejet de la transmission du paquet du terminal mobile requérant, lorsque aucun bloc de transmission n'est disponible pour l'acceptation de la nouvelle transmission.

Selon une autre particularité, le procédé est mis en oeuvre par une application de simulation et d'optimisation de ressources, exécutée sur les moyens de traitement du système d'optimisation de ressources et contrôlant les moyens de traitement et l'interopérabilité du module de contrôle du trafic, du module de contrôle d'admissibilité, du module de contrôle de charge et du module de contrôle d'exploitation des ressources et accédant aux moyens de mémorisation du système d'optimisation pour le chargement des données nécessaires aux différents modules, le procédé comportant une étape d'installation de l'application sur le système d'optimisation par enregistrement, dans les moyens de mémorisation du système d'optimisation, de données permettant l'exécution de l'application sur les moyens de traitement du système d'optimisation.

Selon une autre particularité, l'étape d'installation de l'application sur le système d'optimisation comporte une étape d'implémentation de l'application d'optimisation au sein d'un environnement logiciel fourni par un outil de planification de cellules exécuté sur des moyens de traitement d'au moins un serveur au sein de la zone de couverture du réseau, par enregistrement, dans des moyens de mémorisation du serveur, de données permettant l'exécution de l'application d'optimisation de ressources au sein de l'outil de planification du serveur qui constitue ainsi un système d'optimisation.

Selon une autre particularité, les étapes de définition de la perturbation et de sélection d'une zone simulée sont accompagnées d'une étape de chargement dans une mémoire de travail, de type mémoire vive ou à temps d'accès très court, du système d'optimisation de ressources, d'au moins certaines des données stockées dans les moyens de mémorisation du système d'optimisation.

D'autres particularités et avantages de la présente invention apparaîtront plus clairement à la lecture de la description ci-après, faite en référence aux dessins annexés, dans lesquels :
- la figure 1 représente un mode de réalisation du système de simulation et d'optimisation de l'exploitation des ressources d'un réseau de téléphonie mobile et symbolise son principe de fonctionnement,
- la figure 2 représente un mode de réalisation du simulateur du système selon l'invention, et détaille en particulier le module gestionnaire d'évènements,
- la figure 3 représente un mode de réalisation du système d'optimisation, avec un détail d'une carte de répartition statistique des terminaux mobiles communicants présents dans la zone de couverture du réseau pendant une tranche horaire déterminée,
- la figure 4 représente un détail d'un mode de réalisation d'un chemin de parcours appliqué à une carte de répartition statistique, pour parcourir les différents serveurs du réseau,
- les figures 5A, 5B et 5C représentent un détail de trois modes de réalisation des chemins de parcours appliqués à une carte de répartition statistique, pour parcourir les différents serveurs du réseau,
- la figure 6 représente les étapes principales d'un mode de réalisation du procédé selon l'invention,
- la figure 7 représente les étapes détaillées mises en oeuvre au cours de la définition d'une perturbation du trafic au sein du réseau, selon plusieurs modes de réalisation possibles du procédé selon l'invention,
- la figure 8 représente les étapes détaillées mises en oeuvre au cours du contrôle du trafic au sein du réseau, selon un mode de réalisation du procédé selon l'invention,
- la figure 9 représente les étapes détaillées mises en oeuvre au cours du contrôle de l'admissibilité de la transmission d'un nouveau paquet, selon un mode de réalisation du procédé selon l'invention,

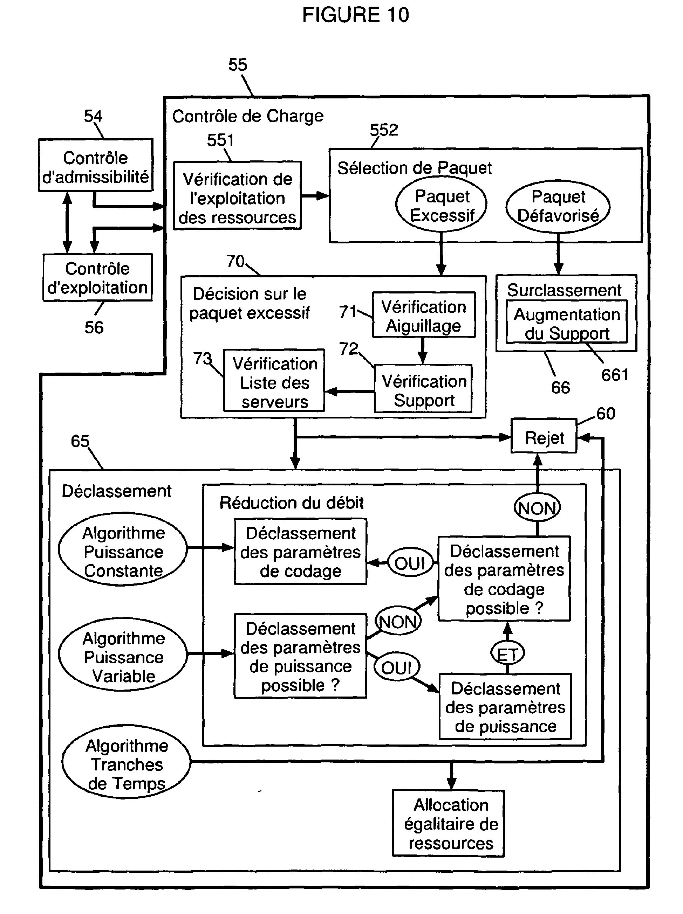

- la figure 10 représente les étapes détaillées mises en oeuvre lors du contrôle de la charge des cellules constitutives du réseau de téléphonie mobile, selon un mode de réalisation du procédé selon l'invention,
- la figure 11 représente le principe et les étapes détaillées mises en oeuvre lors de l'étape de définition des paramètres de transmission, selon un mode de réalisation du procédé selon l'invention.

La présente invention concerne un procédé et un système (1) de simulation et d'optimisation de l'exploitation des ressources des émetteurs/récepteurs (ER), dits serveurs, dont les zones d'influence, dites cellules, constituent la zone de couverture d'un réseau (RT) de téléphonie mobile. Plus précisément, la présente invention est particulièrement adaptée à la gestion des ressources des réseaux de téléphonie modernes supportant les technologies HSDPA et GPRS. L'invention repose, d'une part, sur l'utilisation de données statistiques correspondant à des cartes (CR) de répartition statistique du trafic et de la localisation des terminaux mobiles communicants dans la zone de couverture du réseau (RT) et, d'autre part, sur l'utilisation d'algorithmes, définis par les gestionnaires du réseau (RT), pour contrôler les décisions prises par le système (1) d'optimisation pour gérer les transmissions de données requises par les terminaux mobiles communicants présents dans la zone de couverture du réseau. Un réseau (RT) simulé est donc représenté sous la forme de données représentatives de cartes (CR) de répartition statistique. Le procédé selon l'invention comporte donc une étape préalable d'établissement (51) d'une pluralité des cartes (CR) de répartition, Cette étape d'établissement (51) des cartes (CR) s'accompagne naturellement de l'enregistrement de ces cartes dans les moyens (11) de mémorisation du système (1) d'optimisation. L'utilisation de ces cartes (CR) de répartition permet de limiter les capacités de calcul nécessaires à la mise en oeuvre de l'invention. De plus, les cartes de répartition sont basées sur les transmissions (T) requises par les terminaux mobiles communicants présents dans le réseau et elles permettent donc différents types de calculs statistiques pour chacun des paramètres relatifs aux transmissions (T) de ces terminaux mobiles communicants.

Dans un premier mode de réalisation, ces données représentatives des cartes (CR) peuvent correspondre à des mesures quantitatives et qualitatives du trafic, préalablement effectuées dans un réseau réel et opérationnel par les gestionnaires du réseau (RT), puis enregistrées dans des moyens (11) de mémorisation du système (1). Les mesures quantitatives et qualitatives du trafic et de la localisation des terminaux mobiles communicants sont effectuées au cours de tranches horaires choisies pour leur significativité statistique et les données moyennes obtenues sont regroupées dans des cartes (CR) de répartition statistique des terminaux mobiles communicants présents dans la zone de couverture du réseau (RT). Ces cartes (CR) de répartition, correspondant chacune à l'une des tranches horaires choisies, contiennent des informations moyennes concernant la topologie du réseau (RT), la position géographique des terminaux mobiles communicants et différents paramètres relatifs à l'exploitation des ressources par les terminaux mobiles communicants en cours de transmissions de données.

Dans un second mode de réalisation, ces données représentatives des cartes (CR) peuvent correspondre à des données générées par le simulateur lui-même grâce à des lois statistiques créées et enregistrées par les gestionnaires du réseau (RT) dans les moyens (11) de mémorisation du système (1). Ces lois statistiques stockées dans les moyens (11) de mémorisation correspondent, par exemple, à des données représentatives d'au moins une densité prédéterminée de terminaux mobiles communicants dans la zone de couverture du réseau (RT), d'au moins une loi de distribution aléatoire de ces terminaux mobiles communicants et d'au moins une loi d'assignation aléatoire de transmissions (T) de paquets (P) de données à ces terminaux. L'ensemble de ces données permettent à un module (EM) gestionnaire d'évènements de générer au moins une carte (CR) de répartition statistique comportant des données représentatives d'un trafic simulé et de la localisation des serveurs (ER) dans la zone de couverture du réseau (RT) simulé. Les données représentatives du trafic correspondent alors, d'une part, à la localisation d'une pluralité de terminaux mobiles communicants distribués aléatoirement (d'après la loi de distribution aléatoire) dans la zone de couverture du réseau (RT) selon la densité prédéterminée et, d'autre part, aux transmissions (T) de paquets (P) de données requises par ces terminaux assignées aléatoirement (d'après la loi d'assignation aléatoire) aux différents terminaux présents dans le réseau (RT).

En particulier, la simulation repose sur des évènements gérés par un module (EM) gestionnaire d'évènements. Ces évènements consistent en des variations, au sein du réseau, des transmissions (T) de paquets (P) de données en cours. Ces transmissions (T), avec leurs différents paramètres détaillés ci-après, sont gérées par le système selon l'invention et constituent un trafic au sein du réseau qui se trouve dans un état stable. Toute variation d'un des paramètres des transmissions de paquets (P) en cours constitue donc une perturbation de l'état stable dans lequel se trouve le réseau (RT). La perturbation gérée par le module (EM) gestionnaire d'évènements peut consister soit en un évènement réel détecté dans un réseau opérationnel et reproduit dans le réseau simulé, soit en un évènement fictif et modélisé dans le réseau simulé. L'invention consiste alors à simuler et optimiser l'exploitation des ressources dans le réseau (RT) simulé, mais soit sur la base d'évènements réels détectés dans un réseau opérationnel, soit sur la base d'évènements fictifs et modélisés dans le réseau simulé. La mise en oeuvre de l'invention est dirigée par des évènements perturbant l'état du réseau et déclenchant la simulation pour permettre l'optimisation des ressources et un retour à un état stable (simulation de type « event-driven », selon la terminologie anglaise), mais elle peut également incorporer une gestion du temps (simulation de type « time-driven », selon la terminologie anglaise), par exemple en simulant une perturbation de l'état du réseau à l'issue d'intervalles de temps prédéterminés.

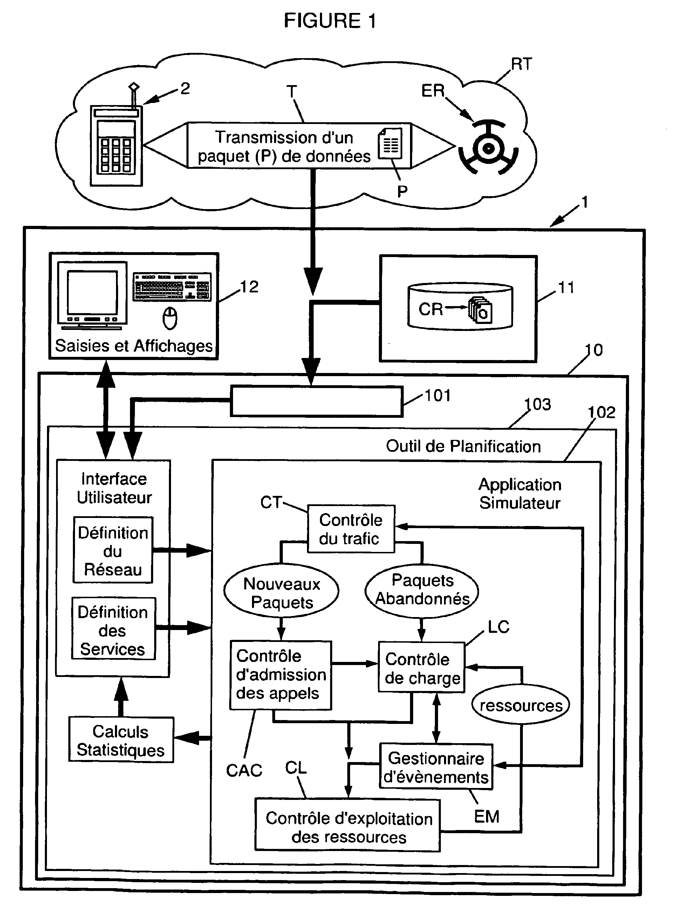

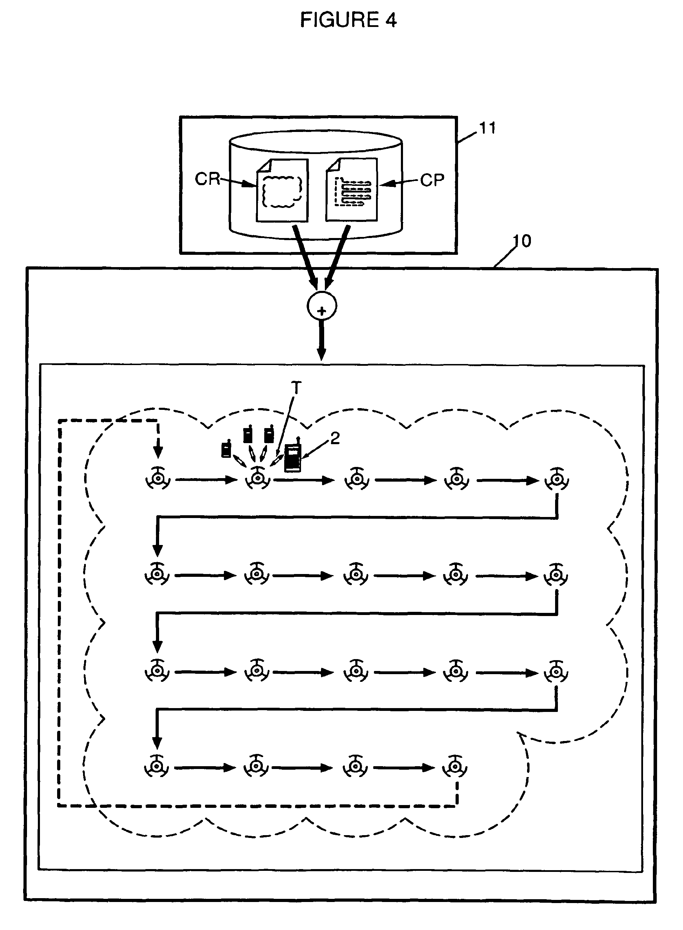

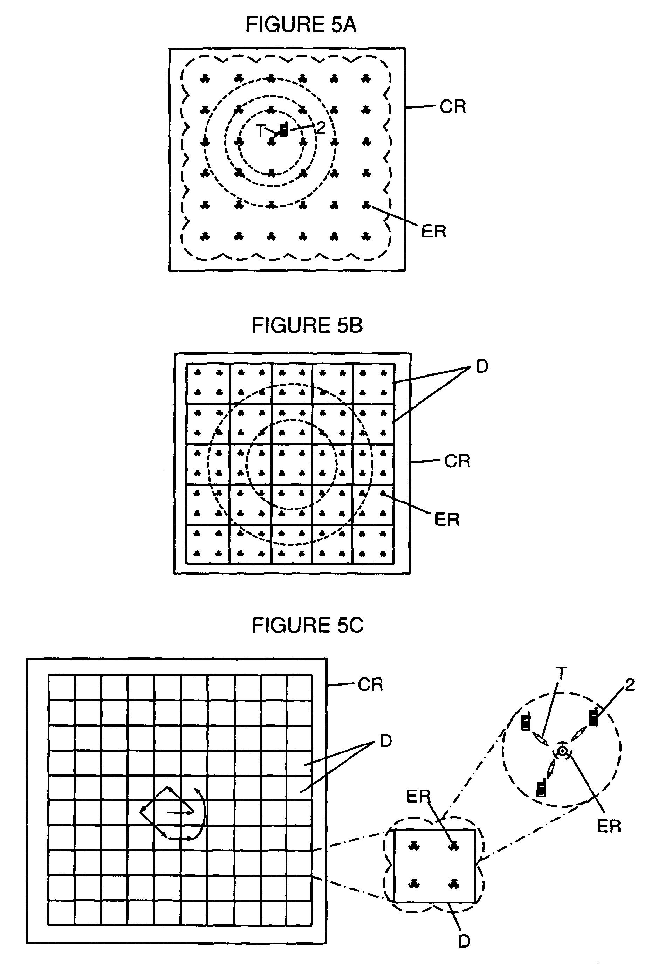

Le système (1) d'optimisation, particulièrement visible sur la figure 1, comporte donc un module (EM) gestionnaire d'évènements permettant de définir au moins une perturbation au sein du réseau simulé à partir d'une carte (CR) de répartition extraite des moyens (11) de mémorisation du système (1). Ce module (EM) gestionnaire d'évènements coopère avec un module (CT) de contrôle du trafic permettant de définir un certains nombres de paramètres relatifs aux transmissions de données au sein du réseau. Cette perturbation, réelle ou fictive, active un module (CL) de contrôle d'exploitation qui a pour rôle de rétablir l'état stable du réseau en optimisant les ressources de la cellule dans laquelle a lieu la perturbation et éventuellement des cellules voisines. Le module (CL) de contrôle d'exploitation des ressources définit une zone simulée (ZS) au sein de la carte (CR) de répartition, en sélectionnant un ensemble de cellules comportant au moins la cellule dans laquelle la perturbation a lieu et utilise un algorithme de parcours stocké dans les moyens (11) de mémorisation du système (1), pour définir un chemin de parcours (CP) de la zone simulée (ZS) et optimiser successivement les ressources des serveurs (ER) couvrant les cellules successives du chemin de parcours (CP), dans un ordre croissant en fonction de la distance de ces cellules par rapport à la première cellule sélectionnée. Ce module de contrôle d'exploitation (CL, pour l'anglais « Convergence Loop ») va alors parcourir le réseau, en suivant le chemin de parcours (CP) défini, à la recherche de cellules dans lesquelles les ressources sont insuffisantes. Pour chaque cellule dans lesquelles les ressources sont insuffisantes, le module (CL) de contrôle d'exploitation des ressources activera au moins un des différents modules détaillés ci-après pour faire converger les ressources des cellules vers un état stable. Un module (CAC) de contrôle d'admission, utilisant au moins un algorithme de contrôle d'admission, permet de décider de l'admissibilité d'une transmission (T) et un module (LC) de contrôle de charge utilise au moins un algorithme de contrôle de charge pour permettre une réorganisation de l'exploitation des ressources. Le module (CL) de contrôle d'exploitation utilise également au moins un algorithme de contrôle de puissance pour décider de la puissance à répartir sur les différents serveurs du réseau. L'utilisation de ces différents algorithmes par le système (1) d'optimisation permet de réguler le nombre de transmissions de données dans chacune des cellules du réseau (RT), mais également de réguler l'exploitation des ressources telles que la puissance des serveurs et le débit utilisé par les terminaux mobiles communicants présents dans leur zone d'influence (cellule). Un premier chemin de parcours (CP), particulièrement visible sur la figure 4, consiste en une sélection d'une cellule quelconque de la zone simulée (ZS) puis en une pluralité d'itérations d'une sélection d'une cellule adjacente à la cellule sélectionnée précédemment, jusqu'à ce que toutes les cellules de la zone simulée (ZS) aient été successivement sélectionnées. L'étape d'utilisation de l'algorithme de parcours par le module (CL) de contrôle d'exploitation pourra s'accompagner d'une étape de création, pour chaque cellule de la zone simulée (ZS), de données représentatives des cellules voisines dans la zone simulée (ZS), de façon à définir un chemin de parcours (CP) de chacune des cellules les unes après les autres. Ces données pourront, par exemple, être chargées en même temps que les données de la carte de répartition et elles permettront d'accélérer le traitement des cellules successives. Dans un autre mode de réalisation, l'algorithme de parcours utilisé par le module (CL) de contrôle d'exploitation définit des cercles concentriques centrés autour de la cellule dans laquelle a lieu la perturbation, comme représenté sur la figure 5A. Le chemin de parcours (CP) défini alors par le module (CL) de contrôle d'exploitation consistera en des sélections successives des cellules de la zone simulée (ZS) par lesquelles passent ces cercles concentriques. Comme représenté sur la figure 5B, cet algorithme de parcours pourra, par exemple, permettre au module (CL) de contrôle d'exploitation de diviser la zone simulée (ZS) en une pluralité de zones, appelées divisions, comportant chacune au moins une cellule couverte par un serveur (ER). Pour cela, l'algorithme de parcours sera utilisé pour créer une grille de découpage de la zone simulée (ZS) en divisions (D) comportant chacune un index obtenu à partir des coordonnées des cellules et permettant de localiser chacune des divisions et de les classer dans un ordre croissant en fonction de leur distance par rapport à une division centrale. Les divisions de la zone simulée pourront avoir une forme, par exemple, carrée ou hexagonale et la localisation de la division sera définie par son index obtenu à partir des coordonnées des cellules. Ainsi, le module (CL) de contrôle d'exploitation crée des données représentatives de divisions (D) de la zone simulée (ZS) et l'utilisation de cet algorithme de parcours pourra s'accompagner d'une étape de définition d'un chemin de parcours (CP) comportant au moins un vecteur indiquant le trajet à parcourir d'une division (D) à l'autre au sein de la zone simulée (ZS), comme représenté sur la figure 5C. Dans un autre mode de réalisation, le parcours des cellules de la zone simulée (ZS) pourra s'accompagner également d'une création de données représentatives d'un marqueur indiquant les cellules déjà parcourues pendant le parcours de la zone simulée par le module (CL) de contrôle d'exploitation, lorsque aucun vecteur ne définit précisément le chemin à parcourir. Ce chemin de parcours permettra des sélections successives des divisions (D) de la zone simulée (ZS) par lesquelles passent ces cercles concentriques et des sélections successives des cellules contenues dans chacune de ces divisions (D). Les données représentatives de la grille de découpage de la zone simulée (ZS) en divisions (D) définies par le module (CL) de contrôle d'exploitation pourront comporter des données représentatives des coordonnées de la division permettant au module (CL) de contrôle d'exploitation de déterminer la localisation des cellules ainsi que des divisions (D) et cellules voisines, pour faciliter le traitement des cellules des différentes divisions, notamment dans le cas où au moins certaines divisions comportent plusieurs cellules. Dans une variante de réalisation du chemin de parcours, les cellules d'une division (D) pourront être sélectionnée de façon aléatoire.

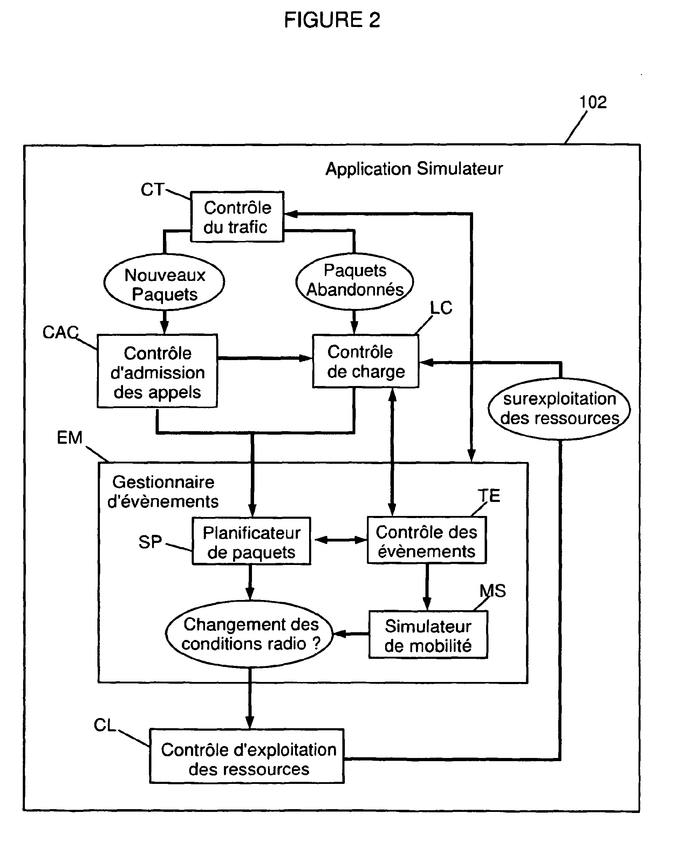

La perturbation définie par le module gestionnaire d'évènements (EM, pour l'anglais « Event Manager ») peut consister en différents évènements, tels que, par exemple, une nouvelle transmission (T), ou la fin d'une transmission (T) en cours. Le module (EM) gestionnaire d'évènements, comme particulièrement visible sur la figure 2, peut comporter différents modules capables de gérer différents types de perturbations. Par exemple, un module (TE) de contrôle des évènements permet au module (EM) gestionnaire d'évènements de définir au moins des requêtes de nouvelles transmissions (T), des fins de transmission (T) et des expirations de délais de transmission (T), un module (MS) de simulation de mobilité permet au module (EM) gestionnaire d'évènements de simuler la mobilité du terminal (2) mobile communicant responsable de la perturbation et un module (SP) planificateur de paquets permet au module (EM) gestionnaire d'évènements de gérer des changements de transmissions (T) de paquets (P) en cours.

Les données représentatives des cartes (CR) de répartition et des différents algorithmes décrits dans la présente invention sont stockés dans des moyens (11) de mémorisation du système (1) d'optimisation et peuvent donc être facilement mis à jour si nécessaire. Ces données, nécessaires à la mise en oeuvre de l'invention, peuvent ainsi être chargées dans les moyens (10) de traitement du système (1) d'optimisation, par exemple dans une mémoire (101) de travail de type mémoire vive ou à temps d'accès très court. Ce chargement des données permet d'éviter les temps d'accès aux moyens (11) de mémorisation et, par conséquent, d'accélérer le traitement des informations. Ces particularités de l'invention facilitent son implémentation dans un réseau opérationnel, même si ce dernier est constitué d'un nombre important de cellules. Par exemple, l'invention peut être mise en oeuvre par une application (102) exécutée sur les moyens (10) de traitement du système (1) d'optimisation. Cette application (102) contrôle les moyens (10) de traitement du système (1) d'optimisation et permet l'interopérabilité entre le module (EM) gestionnaire d'évènements, le module (CL) de contrôle d'exploitation, le module (CT) de contrôle du trafic, le module (CAC) de contrôle d'admissibilité et le module (LC) de contrôle de charge. L'application (102) accède aux moyens (11) de mémorisation du système (1) d'optimisation pour charger les données nécessaires aux différents modules, comme les cartes (CR) de répartition et les différents algorithmes. Le procédé selon ce mode de réalisation de l'invention comporte naturellement une étape d'installation (47) de l'application (102) sur le système (1) d'optimisation par enregistrement, dans les moyens (11) de mémorisation du système (1) d'optimisation, de données permettant l'exécution de l'application (102) sur les moyens (10) de traitement du système (1) d'optimisation.

Dans un autre mode de réalisation de l'invention, l'application (102) d'optimisation est implémentée directement dans les serveurs (ER) du réseau. Les serveurs des réseaux de téléphonie mobile exécutent, de façon connue en soi, un outil (103) de planification de cellule sur leurs moyens de traitement. Cet outil (103) de planification de cellule permet de planifier les transmissions de données requises par les terminaux mobiles communicants. Cet outil (103) de planification de cellule fournit un environnement logiciel dans lequel l'application (102) peut être implémentée. L'étape d'installation (47) de l'application (102) comporte alors une étape d'implémentation (48) de l'application (102) au sein de cet environnement logiciel, par enregistrement, dans des moyens de mémorisation du serveur (ER), de données permettant l'exécution de l'application (102) d'optimisation de ressources au sein de l'outil (103) de planification. Le serveur exécutant cette application (102) devient alors ainsi un système (1) d'optimisation selon l'invention.

Par système (1) d'optimisation, on entend donc tout système informatique muni des moyens décrits ici, par exemple grâce à l'exécution de l'application (102) d'optimisation des ressources. Par terminal mobile communicant, on entend tout terminal mobile possédant des moyens de communication par téléphonie mobile. Par exemple, un tel terminal pourra consister en un téléphone portable et notamment un portable de troisième génération, mais également en un ordinateur portable ou un assistant digital personnel (PDA, « personal digital assistant », selon la terminologie anglaise) muni de moyens de communication par téléphonie mobile. N'importe quel terminal mobile communicant capable de communiquer selon les standards HSDPA et GPRS et présent dans la zone de couverture du réseau (RT) peut ainsi effectuer une requête de transmission d'un paquet (P) de données et déclencher la mise en oeuvre de l'invention. De même, l'invention permet de simuler tout type de variation des transmissions (T) (perturbation) au sein du réseau, quelque soit le terminal (réel ou simulé) responsable de cette perturbation. Le terminal mobile communicant envoyant cette requête est alors appelé terminal (2) mobile requérant et le paquet (P) de données dont il requiert la transmission doit être évalué par le système (1) d'optimisation pour décider si cette transmission peut être acceptée ou non, en fonction du trafic moyen estimé d'après la carte (CR) de répartition correspondant à la tranche horaire pendant laquelle à lieu cette requête de transmission.

L'invention prévoit également un mode de réalisation dans lequel le système (1) d'optimisation consiste en un système informatique (un ordinateur, par exemple) sur lequel un utilisateur (opérateur) effectue des simulations du trafic d'après les cartes (CR) de répartition, par exemple pour tester l'efficacité de différents algorithmes en fonction de différents paramètres relatifs au trafic et/ou différents paramètres affectés à un paquet (P) d'un terminal (2) requérant. Le terminal (2) requérant peut être sélectionné par l'utilisateur ou de façon automatique et aléatoire, parmi les terminaux mobiles communicants d'une des cartes (CR) de répartition, également sélectionnée par l'utilisateur ou de façon automatique et aléatoire. Des moyens (12) interactifs entre l'utilisateur et le système (1) d'optimisation permettent à cet utilisateur de déterminer l'ensemble des données qui doivent être utilisées par l'application (102). L'utilisateur peut alors sélectionner une carte (CR) de répartition et un terminal mobile communicant ou définir les paramètres à partir desquels ces sélections doivent être effectuées automatiquement par le système (1), à partir des lois statistiques mentionnées précédemment. Il peut également définir lui-même un paquet (P) complètement virtuel en saisissant les paramètres requis pour la simulation. Il peut également sélectionner les paramètres de simulation dont il souhaite obtenir une évaluation par des calculs statistiques ou programmer plusieurs simulations avec différents paramètres et sélectionner les paramètres de simulation dont il souhaite obtenir une comparaison. Les paramètres à définir et les résultats sont présentés à l'utilisateur grâce aux moyens (12) interactifs, par exemple via une interface graphique de l'application (102) ou de l'outil (103) de planification.

Les moyens (10) de traitement du système (1) d'optimisation comportent des moyens de sélection accédant aux moyens (11) de mémorisation du système (1) pour en extraire la carte (CR) de répartition statistique correspondant à la tranche horaire au cours de laquelle le terminal (2) mobile requérant requiert la transmission d'un paquet (P). Ces moyens de sélection sont, par exemple, implémentés dans le module (EM) gestionnaire d'évènements et peuvent consister en des moyens de sélection aléatoire et automatique d'un terminal (2) mobile communicant dans une carte (CR) de répartition extraite des moyens (11) de mémorisation. Ils peuvent également consister en des moyens de sélection déterministe d'un terminal (2) mobile communicant sélectionné en fonction d'informations saisies et enregistrées par un utilisateur système (1) d'optimisation de ressources, grâce à des moyens interactifs (12) entre l'utilisateur et le système (1) d'optimisation de ressources. Enfin, ces moyens de sélection peuvent consister en des moyens de sélection opérationnelle d'un terminal (2) mobile communicant localisé automatiquement dans la zone de couverture d'un réseau (RT) de téléphonie mobile opérationnel. Ainsi, le système (1) d'optimisation permet à son utilisateur de définir si la position du terminal (2) requérant doit être choisie parmi les positions des différents terminaux mobiles communicants de cette carte ou si elle doit être sélectionnée par l'utilisateur du système. De plus, le système permet de définir si les paramètres de transmission du paquet (P) de ce terminal (2) requérant doivent correspondre soit à ceux du terminal sélectionné dans la carte, soit à des paramètres définis par l'utilisateur, soit aux paramètres de transmission réellement requis par le terminal (2) requérant dans le cas d'une implémentation dans un réseau (RT) opérationnel. Les moyens de sélection du système permettent alors au module (CL) de contrôle d'exploitation de sélectionner, dans la carte (CR) extraite, un ensemble de cellules définissant une zone simulée (ZS) dans laquelle se trouve le terminal (2) mobile requérant sélectionné.

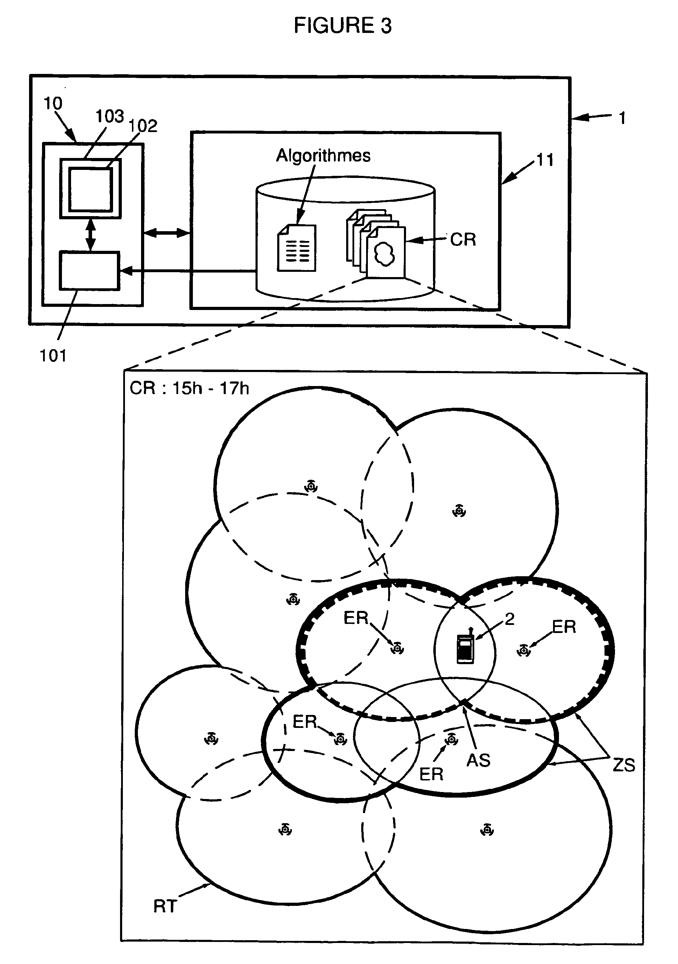

Ainsi, selon un mode de réalisation du procédé selon l'invention, le module (EM) gestionnaire d'évènements effectue une première étape de définition (50) d'une perturbation à partir d'au moins une carte (CR) de répartition statistique stockée dans des moyens (11) de mémorisation du système (1) d'optimisation. Comme expliqué ci-dessus, cette étape de définition est effectuée en fonction du mode de fonctionnement du système choisi par les gestionnaires du réseau. Ensuite, le module de contrôle d'exploitation effectue une étape de sélection (52) d'un ensemble de cellules définissant une zone simulée (ZS) au sein de la carte (CR) de répartition statistique. La figure 3 symbolise, à titre d'exemple, une carte (CR) de répartition correspondant à une tranche horaire comprise entre 15 heures et 17 heures (CR : 15h - 17h), dans laquelle les cellules couvertes par les serveurs (ER) sont représentées sont la forme de cercles et d'ellipses. La zone simulée (ZS) est représentée en traits gras pleins et contient des cellules qui sont représentées en traits pleins. Les cellules en dehors de la zone simulée (ZS) sont représentées en traits fins pointillés et au sein de la zone simulée, un ensemble actif (AS) de cellules, qui sera détaillé plus tard, est représenté en traits gras pointillés. Comme mentionné précédemment, les paramètres saisis par l'utilisateur du système (1), pour définir la simulation et l'optimisation à effectuer, déterminent les modes opératoires selon lesquels le système effectue la simulation et notamment la sélection (52). Cette étape de sélection (52) d'une zone simulée (ZS) peut donc consister en une sélection aléatoire et automatique, par le système (1) lui-même, d'un terminal (2) mobile communicant présent dans la zone de couverture du réseau (RT), accompagnée d'une sélection des serveurs (ER) dont les cellules peuvent couvrir l'emplacement auquel se trouve ce terminal dans la carte (CR) de répartition. L'utilisateur du système pourra également déterminer à l'avance l'étendue maximum de la zone simulée (ZS), par exemple en nombre de cellules. Cette sélection (52) de la zone simulée (ZS) peut également être effectuée par l'utilisateur du système (1) et consister en une sélection d'un terminal (2) mobile communicant présent dans une carte (CR) de répartition représentant la zone de couverture du réseau (RT), accompagnée d'une sélection des serveurs (ER) voisins, réalisée soit de façon automatique et aléatoire par le système lui-même, soit par l'utilisateur s'il le souhaite, soit de façon automatique en fonction d'une localisation d'un terminal (2) mobile communicant ayant réellement généré une perturbation dans le réseau opérationnel. Les données représentatives des mesures quantitatives et qualitatives contenues dans la carte (CR) sélectionnée et correspondant au trafic au sein de la zone simulée (ZS) sont alors chargées dans le système (1) d'optimisation de ressources, par exemple la mémoire (101) de travail.

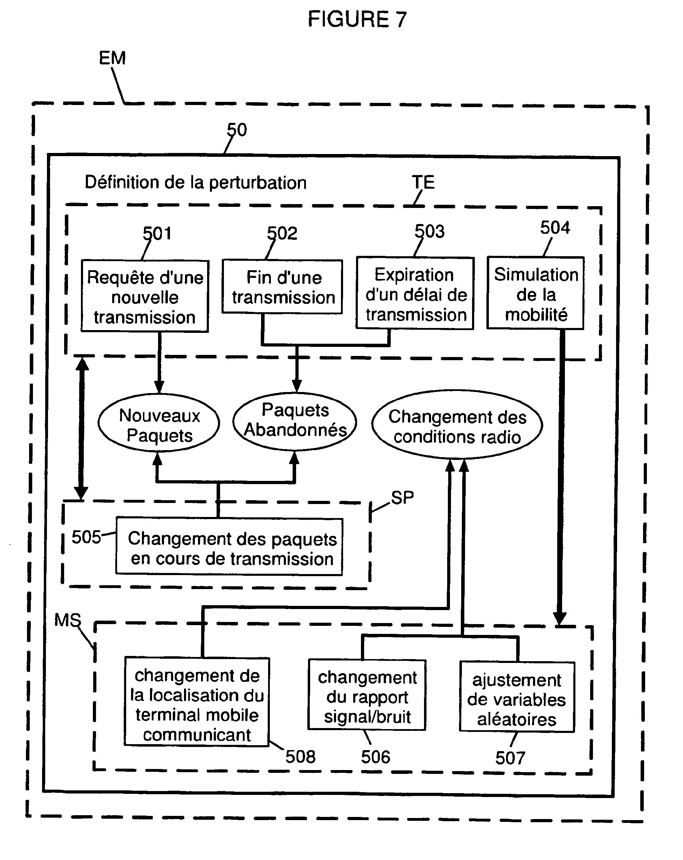

Dans un mode de réalisation de l'invention, le module (EM) gestionnaire d'évènements comporte un module (TE) de contrôle des évènements. Ce module (TE) de contrôle des évènements permet de définir des requêtes de nouvelles transmissions (T) ou des fins de transmission (T), dues à un terminal mobile communicant réellement présent dans le réseau ou simulé par le système selon l'invention. Ce module (TE) de contrôle des évènements permet également de gérer des délais de transmission (T) qui engendrent la fin de la transmission s'ils sont dépassés et permet donc de définir des expirations de délais de transmission. Ainsi, l'étape de définition (50) de la perturbation par le module (EM) gestionnaire d'évènements pourra consister, comme particulièrement visible sur la figure 7, en une requête (501) d'une nouvelle transmission (T), une fin (502) d'une transmission (T) et une expiration (503) d'un délai de transmission (T), toutes les trois gérées par le module (TE) de contrôle des évènements. Le module (EM) gestionnaire d'évènements peut également comporter un module (SP) planificateur de paquets, qui gère les changements des transmissions (T) de paquets (P) en cours. Ce module (SP) planificateur de paquets permet de définir les évènements qui déclenchent la perturbation dans le réseau. L'étape de définition (50) de la perturbation par le module (EM) gestionnaire d'évènements pourra alors consister en une étape de changement (505) des paquets (P) en cours de transmission (T), gérée par un module (SP) planificateur de paquets. Enfin, le module (EM) gestionnaire d'évènements peut également comporter un module (MS) de simulation de mobilité qui permet de simuler le déplacement éventuel, dans la zone de couverture du réseau (RT), d'un terminal (2) mobile communicant responsable de la perturbation. L'étape de définition (50) de la perturbation par le module (EM) gestionnaire d'évènements pourra consister en une étape de simulation (504) de la mobilité du terminal (2) mobile communicant responsable de la perturbation, gérée par le module (MS) de simulation de mobilité. Dans un mode de réalisation, cette étape de simulation (504) de la mobilité du terminal (2) mobile communicant responsable de la perturbation, peut consister en une modélisation d'une vitesse de déplacement du terminal (2) mobile communicant par changement (506) du rapport signal sur bruit requis, permettant une modélisation du niveau de pertes ou du gain dû aux variations rapides de la force du signal (« fading ») perçu par les terminaux (2) mobiles communicants. Ce changement (506) du rapport signal sur bruit requis pourra consister, par exemple, en un ajustement (507) de variables aléatoires lors de la modélisation de la variation de la force du signal (fading). Dans un autre mode de réalisation, cette étape de simulation (504) de la mobilité du terminal (2) mobile communicant peut consister en un changement (508) de la localisation du terminal (2) mobile communicant dans la carte de répartition (CR), par sélection d'un terminal (2) mobile communicant voisin dans la carte (CR).

Les étapes de définition (50) de la perturbation et de sélection (52) de la zone simulée (ZS) s'accompagnent d'une étape de définition (80), par le module (EM) gestionnaire d'évènements, de données représentatives d'au moins un paramètre relatif à la transmission (T) des paquets (P) au sein de chacune des cellules de la zone simulée (ZS). En fonction de la technologie utilisée, c'est-à-dire HSDPA ou GPRS, pour la transmission (T) du paquet (P), ce(s) paramètre(s) défini(s) au cours de cette étape de définition pourra consister en un ou plusieurs paramètre(s) de multiplexage du paquet (P) dans le temps, un ou plusieurs paramètre(s) de multiplexage du paquet (P) par des codes et un ou plusieurs paramètre(s) relatif à la puissance requise. Cette étape de définition (80) d'au moins un paramètre par le module (EM) gestionnaire d'évènements comporte au moins une étape de définition (83) de la puissance allouée à chacun des paquets (P) au cours d'au moins une trame (F) de transmission (T).

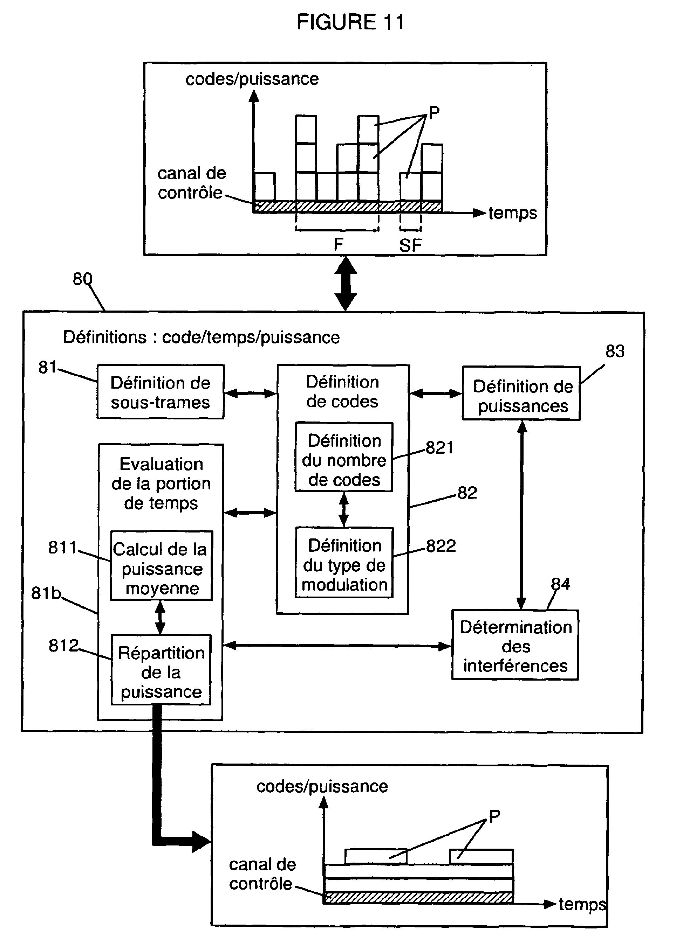

Dans le cas de la technologie HSDPA, une éventuelle étape de définition (81) de périodes de temps, dites sous-trames (SF), sera mise en oeuvre par le module (SP) planificateur de paquets pour le multiplexage des paquets (P) dans le temps au cours d'au moins une trame (F) de transmission (T). L'invention permet, grâce à une approximation détaillée ci-après, de se passer de cette étape de définition (81) des sous-trames (SF), mais la technologie HSDPA nécessite au moins un étape de définition (82) de codes permettant le multiplexage des paquets (P) par des codes au cours d'au moins une trame (F) de transmission (T). Cette définition (82) de codes sera généralement accompagnée d'une étape de détermination (821) du nombre de codes attribués à chacun des paquets (P) et une étape (822) de détermination du type de modulation utilisé pour ces codes. Ces étapes de définition (81) des sous-trames (SF), de définition (82) des codes et de définition (83) de la puissance seront mises en oeuvre, pour chacun des paquets (P), par le module (SP) planificateur de paquets permettant de déterminer les codes et les sous-trames grâce auxquels chacun des paquets (P) sera transmis au cours d'au moins une trame (F) de transmission (T), ainsi que la puissance allouée à chacun des paquets (P). Comme mentionné ci-dessus, une approximation permet de se passer de l'étape de définition (81) des sous-trames (SF). Cette approximation permet de remplacer cette étape par une étape d'évaluation (81 b) d'une portion (TP) de temps occupée par la transmission (T) de chacun des paquets (P), sans définir de sous-trames (SF) mais en ne considérant que la durée totale pendant laquelle chacun des paquets (P) est transmis. Comme particulièrement visible sur la figure 11, l'approximation réalisée consiste en un calcul (811) de la puissance moyenne utilisée au cours du temps pour la transmission de chacun des paquets (P) et en un étalement (812) de la puissance sur la portion de temps (TP) totale occupée par chacun des paquets (P), grâce à l'utilisation, par le module (EM) gestionnaire d'évènements, d'au moins un algorithme de répartition temporelle des paquets. Cet algorithme de répartition temporelle des paquets pourra consister, par exemple, en un algorithme, dit de transmission individuelle, selon lequel un seul paquet (P) est transmis au cours de chacune des sous-trames (SF) en utilisant alors toute la puissance disponible pendant cette sous-trame (SF). De façon à mieux répartir les ressources exploitées, l'algorithme utilisé pourra être un algorithme dit de transmission groupée, selon lequel une pluralité de paquets (P) est transmise pendant une même portion de temps (TP), grâce à un multiplexage par des codes, ces paquets (P) utilisant alors chacun une portion de la puissance totale disponible. Dans ce cas, un algorithme supplémentaire permettra une étape (814) d'allocation de différentes portions de temps (TP) aux différents paquets (P) transmis au cours d'une trame (F) de transmission (T). Cet algorithme supplémentaire pourra, par exemple, consister en un algorithme, dit égalitaire, selon lequel la portion de temps (TP) allouée à chacun des paquets (P) est fonction du temps total de la trame (F) de transmission (T) divisé par le nombre de paquets (P) à transmettre, ou en un algorithme, dit maximisant, selon lequel la portion de temps (TP) allouée à chacun des paquets (P) est fonction d'une valeur d'au moins un paramètre relatif à la transmission (T) du paquet (P) divisée par la somme des valeurs de ce(s) paramètre(s) pour les autres paquets (P). Suite à ces définitions, le système permet d'évaluer l'interférence perçue par chacun des serveurs (ER) responsables de la transmission (T) de chacun des paquets (P) pendant la portion de temps (TP) au cours de laquelle ils sont transmis. En effet, l'étape de définition (83) de la puissance allouée à chacun des paquets (P) au cours d'au moins une trame (F) de transmission (T) et l'utilisation des algorithmes de répartition temporelle des paquets par le module (EM) gestionnaire d'évènements permettent la mise en oeuvre d'une étape de détermination (84) de l'interférence perçue. Ainsi, un calcul d'un rapport signal sur bruit pourra être réalisé pour chacun des paquets (P) dont la transmission a été définie.

Dans le cas de la technologie GPRS, l'étape de définition (83) de la puissance allouée à chacun des paquets (P) sera accompagnée d'une étape de définition (85) d'un type de tranche de temps utilisé pour la transmission des (P) selon les différents types de services fournis par les serveurs (ER). Le type de tranche de temps utilisé pourra correspondre à une tranche « à débit total », pendant laquelle un seul paquet (P) utilise toute la bande passante disponible ou à une tranche « à demi-débit ». Dans le cas d'un paquet (P) à aiguillage par paquets (PS), cette tranche de temps pourra correspondre à une tranche de type « exclusivement à paquets ». Un autre type de tranche possible est le type de tranche mixte permettant à la fois la transmission des paquets à aiguillage par paquets (PS) et des paquets (P) à aiguillage par circuit (CS).

L'étape de définition (80) d'au moins un paramètre de transmission sera, comme l'étape de définition (50) de la perturbation, mise en oeuvre en fonction du mode opératoire choisi. Ainsi, elle pourra être mise en oeuvre soit de façon aléatoire et automatique, soit à partir d'informations saisies et enregistrées par un utilisateur du système (1) d'optimisation de ressources, soit à partir de paramètres de transmission requis par un terminal (2) mobile communicant lors d'une requête de transmission.

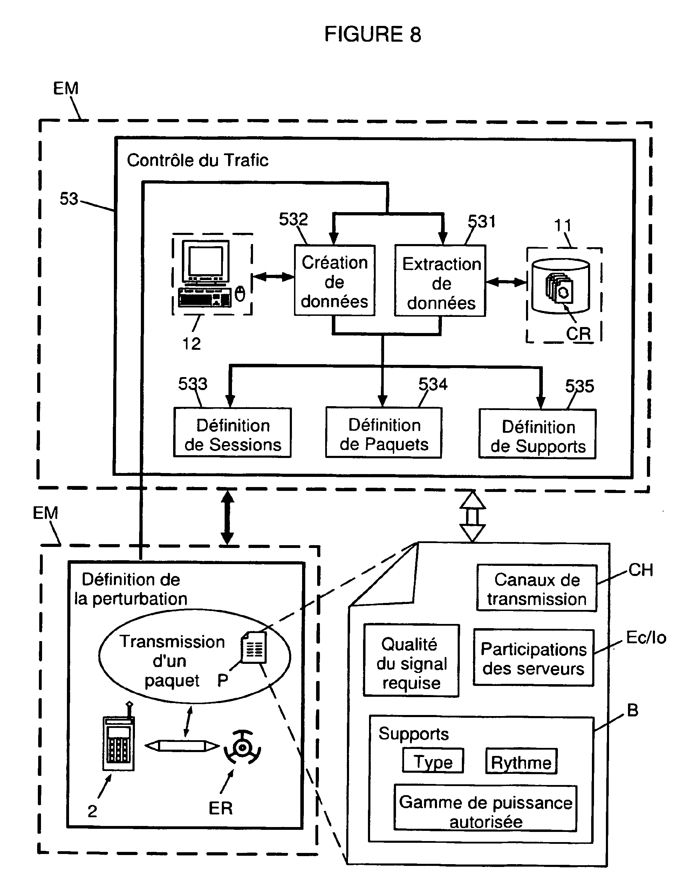

Les étapes de définition (50) de la perturbation et de définition (80) d'au moins un paramètre de transmission s'accompagnent d'une étape de contrôle (53) du trafic entre les serveurs (ER) de la zone simulée (ZS) et les terminaux mobiles communicants présents dans la zone simulée (ZS), mise en oeuvre par un module (CT) de contrôle du trafic du système (1) d'optimisation. Cette étape de contrôle (53) du trafic, particulièrement visible sur la figure 8, consiste en une définition d'une pluralité de paramètres relatifs aux services et aux ressources utilisés par les terminaux mobiles communicants présents dans la zone simulée (ZS). Cette définition des paramètres des transmissions (T) en cours par le module (CT) de contrôle du trafic résulte d'au moins une étape d'extraction (531) de données à partir d'une carte (CR) de répartition, pour en extraire les données représentatives des paramètres des transmissions des terminaux mobiles communicants présents dans la zone simulée (ZS). En fonction du mode opératoire choisi par l'utilisateur du système (1) d'optimisation, cette définition pourra également résulter d'une éventuelle étape de création (532) de données représentatives des paramètres de la transmission (T) correspondant à la perturbation. Les paramètres relatifs à la transmission du paquet (P) du terminal (2) mobile requérant peuvent nécessiter au moins une étape de création (532) de données, en fonction des sélections des paramètres de simulation réalisées par l'utilisateur du système (1) d'optimisation. Si l'utilisateur a défini lui-même les paramètres de transmission du paquet (P) du terminal (2) requérant pour réaliser des tests de simulation dans le système (1) d'optimisation, le module (CT) de contrôle du trafic effectue une création (532) de données représentatives des ces paramètres de transmission du paquet (P) et intègrera ces données dans la simulation. Si l'utilisateur a configuré la simulation pour utiliser les paramètres de transmission d'un terminal mobile communicant sélectionné dans la carte (CR) de répartition, le module (CT) de contrôle du trafic effectue une extraction (531) de données représentatives de ces paramètres de transmission du paquet correspondant dans la carte (CR) de répartition. Enfin, si le système (1) d'optimisation est implémenté un serveur (ER) du réseau, grâce à l'exécution de l'application (102) dans l'outil (103) de planification du serveur (ER), les paramètres de transmission réellement requis par le terminal (2) mobile requérant seront utilisés pour cette étape de création (532) de données. Ainsi, le module (CT) de contrôle du trafic permet de définir, pour chacune des transmissions en cours dans la zone simulée (ZS), des sessions de transmission de paquets, des supports (B) de transmission et des canaux (CH) de transmission de ces paquets. L'étape d'extraction (531) de données et l'éventuelle étape de création (532) de données permettent ainsi une étape de définition (533) de sessions correspondant à des transmissions de paquets de données entre les serveurs (ER) de la zone simulée (ZS) et chacun des terminaux mobiles communicants présents. Cette définition des sessions s'accompagne d'une définition (534) des paquets transitant au cours des sessions. Une étape de définition (535) d'au moins un support (B) associé à chacun des terminaux mobiles communicants permet au module (CT) de contrôle du trafic de définir des paramètres tels que le type du support (B), le rythme du support (B) et la gamme de puissances autorisée, mais également de définir la qualité du signal requise pour la transmission et les canaux (CH) de transmission utilisés pour chacune des cellules. Le terme « support » utilisé ici correspond au terme anglais « bearer » définissant une voie de transmission et correspondant à l'ensemble des paramètres utilisés pour la transmission d'un paquet. Ces différents paramètres sont nécessaires aux transmissions de données entre les terminaux mobiles communicants et les serveurs (ER) du réseau de téléphonie mobile. La présente invention permet avantageusement de contrôler ces paramètres et donc de gérer, éventuellement en temps réel, l'exploitation des ressources auxquelles ces différents paramètres se réfèrent.

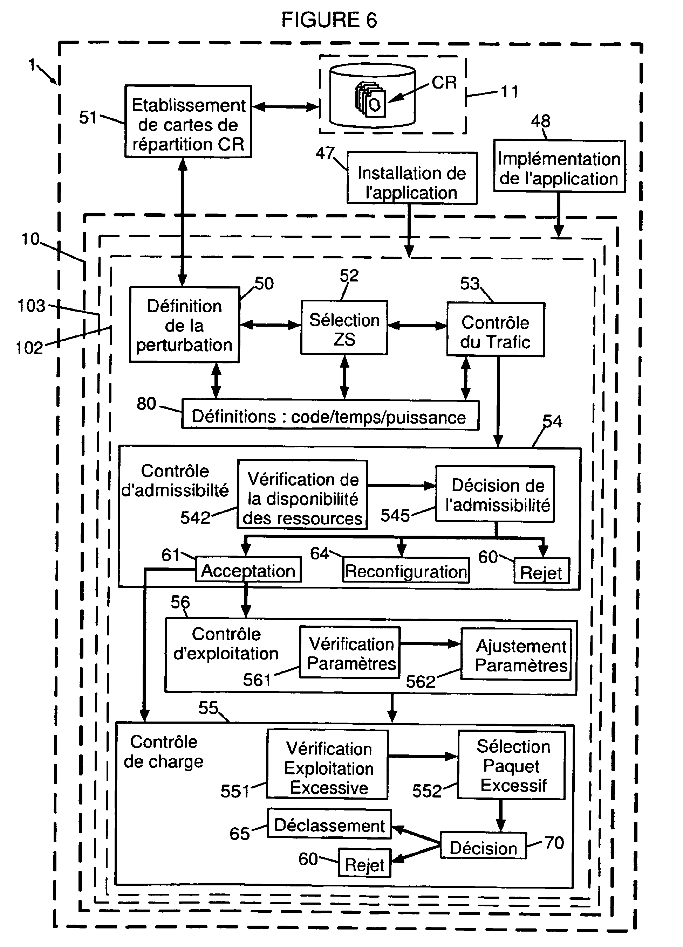

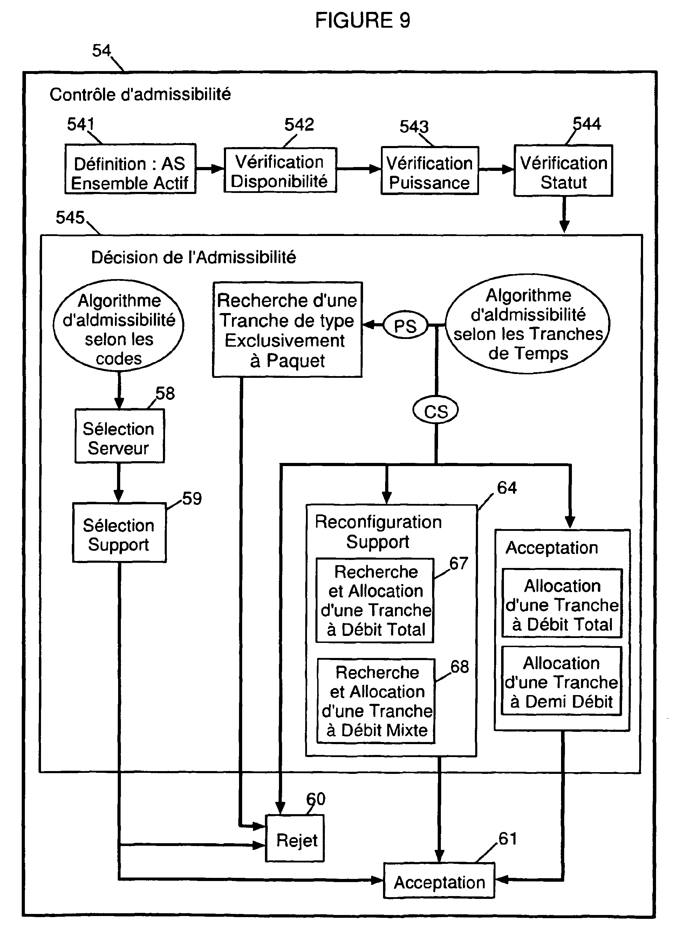

Lorsque la perturbation définie par le module (EM) gestionnaire d'évènements correspond à une requête d'une nouvelle transmission (T) par un terminal mobile (2) communicant, le module (CAC) de contrôle d'admission des appels, utilise au moins un algorithme de contrôle d'admissibilité parmi au moins un algorithme de contrôle d'admissibilité en fonction du codage et au moins un algorithme de contrôle d'admissibilité en fonction de tranches de temps préalablement enregistrés dans les moyens (11) de mémorisation du système (1). L'utilisation de cet algorithme permet alors une étape de contrôle (54) de l'admissibilité de la transmission du paquet (P) du terminal (2) mobile requérant, en fonction du trafic dans les différentes cellules de la zone simulée. Cette étape (54), visible parmi les principales étapes représentées sur la figure 6, a pour but de décider (545), en fonction du trafic, entre une acceptation (61) de la transmission du paquet (P) si elle peut être acceptée sans nécessiter de changements, une reconfiguration (64) préalable des paramètres de cette transmission si elle nécessite des changements de configuration pour être éventuellement acceptée et un rejet (60) de la transmission si elle ne peut être admise en aucun cas dans la zone simulée (ZS). Cette étape (54) de contrôle d'admission, particulièrement visible sur la figure 9, consiste d'abord en une définition (541) d'un ensemble (AS) actif, de cellules disponibles au sein de la zone simulée (ZS). Cet ensemble (AS) actif consiste en l'ensemble des liens disponibles au sein du réseau (RT) pour la transmission du paquet (P). Un exemple d'ensemble actif (AS) est symbolisé par des traits gras pointillés dans la carte (CR) de répartition représentée sur la figure 3. Dans l'exemple de la figure 3, l'ensemble actif (AS) comporte, parmi les cellules de la zone simulée, seulement les cellules des deux serveurs (ER) les plus proches du terminal (2) requérant, par exemple à cause du fait que les deux autres serveurs de la zone simulée (ZS) ne peuvent pas augmenter suffisamment leur puissance pour couvrir correctement l'emplacement du terminal (2) requérant et offrir l'ensemble des prestations proposées normalement par le réseau (RT). La définition (541) de l'ensemble (AS) actif de cellules disponibles pour la transmission du paquet (P) du terminal (2) requérant est effectuée par le module (CAC) de contrôle d'admission, grâce à une vérification (542) de la disponibilité, dans la zone simulée (ZS), d'au moins un paramètre parmi la puissance, les canaux et les paramètres de multiplexage par codes et par le temps ou le type de tranches de temps utilisé. S'en suit alors un classement des serveurs (ER) de l'ensemble actif (AS) en fonction de leur participation (Ec/Io) à la puissance totale des signaux échangés avec le terminal (2) mobile communicant requérant. Le nombre de serveurs (ER) ainsi sélectionnés dans l'ensemble actif (AS) dépend de l'étape de définition (50) précédemment décrite et donc de la localisation du terminal (2) requérant, mais également du type de terminal (2) requérant considéré car les différents terminaux mobiles communicants connus acceptent des listes de serveurs plus ou moins grandes pour leur ensemble actif. Une fois cet ensemble actif défini, le module (CAC) de contrôle d'admission effectue la vérification (542) de la disponibilité de ressources, en canaux et en puissance, pour chacune des cellules de cet ensemble actif (AS). Une définition de la puissance requise par les canaux de transmission du paquet (P) pour chacune des cellules permet alors une vérification (543) que cette puissance requise par chacune des cellules n'excède pas la puissance maximum du support (B) définie pour la transmission du paquet (P) du terminal (2) requérant. Ensuite, une étape de vérification (544) que le statut d'au moins une des cellules autorise l'admission de transmissions de données par un nouveau terminal mobile communicant permet au module (CAC) de contrôle d'admission, d'effectuer une étape de décision (545) de l'admissibilité de la transmission du paquet (P) du terminal (2) mobile requérant. Cette décision (545) consiste, comme mentionné précédemment, en un choix parmi une acceptation (61), un rejet (60) ou une reconfiguration (64) de la transmission du paquet (P), en fonction des conditions nécessaires à l'admission d'une nouvelle transmission. Ces conditions d'admissibilité de la nouvelle transmission sont définies dans différents algorithmes de contrôle d'admission spécifiques du type de technologie utilisée pour la transmission du paquet (P). Une acceptation (61) de la transmission du paquet (P) du terminal (2) requérant sera décidée lorsque les conditions nécessaires pour l'admission d'une nouvelle transmission sont remplies. Cette acceptation (61) nécessite alors une sélection (58) d'un serveur (ER) pour la transmission du paquet (P) et une sélection (59) d'un support (B) à utiliser pour cette transmission (T). Une reconfiguration (64) de la transmission du paquet (P) sera décidée lorsque les conditions nécessaires pour l'admission d'une nouvelle transmission ne sont pas remplies. Les moyens (11) de mémorisation du système (1) d'optimisation peuvent stocker au moins un algorithme de reconfiguration, utilisé par le module (CAC) de contrôle d'admission, pour permettre une modification des données relatives au support (B) du paquet (P) et augmenter les chances d'admission de sa transmission. Ainsi le système d'optimisation permet un partage équitable des ressources exploitées par les terminaux mobiles communicants présents dans la zone simulée (ZS). Cependant, si le trafic au sein de la zone simulée (ZS) ne permet pas une reconfiguration (64) efficace de la transmission du paquet (P), la transmission du paquet (P) sera rejetée (60) par le module (CAC) de contrôle d'admission. De même, si les moyens (11) de mémorisation du système (1) d'optimisation ne stockent pas d'algorithme de reconfiguration ou que l'utilisateur a configuré le système (1) pour ne pas l'utiliser, un rejet (60) de la transmission du paquet (P) du terminal (2) mobile requérant sera automatiquement décidé dès que les conditions nécessaires à l'admission ne sont pas remplies.

Lorsque la transmission du paquet (P) en cours d'admission utilise la technologie HSDPA, le module (CAC) de contrôle d'admission utilise au moins un algorithme de contrôle d'admissibilité en fonction du codage. L'acceptation (61) du paquet (P) s'accompagne alors d'une allocation de paramètres de codage initiaux les plus élevés possibles dans le serveur (ER), en fonction du nombre de canaux disponibles et de la puissance requise, puis d'une allocation d'une portion de temps (TP) initiale. En cas d'indisponibilité de tels paramètres, le module (CAC) de contrôle d'admission tente d'allouer des paramètres moins élevés au paquet (P) pour permettre son admission. Lorsque le nombre de canaux disponibles est insuffisant ou lorsque la puissance requise est trop élevée, même pour les paramètres de codage les moins élevés disponibles sur le serveur (ER), le module (CAC) de contrôle d'admission décide un rejet (60) de la transmission (T) du paquet (P) du terminal (2) mobile requérant par le serveur (ER).

Lorsque la transmission du paquet (P) en cours d'admission utilise la technologie GPRS, le module (CAC) de contrôle d'admission utilise au moins un algorithme de contrôle d'admissibilité en fonction de tranches de temps. La décision (545), en fonction du trafic, de l'admissibilité de la transmission (T) du paquet (P) du terminal (2) mobile requérant dépend alors du type d'aiguillage utilisé par le paquet (P). Si le paquet en cours d'admission utilise la technologie GPRS avec un aiguillage par circuit (CS), c'est-à-dire qu'il est de type « aiguillé par circuit » (« circuit switched », en anglais), l'acceptation (61) s'accompagne alors d'une allocation d'une tranche de temps du type débit total si une telle tranche de temps est disponible sur le serveur (ER) ou d'une tranche de temps du type demi-débit si le paquet (P) est un appel en demi-débit. Afin de permettre une étape de reconfiguration (64) de la transmission en cas d'indisponibilité de ces paramètres, les moyens (11) de mémorisation du système (1) d'optimisation peuvent stocker au moins un algorithme de reconfiguration. D'une part, cette reconfiguration (64) peut résulter en une recherche (67) d'un appel auquel une tranche de temps de type débit total est allouée, puis, le cas échéant, allocation d'une tranche de type demi-débit à cet appel et allocation de la tranche de temps de type débit total ainsi libérée à la nouvelle transmission. D'autre part, cette reconfiguration (64) peut également résulter en une recherche (68) d'une tranche de temps de type mixte, et, le cas échéant, allocation de cette tranche de temps mixte à la nouvelle transmission, puis adaptation de cette tranche de temps mixte à la nouvelle transmission (T) à aiguillage par circuit. Lorsque les conditions nécessaires à l'admission ne sont pas remplies et que les moyens (11) de mémorisation du système (1) d'optimisation ne stockent pas d'algorithme de reconfiguration ou que le trafic au sein de la zone simulée (ZS) ne permet pas une reconfiguration (64) efficace de la transmission (T) du paquet (P), le rejet (60) de la transmission (T) du paquet (P) du terminal (2) mobile requérant est décidé par le module (CAC) de contrôle d'admission. Si le paquet (P) en cours d'admission utilise la technologie GPRS avec un aiguillage par paquets (PS), c'est-à-dire qu'il est de type « aiguillé par paquet » (« packet switched », en anglais), le module (CAC) de contrôle d'admission, utilisant l'algorithme de contrôle d'admissibilité en fonction de tranches de temps, effectue une recherche d'un bloc de transmission consistant en une combinaison de tranches de temps du type exclusivement à paquets et de tranches de temps du type mixte dans un support (B). Si un tel bloc de transmission est trouvé, l'acceptation (61) de la transmission (T) du paquet (P) du terminal (2) requérant s'accompagne d'une allocation de ce bloc à la nouvelle transmission. Lorsque aucun bloc de transmission n'est disponible pour l'acceptation de la nouvelle transmission, le rejet (60) de la transmission (T) du paquet (P) du terminal (2) mobile requérant est décidé par le module (CAC) de contrôle d'admission.

L'étape de reconfiguration (64) de la transmission (T) du paquet (P), permet de modifier les données relatives au support (B) et d'augmenter les chances d'admission de la transmission (T). Cette étape dépend de l'algorithme utilisé et dépend du type d'aiguillage utilisé pour la transmission du paquet (P). Cette étape de reconfiguration (64) peut, dans une variante de réalisation, forcer l'acceptation (61) de la transmission du paquet (P). Suite à cette acceptation (61) de la transmission du paquet (P) dans une cellule ne possédant pas la puissance requise, le module (CAC) de contrôle d'admission active directement le module (LC) de contrôle de charge pour qu'il effectue une étape de contrôle (55) de la charge des cellules de la zone simulée (ZS). Cette étape de contrôle (55) de charge permet de reconfigurer les transmissions en cours dans la zone simulée (ZS) puis de réaliser une étape de contrôle (56) de puissance pour ajuster les puissances exploitées sur les différents serveurs (ER) de la zone simulée (ZS). Ainsi, en cas de surexploitation des ressources, le module (CL) de contrôle d'exploitation effectuera un parcours des différentes cellules de la zone simulée (ZS) afin de faire converger à nouveau les différents serveurs (ER) de la zone simulée (ZS) vers un état stable, en régulant la charge des serveurs et la puissance utilisée.

L'étape de contrôle (55) de charge de chacune des cellules de la zone simulée (ZS) peut donc être mise en oeuvre par le module (LC) de contrôle de charge lorsqu'il est activé directement par le module (CAC) de contrôle d'admission, mais d'une manière générale, le module (LC) de contrôle de charge est activé pour toute variation du nombre de paquets transmis au sein de la zone simulée (ZS). Ainsi, le module (LC) de contrôle de charge peut être activé automatiquement lorsque l'utilisation des ressources d'une cellule est en-dessous d'un seuil minimum ou au-dessus d'un seuil maximum. Cette étape de contrôle (55) de charge permet d'améliorer la qualité de la transmission des paquets des différents terminaux mobiles communicants présents dans les différentes cellules, par exemple, dans au moins une cellule dans laquelle a lieu la perturbation définie par le module (EM) gestionnaire d'évènements. Par exemple, le module (LC) de contrôle de charge peut être activé par le module (CAC) de contrôle d'admission pour ajuster les transmissions dans la cellule dans laquelle la transmission du paquet (P) du terminal (2) mobile requérant a été acceptée. L'activation du module (LC) de contrôle de charge peut se faire de façon automatique lorsque la puissance requise par un canal (CH) de transmission d'un paquet (P) augmente au-delà d'un maximum autorisé. Cette activation résultera alors en une sélection (552) automatique de ce paquet comme paquet (P) excessif puis un déclassement (65) des paramètres de transmission de ce paquet excessif sélectionné. Le module (LC) de contrôle de charge peut également être activé par le module (CL) de contrôle d'exploitation pour améliorer les transmission dans les cellules couvertes par les serveurs (ER) dont les ressources sont utilisées de manière excessive, lorsque le module (CL) de contrôle d'exploitation détecte une utilisation excessive et qu'il ne peut pas l'ajuster à cause des configurations sélectionnées pour les transmissions des différents paquets des différents terminaux mobiles communicants. Le module (CL) de contrôle d'exploitation du système (1) d'optimisation met en oeuvre une étape de contrôle (56) de puissance lors d'une variation du nombre de paquets transmis au sein de la zone simulée (ZS). Ce module (CL) de contrôle d'exploitation est activé par le module (CAC) de contrôle d'admission des appels lors de l'acceptation d'une nouvelle transmission d'un paquet (P) d'un terminal (2) requérant ou par le module (LC) de contrôle de charge soit lorsque ce dernier a réorganisé les transmissions comme expliqué ci-après, par exemple, suite à l'arrêt d'une transmission par un terminal mobile communicant ou à l'abandon d'un paquet d'une transmission. L'étape de contrôle (56) de puissance mise en oeuvre par le module (CL) de contrôle d'exploitation consiste en une vérification (561) d'au moins un paramètre utilisé par les terminaux mobiles communicants dans les cellules constituant la zone simulée (ZS), parmi au moins la puissance et les paramètres de multiplexage par codes et par le temps ou le type de tranches de temps utilisé. Ensuite, le module (CL) de contrôle d'exploitation effectue un ajustement (562) de ce(s) paramètre(s) pour au moins un serveur (ER) couvrant au moins une cellule de la zone simulée (ZS).

L'étape de contrôle (55) de charge de chacune des cellules de la zone simulée (ZS) peut être mise en oeuvre par activation automatique du module (LC) de contrôle de charge, par exemple lorsque la puissance requise par un canal (CH) de transmission d'un paquet augmente au-delà d'un maximum autorisé. Dans ce cas, cette étape (55) consiste en une sélection (552) automatique de ce paquet comme paquet excessif puis un déclassement (65) des paramètres de transmission de ce paquet excessif sélectionné. D'une manière générale, l'étape de contrôle (55) de charge est mise en oeuvre lors d'une utilisation excessive des ressources d'au moins un serveur (ER) de la zone simulée (ZS). Le module (LC) de contrôle de charge du système (1) d'optimisation utilise alors au moins un algorithme de contrôle de charge préalablement enregistré dans les moyens (11) de mémorisation du système (1) d'optimisation, parmi au moins un algorithme de contrôle de charge à puissance constante et au moins un algorithme de contrôle de charge à puissance variable. L'utilisation d'un de ces algorithmes permet une vérification (551) des ressources exploitées, au niveau d'au moins un paramètre parmi la puissance, et en les canaux utilisés et les paramètre de multiplexage par codes et par le temps ou le type de tranches de temps utilisé, dans les cellules constituant la zone simulée (ZS), pour sélectionner au moins un serveur (ER) dont les ressources sont exploitées de manière excessive. Les paquets sont définis comme excessifs lorsqu'ils utilisent le maximum de puissance disponible ou qu'ils utilisent un débit maximum sur les canaux de transmission entre les terminaux mobiles communicants présents et les serveurs (ER). Le module (LC) de contrôle de charge effectue alors une sélection (552) d'au moins un paquet parmi les paquets excessifs, puis une décision (70) entre un rejet (60) du paquet excessif sélectionné et un déclassement (65) des paramètres de transmission du paquet excessif sélectionné. Cette décision (70) dépend de l'algorithme de contrôle de charge utilisé par le module (LC) de contrôle de charge et comporte une suite de vérifications préalables permettant de réorganiser les transmissions des paquets en fonction de leurs paramètres dont l'algorithme de contrôle permet d'établir une hiérarchie de priorité des différents paquets. Les vérifications nécessaires à l'étape de décision (70) sur la transmission du paquet excessif sélectionné consiste en une vérification (71) du type d'aiguillage, par circuit (CS) ou par paquet (PS), utilisé par le paquet excessif sélectionné, une vérification (72) des paramètres du support (B) utilisé par le paquet excessif sélectionné et une vérification (73) d'une liste de serveurs (ER) de l'ensemble actif (AS) classés en fonction de leur participation (Ec/Io) à la puissance totale des signaux échangés avec le terminal (2) mobile communicant. Cette vérification (73) permet de déterminer si il existe un autre serveur (ER) apte à permettre la transmission du paquet excessif sélectionné, lorsque la puissance du signal fourni par un serveur (ER) n'est pas suffisante.

Dans le cas d'un paquet (P) utilisant la technologie HSDPA, lorsque le module (LC) de contrôle de charge utilise un algorithme de contrôle de charge à puissance constante, l'étape de décision (70) entre un rejet (60) du paquet excessif sélectionné et un déclassement (65) des paramètres de transmission du paquet excessif sélectionné, consiste en un maintien constant de la puissance initialement allouée aux paquets (P) pendant toute la durée de leur transmission (T) et en un déclassement (65) des paramètres de multiplexage par codes, en fonction du rapport signal sur bruit instantané. Ainsi, le débit du paquet excessif sélectionné est réduit tout en maintenant le rapport signal sur bruit au-dessus de sa valeur requise. Si le rapport signal sur bruit requis ne peut pas être maintenu, un rejet (60) du paquet (P) excessif sélectionné est décidé par le module (LC) de contrôle de charge. Lorsque le module (LC) de contrôle de charge utilise un algorithme de contrôle de charge à puissance variable, l'étape de décision (70) peut s'accompagner d'une éventuelle réduction des paramètres de puissance allouée aux paquets. De façon à réduire le débit du paquet excessif sélectionné tout en maintenant le rapport signal sur bruit au-dessus de sa valeur requise, le déclassement (65) des paramètres de multiplexage par codes initialement alloués aux paquets (P) sera également accompagné d'un déclassement des paramètres de puissance, en fonction du rapport signal sur bruit instantané. Si la puissance ne peut pas être régulée, seuls les paramètres de multiplexage par codes seront déclassés, en fonction du rapport signal sur bruit instantané, de façon à réduire le débit du paquet excessif sélectionné tout en maintenant le rapport signal sur bruit au-dessus de sa valeur requise. Si le rapport signal sur bruit requis ne peut pas être maintenu dans ces conditions, le paquet (P) excessif sélectionné sera rejeté.

Dans le cas d'un paquet (P) utilisant la technologie GPRS, le module (LC) de contrôle de charge utilise au moins un algorithme de contrôle de charge par tranches de temps. L'étape de contrôle (55) de charge pourra ainsi être mise en oeuvre, par exemple, lorsqu'une tranche de temps mixte n'est utilisée pour la transmission que d'un paquet (CS) à aiguillage par circuit alors qu'elle permet normalement ou la transmission à la fois de paquets (PS) à aiguillage par paquets et de paquets (CS) à aiguillage par circuit. De même, cette étape de contrôle de charge pourra être mise en oeuvre lorsqu'un paquet (P) est abandonné. L'algorithme de contrôle de charge par tranches de temps permet une allocation de ressources égalitaires à l'ensemble des paquets (P) en cours de transmission, en fonction de la capacité des terminaux (2) mobiles communicant responsables de ces transmissions (T). Si le nombre de paquets en cours de transmission excède une valeur prédéterminée, cette étape de contrôle de charge résulte en un éventuel rejet (60) du paquet le plus récent.

L'étape de contrôle (55) de charge peut être mise en oeuvre lors d'une diminution de l'utilisation des ressources d'au moins un serveur (ER) de la zone simulée (ZS). Elle consiste alors en une vérification (551) des ressources exploitées, au niveau d'au moins un paramètre parmi la puissance, les canaux utilisés et les paramètres de multiplexage par codes et par le temps ou le type de tranches de temps utilisé. Cette vérification (551) dans la zone simulée (ZS) permet la détection d'au moins un serveur (ER) possédant des ressources inexploitées, puis une sélection (552) d'au moins un paquet utilisant un débit minimum sur les canaux de transmission du serveur (ER) possédant des ressources inexploitées. Ce paquet est alors dit défavorisé. Ensuite, un surclassement (66) des paramètres de transmission du paquet défavorisé sélectionné, par augmentation (661) d'une valeur d'au moins un paramètre du support (B) utilisé par ce paquet permet d'atteindre un niveau d'exploitation satisfaisant, défini dans l'algorithme de contrôle de charge.

Dans ce mode de réalisation où le module (LC) de contrôle de charge intègre un algorithme d'augmentation de l'exploitation des ressources lorsqu'elles sont sous-exploitées, l'étape de contrôle (55) de charge est associée à une étape de détection d'éventuelles oscillations entre deux valeurs d'au moins un paramètre du support (B) utilisé par un paquet (P) en cours de reconfiguration par le module (LC) de contrôle de charge. En effet, l'augmentation et la diminution possibles des paramètres de la transmission (T) par le module (LC) de contrôle de charge sont antagonistes et peuvent engendrer une oscillation de ce paramètre entre deux valeurs induisant chacune un de ces deux types de régulation. Une étape de détection d'une oscillation due à ces deux étapes antagonistes permet d'arrêter l'oscillation, par exemple grâce à une attribution à ce paramètre de la valeur minimum atteinte par l'oscillation.

On comprend ainsi que l'on a atteint les buts fixés par l'invention qui permet efficacement le contrôle de l'ensemble des ressources du réseau de téléphonie et permet une surveillance de la qualité des transmissions de données effectuées par les terminaux mobiles communicants au sein du réseau. L'invention permet bien évidemment un enregistrement de l'ensemble des opérations effectuées et des transmissions obtenues par les différents terminaux mobiles communicants, avec éventuellement un affichage de résultats de simulation et/ou d'optimisation des ressources, tels que le débit moyen délivré aux terminaux mobiles communicants ou la qualité moyenne du signal au cours des transmissions, par exemple.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé de simulation et d'optimisation de l'exploitation des ressources disponibles dans une zone de couverture d'un réseau (RT) de téléphonie mobile consistant en un ensemble de zones d'influence, dites cellules, d'une pluralité d'émetteurs/récepteurs (ER), dits serveurs, dont l'exploitation des ressources dépend des transmissions (T) d'ensembles de données, dits paquets (P), requises par au moins un terminal (2) mobile communicant, dit requérant, présent dans leur zone d'influence, **caractérisé**, d'une part, en ce qu'il est mis en oeuvre par des moyens (10) de traitement d'au moins un système (1) d'optimisation de ressources et, d'autre part, en ce qu'il comporte les étapes suivantes :
- définition (50), par un module (EM) gestionnaire d'évènements du système (1) d'optimisation, d'une variation, dite perturbation, d'au moins une transmission (T) de paquets (P) requise au sein du réseau (RT), la perturbation étant définie à partir d'au moins une carte (CR) de répartition statistique stockée dans des moyens (11) de mémorisation du système (1) d'optimisation et comportant des données représentatives de transmissions (T) de paquets (P) de données d'une pluralité de terminaux mobiles communicants présents dans une zone géographique déterminée pendant une tranche horaire déterminée,
- sélection (52) d'un ensemble de cellules comportant au moins la cellule dans laquelle la perturbation a lieu et définissant une zone simulée (ZS) au sein de la carte (CR) de répartition, par un module (CL) de contrôle d'exploitation des ressources, puis utilisation d'un algorithme de parcours, par le module (CL) de contrôle d'exploitation, pour définir un chemin de parcours (CP) de la zone simulée (ZS) et optimiser successivement les ressources des serveurs (ER) couvrant les cellules successives du chemin de parcours (CP),
- définition (80), par le module (EM) gestionnaire d'évènements, de données représentatives d'au moins un paramètre relatif à la transmission (T) des paquets (P) au sein de chacune des cellules de la zone simulée (ZS), parmi au moins des paramètres de multiplexage du paquet (P) dans le temps, de multiplexage du paquet (P) par des codes et de puissance requise.

2. Procédé selon la revendication 1, **caractérisé en ce que** l'étape de définition (80) d'au moins un paramètre parmi des paramètres de multiplexage du paquet (P) dans le temps, de multiplexage du paquet (P) par des codes et de puissance requise, par le module (EM) gestionnaire d'évènements, comporte au moins une des étapes suivantes :
- définition (81) de périodes de temps, dites sous-trames (SF), permettant le multiplexage des paquets (P) dans le temps au cours d'au moins une trame (F) de transmission (T),
- définition (82) de codes permettant le multiplexage des paquets (P) par des codes au cours d'au moins une trame (F) de transmission (T),
- définition (83) de la puissance allouée à chacun des paquets (P) au cours d'au moins une trame (F) de transmission (T),
- définition (85) d'un type de tranche de temps utilisé pour la transmission des paquets (P) selon les différents types de services fournis par les serveurs (ER), ce type de tranche de temps correspondant soit à une tranche à débit total, soit à une tranche à demi débit, soit à une tranche exclusivement à paquets, soit à une tranche mixte.

3. Procédé selon la revendication 2, **caractérisé en ce que** l'étape de définition (82) de codes comporte une étape de détermination (821) du nombre de codes attribués à chacun des paquets (P) et une étape (822) de détermination du type de modulation utilisé pour ces codes.

4. Procédé selon une des revendications 2 et 3, **caractérisé en ce que** les étapes de définition (81) des sous-trames (SF), de définition (82) des codes et de définition (83) de la puissance sont mises en oeuvre, pour chacun des paquets (P), par un module (SP) planificateur de paquets permettant de déterminer les codes et les sous-trames grâce auxquels chacun des paquets (P) sera transmis au cours d'au moins une trame (F) de transmission (T), ainsi que la puissance allouée à chacun des paquets (P).

5. Procédé selon une des revendications 2 et 3, **caractérisé en ce que** l'étape de définition (81) des sous-trames (SF) est remplacée par une étape d'évaluation (81 b) d'une portion (TP) de temps occupée par la transmission (T) de chacun des paquets (P), sans définir de sous-trames (SF) mais en ne considérant que la durée totale pendant laquelle chacun des paquets (P) est transmis.

6. Procédé selon la revendication 5, **caractérisé en ce que** l'étape d'évaluation (81b) de la portion de temps (TP) occupée par la transmission (T) de chacun des paquets (P) repose sur une approximation consistant en un calcul (811) de la puissance moyenne utilisée au cours du temps pour la transmission de chacun des paquets (P) et en un étalement (812) de la puissance sur la portion de temps (TP) totale occupée par chacun des paquets (P), grâce à l'utilisation, par le module (EM) gestionnaire d'évènements, d'au moins un algorithme parmi les algorithmes suivants de répartition temporelle des paquets :
- algorithme, dit de transmission individuelle, selon lequel un seul paquet (P) est transmis au cours de chacune des sous-trames (SF) en utilisant alors toute la puissance disponible pendant cette sous-trame (SF),
- algorithme, dit de transmission groupée, selon lequel une pluralité de paquets (P) est transmise pendant une même portion de temps (TP), grâce à un multiplexage par des codes, ces paquets (P) utilisant alors chacun une portion de la puissance totale disponible.

7. Procédé selon la revendication 6, **caractérisé en ce qu'**il comporte une étape de détermination (84) de l'interférence perçue par chacun des serveurs (ER) responsables de la transmission (T) de chacun des paquets (P) pendant la portion de temps (TP) au cours de laquelle ils sont transmis, cette étape étant mise en oeuvre grâce à l'étape de définition (83) de la puissance allouée à chacun des paquets (P) au cours d'au moins une trame (F) de transmission (T) et à l'utilisation des algorithmes de répartition temporelle des paquets par le module (EM) gestionnaire d'évènements, cette détermination (84) de l'interférence perçue permettant un calcul d'un rapport signal sur bruit pour chacun des paquets (P).

8. Procédé selon une des revendications 6 et 7, **caractérisé en ce que** l'utilisation de l'algorithme de transmission groupée par le module (EM) gestionnaire d'évènements s'accompagne d'une étape (814) d'allocation de différentes portions de temps (TP) aux différents paquets (P) transmis au cours d'une trame (F) de transmission (T), grâce à l'utilisation d'un algorithme parmi les algorithmes suivants d'allocation de portion de temps :
- algorithme, dit égalitaire, selon lequel la portion de temps (TP) allouée à chacun des paquets (P) est fonction du temps total de la trame (F) de transmission (T) divisé par le nombre de paquets (P) à transmettre,
- algorithme, dit maximisant, selon lequel la portion de temps (TP) allouée à chacun des paquets (P) est fonction d'une valeur d'au moins un paramètre relatif à la transmission (T) du paquet (P) divisée par la somme des valeurs de ce(s) paramètre(s) pour les autres paquets (P).

9. Procédé selon une des revendications 1 à 8, **caractérisé en ce qu'**il comporte une étape préalable d'établissement (51) d'au moins une carte (CR) de répartition comportant des données représentatives du trafic et de la localisation des serveurs (ER) dans la zone de couverture du réseau (RT), ces données représentatives du trafic correspondant à des mesures quantitatives et qualitatives de la localisation d'une pluralité de terminaux mobiles communicants et de serveurs opérant dans la zone de couverture du réseau (RT) et des transmissions (T) de paquets (P) de données effectuées au cours de tranches horaires choisies pour leur significativité statistique, les données correspondant à ces mesures étant enregistrées dans les moyens (11) de mémorisation du système (1) d'optimisation.

10. Procédé selon une des revendications 1 à 9, **caractérisé en ce qu'**il comporte une étape d'établissement (51) d'au moins une carte (CR) de répartition comportant des données représentatives du trafic et de la localisation des serveurs dans la zone de couverture du réseau (RT), les données représentatives du trafic étant générées par le module (EM) gestionnaire d'évènements et représentant, d'une part, la localisation d'une pluralité de terminaux mobiles communicants distribués aléatoirement dans la zone de couverture du réseau (RT) selon une densité prédéterminée et, d'autre part, les transmissions (T) de paquets (P) de données requises par ces terminaux assignées aléatoirement aux différents terminaux présents dans le réseau (RT), à partir de lois aléatoires stockées dans les moyens (11) de mémorisation du système (1) d'optimisation.

11. Procédé selon une des revendications 1 à 10, **caractérisé en ce qu'**il comporte une étape d'enregistrement dans les moyens (11) de mémorisation du système (1) d'optimisation d'au moins un algorithme de parcours permettant au module (CL) de contrôle d'exploitation de définir un chemin de parcours (CP) consistant en une sélection d'une cellule quelconque de la zone simulée (ZS) puis en une pluralité d'itérations d'une sélection d'une cellule adjacente à la cellule sélectionnée précédemment, jusqu'à ce que toutes les cellules de la zone simulée (ZS) aient été successivement sélectionnées dans un ordre croissant en fonction de leur distance par rapport à la première cellule sélectionnée.

12. Procédé selon une des revendications 1 à 10, **caractérisé en ce qu'**il comporte une étape d'enregistrement dans les moyens (11) de mémorisation du système (1) d'optimisation d'au moins un algorithme de parcours définissant des cercles concentriques centrés autour de la cellule dans laquelle a lieu la perturbation et permettant au module (CL) de contrôle d'exploitation de définir un chemin de parcours (CP) consistant en des sélections successives des cellules de la zone simulée (ZS) par lesquelles passent ces cercles concentriques dans un ordre croissant en fonction de la distance de ces cellules par rapport à la première cellule sélectionnée.

13. Procédé selon une des revendications 1 à 12, **caractérisé en ce que** l'étape d'utilisation de l'algorithme de parcours par le module (CL) de contrôle d'exploitation s'accompagne d'une étape de création de données représentatives d'une grille de découpage de la zone simulée (ZS) en divisions (D) comportant chacune un index obtenu à partir des coordonnées des cellules et permettant de localiser chacune des divisions et de les classer dans un ordre croissant en fonction de leur distance par rapport à une division centrale.

14. Procédé selon la revendication 13, **caractérisé en ce que** l'étape d'utilisation, par le module (CL) de contrôle d'exploitation, d'un algorithme de parcours résulte en une définition de cercles concentriques centrés autour de la cellule dans laquelle a lieu la perturbation et s'accompagne d'une étape de définition d'un chemin de parcours (CP) comportant au moins un vecteur indiquant le trajet à parcourir d'une division (D) à l'autre au sein de la zone simulée (ZS), pour permettre des sélections successives des divisions (D) de la zone simulée (ZS) par lesquelles passent ces cercles concentriques et des sélections successives des cellules contenues dans chacune de ces divisions (D) dans un ordre croissant en fonction de leur distance par rapport à une division centrale.

15. Procédé selon une des revendications 13 et 14, **caractérisé en ce que** les données représentatives de la grille de découpage de la zone simulée (ZS) en divisions (D) comportent des données représentatives des coordonnées de la division permettant au module (CL) de contrôle d'exploitation de déterminer la localisation des cellules ainsi que des divisions (D) et cellules voisines.

16. Procédé selon une des revendications 1 à 12, **caractérisé en ce que** l'étape d'utilisation de l'algorithme de parcours par le module (CL) de contrôle d'exploitation s'accompagne d'une étape de création, pour chaque cellule de la zone simulée (ZS), de données représentatives des cellules voisines dans la zone simulée (ZS), de façon à définir un chemin de parcours (CP) de chacune des cellules les unes après les autres.

17. Procédé selon la revendication 16, **caractérisé en ce que** le chemin de parcours des cellules au sein d'une division (D) est déterminé de façon aléatoire.

18. Procédé selon une des revendications 1 à 17, **caractérisé en ce que** l'étape d'utilisation de l'algorithme de parcours par le module (CL) de contrôle d'exploitation s'accompagne d'une création, pour chaque cellule de la zone simulée (ZS), de données représentatives d'un marqueur indiquant les cellules déjà parcourues pendant le parcours de la zone simulée par le module (CL) de contrôle d'exploitation.

19. Procédé selon une des revendications 1 à 18, **caractérisé en ce que** l'étape de définition (50) de la perturbation consiste en une sélection aléatoire et automatique d'un terminal (2) mobile communicant dans une carte (CR) de répartition extraite des moyens (11) de mémorisation du système (1) d'optimisation et **en ce que** l'étape (52) de sélection d'un ensemble de cellules définissant une zone simulée (ZS) au sein de la carte (CR) de répartition consiste en une sélection d'au moins un serveur (ER) dont la cellule peut couvrir l'emplacement auquel se trouve ce terminal dans la carte (CR) de répartition.

20. Procédé selon une des revendications 1 à 18, **caractérisé en ce que** les étapes de définition (50) de la perturbation et de sélection (52) d'un ensemble de cellules définissant une zone simulée (ZS) au sein de la carte (CR) de répartition consistent en une sélection d'un terminal (2) mobile communicant présent dans la zone de couverture du réseau (RT) et d'au moins les serveurs (ER) dont les cellules peuvent couvrir l'emplacement auquel se trouve ce terminal dans la carte (CR) de répartition, à partir d'informations saisies et enregistrées par un utilisateur système (1) d'optimisation de ressources, grâce à des moyens interactifs (12) entre l'utilisateur et le système (1) d'optimisation de ressources.

21. Procédé selon une des revendications 1 à 20, **caractérisé**, d'une part, en ce que l'étape de définition (50) de la perturbation est mise en oeuvre lors d'une requête de transmission (T) d'un paquet (P) de données par un terminal (2) mobile requérant présent dans la zone de couverture d'un réseau (RT) de téléphonie mobile opérationnel et consiste en une localisation du terminal (2) mobile communicant requérant dans la zone de couverture du réseau (RT) et une identification du type de transmission (T) qu'il requiert et, d'autre part, en ce que l'étape (52) de sélection d'un ensemble de cellules définissant une zone simulée (ZS) au sein de la carte (CR) de répartition consiste en une sélection d'au moins un serveur (ER) dont la cellule peut couvrir l'emplacement auquel se trouve ce terminal (2) dans la carte (CR) de répartition.

22. Procédé selon une des revendications 1 à 21, **caractérisé en ce que** l'étape de définition (80) de données représentatives d'au moins un paramètre relatif à la transmission (T) des paquets (P) est mise en oeuvre par le système (1) d'optimisation de ressources, soit de façon aléatoire et automatique, soit à partir d'informations saisies et enregistrées par un utilisateur du système (1) d'optimisation de ressources, soit à partir de paramètres de transmission requis par un terminal (2) mobile communicant lors d'une requête de transmission.

23. Procédé selon une des revendications 1 à 22, **caractérisé en ce que** l'étape de définition (50) de la perturbation par le module (EM) gestionnaire d'évènements comporte au moins une des étapes suivantes :
- requête (501) d'une nouvelle transmission (T), gérée par un module (TE) de contrôle des évènements,
- fin (502) d'une transmission (T), gérée par le module (TE) de contrôle des évènements,
- expiration (503) d'un délai de transmission (T), gérée par le module (TE) de contrôle des évènements,
- simulation (504) de la mobilité du terminal (2) mobile communicant responsable de la perturbation, gérée par un module (MS) de simulation de mobilité,
- changement (505) des transmissions (T) de paquets (P) en cours, gérée par un module (SP) planificateur de paquets.

24. Procédé selon la revendication 23, **caractérisé en ce que** l'étape de simulation (504) de la mobilité du terminal (2) mobile communicant responsable de la perturbation consiste en l'une des étapes suivantes :
- modélisation d'une vitesse de déplacement du terminal (2) mobile communicant par changement (506) du rapport signal sur bruit requis, permettant une modélisation du niveau de pertes ou du gain du aux variations de la force du signal perçu par les terminaux (2) mobiles communicants, ou
- changement (508) de la localisation du terminal (2) mobile communicant dans la carte de répartition (CR) par sélection d'un terminal (2) mobile communicant voisin dans la carte (CR).

25. Procédé selon une des revendications 1 à 24, **caractérisé en ce qu'**il comporte une étape de contrôle (53) du trafic entre les serveurs (ER) de la zone simulée (ZS) et les terminaux mobiles communicants présents dans la zone simulée (ZS), mise en oeuvre par un module (CT) de contrôle du trafic du système (1) d'optimisation définissant, pour chacune des transmissions (T) en cours, des sessions de transmission (T) de paquets (P), des supports (B) de transmission et des canaux (CH) de transmission de ces paquets (P), cette étape s'accompagnant d'au moins une des étapes de définition (80) des paramètres de multiplexage et de puissance.

26. Procédé selon la revendication 25, **caractérisé en ce que** l'étape de contrôle (53) du trafic par le module (CT) de contrôle du trafic du système (1) d'optimisation consiste en une définition d'une pluralité de paramètres relatifs aux services et aux ressources utilisés par les terminaux mobiles communicants présents dans la zone simulée (ZS), cette définition résultant d'au moins une étape d'extraction (531) de données représentatives de ces paramètres, à partir d'une carte (CR) de répartition, et d'une éventuelle étape de création (532) de données représentatives de ces paramètres, à partir d'informations saisie par un utilisateur du système (1) d'optimisation, de façon à permettre au moins une des étapes suivantes :
- définition (533) de sessions correspondant à des transmissions (T) de paquets de données entre les serveurs (ER) de la zone simulée (ZS) et chacun des terminaux mobiles communicants présents, avec définition (534) des paquets (P) transitant au cours des sessions ;
- définition (535) d'au moins un support (B) associé à chacune des transmissions (T) de chacun des terminaux mobiles communicants, avec définition d'au moins un paramètre parmi des paramètres relatifs au type du support (B), au rythme du support (B), à la qualité du signal requise, aux canaux (CH) de transmission utilisés pour chacune des cellules et à la gamme de puissances autorisée.

27. Procédé selon une des revendications 1 à 26, **caractérisé en ce qu'**il comporte une étape de contrôle (54) de l'admissibilité de la transmission (T) de ce paquet (P), par un module (CAC) de contrôle d'admission des appels du système (1) d'optimisation de ressources réalisant une définition (541) d'un ensemble (AS), dit ensemble actif, de cellules disponibles au sein de la zone simulée (ZS), par vérification (542) de la disponibilité, dans la zone simulée (ZS), d'au moins un paramètre parmi la puissance, les canaux et les paramètres de multiplexage par codes et par le temps ou le type de tranches de temps utilisé, puis classement des serveurs (ER) de l'ensemble actif (AS) en fonction de leur participation (Ec/lo) à la puissance totale des signaux échangés avec le terminal (2) mobile communicant, le module (CAC) de contrôle d'admission des appels effectuant alors une décision (545), en fonction du trafic, de l'admissibilité de la transmission (T) de ce paquet (P) grâce à au moins une voie de transmission, dite support (B), et au moins un canal (CH) de transmission du paquet (P) via au moins un serveur (ER) couvrant une des cellules de l'ensemble actif (AS).

28. Procédé selon une des revendications 1 à 27, **caractérisé en ce qu'**il comporte une étape de contrôle (56) d'exploitation, mise en oeuvre par un module (CL) de contrôle d'exploitation du système (1) d'optimisation lors d'une variation du nombre de paquets (P) transmis au sein de la zone simulée (ZS) et consistant en une vérification (561) d'au moins un paramètre utilisé par les terminaux mobiles communicants dans les cellules constituant la zone simulée (ZS) parmi au moins la puissance et les paramètres de multiplexage par codes et par le temps ou le type de tranches de temps utilisé, puis ajustement (562) de ce(s) paramètre(s) pour au moins un serveur (ER) couvrant au moins une cellule de la zone simulée (ZS).

29. Procédé selon une des revendications 1 à 28, **caractérisé en ce qu'**il comporte une étape de contrôle (55) de charge pour chacune des cellules de la zone simulée (ZS), mise en oeuvre par un module (LC) de contrôle de charge du système (1) d'optimisation, lors d'une utilisation excessive des ressources d'au moins un serveur (ER) de la zone simulée (ZS), consistant en l'utilisation d'au moins un algorithme de contrôle de charge parmi au moins un algorithme de contrôle de charge à puissance constante et au moins un algorithme de contrôle de charge à puissance variable préalablement enregistrés dans les moyens (11) de mémorisation du système (1) d'optimisation et comportant les étapes suivantes :
- vérification (551) des ressources exploitées, au niveau d'au moins un paramètre parmi la puissance, les canaux utilisés et les paramètre de multiplexage par codes et par le temps ou le type de tranches de temps utilisé, dans les cellules constituant la zone simulée (ZS), pour sélectionner au moins un serveur (ER) dont les ressources sont exploitées de manière excessive ;
- sélection (552) d'au moins un paquet parmi les paquets, dits paquets excessifs, utilisant le maximum de puissance ou utilisant un débit maximum sur les canaux de transmission entre les terminaux mobiles communicants présents et le serveur (ER) dont les ressources sont exploitées de manière excessive ;
- décision (70) entre un rejet (60) du paquet excessif sélectionné et un déclassement (65) des paramètres de transmission du paquet excessif sélectionné.

30. Procédé selon une des revendications 28 et 29, **caractérisé en ce que** l'étape de décision (70) entre un rejet (60) du paquet excessif sélectionné et un déclassement (65) des paramètres de transmission du paquet excessif sélectionné, lors du contrôle (55) de charge par le module (LC) de contrôle de charge, dépend de l'algorithme de contrôle de charge utilisé et comporte les étapes suivantes :
- vérification (71) du type d'aiguillage, par circuit ou par paquet, utilisé par le paquet excessif sélectionné ;
- vérification (72) des paramètres du support (B) utilisé par le paquet excessif sélectionné ;
- vérification (73) d'une liste de serveurs (ER) de l'ensemble actif (AS) classés en fonction de leur participation (Ec/lo) à la puissance totale des signaux échangés avec le terminal (2) mobile communicant, pour déterminer si il existe un autre serveur (ER) apte à permettre la transmission du paquet excessif sélectionné, lorsque la puissance du signal fourni par un serveur (ER) n'est pas suffisante.

31. Procédé selon une des revendications 28 et 29, **caractérisé en ce que** l'étape de décision (70) entre un rejet (60) du paquet excessif sélectionné et un déclassement (65) des paramètres de transmission du paquet excessif sélectionné, lors de l'étape de contrôle (55) de charge, par utilisation d'au moins un algorithme de contrôle de charge à puissance constante, consiste en un maintien constant de la puissance initialement allouée aux paquets (P) pendant toute la durée de leur transmission (T) et en un déclassement (65) des paramètres de multiplexage par codes, en fonction du rapport signal sur bruit instantané, de façon à réduire le débit du paquet excessif sélectionné tout en maintenant le rapport signal sur bruit au-dessus de sa valeur requise, ou en un rejet (60) du paquet (P) excessif sélectionné si le rapport signal sur bruit requis ne peut pas être maintenu.

32. Procédé selon une des revendications 28 et 29, **caractérisé en ce que** l'étape de décision (70) entre un rejet (60) du paquet excessif sélectionné et un déclassement (65) des paramètres de transmission du paquet excessif sélectionné, lors de l'étape de contrôle (55) de charge, par utilisation d'au moins un algorithme de contrôle de charge à puissance variable, consiste :
- soit en un déclassement (65) à la fois des paramètres de multiplexage par codes initialement alloués aux paquets (P) et des paramètres de puissance, en fonction du rapport signal sur bruit instantané, de façon à réduire le débit du paquet excessif sélectionné tout en maintenant le rapport signal sur bruit au-dessus de sa valeur requise,
- soit, lorsque la puissance ne peut pas être régulée, en un déclassement (65) seulement des paramètres de multiplexage par codes, en fonction du rapport signal sur bruit instantané, de façon à réduire le débit du paquet excessif sélectionné tout en maintenant le rapport signal sur bruit au-dessus de sa valeur requise,
- soit en un rejet (60) du paquet (P) excessif sélectionné si le rapport signal sur bruit requis ne peut pas être maintenu.

33. Procédé selon une des revendications 1 à 28, **caractérisé en qu'**il comporte une étape de contrôle (55) de charge pour chacune des cellules de la zone simulée (ZS), mise en oeuvre par un module (LC) de contrôle de charge du système (1) d'optimisation, par utilisation d'au moins un algorithme de contrôle de charge par tranches de temps, soit lorsqu'une tranche de temps mixte n'est utilisée pour la transmission que d'un paquet (CS) à aiguillage par circuit alors qu'elle permet normalement ou la transmission à la fois de paquets (PS) à aiguillage par paquets et de paquets (CS) à aiguillage par circuit, soit lorsqu'un paquet (P) est abandonné, cette étape de contrôle de charge consistant en une allocation de ressources égalitaires à l'ensemble des paquets (P) en cours de transmission, en fonction de la capacité des terminaux (2) mobiles communicant responsables de ces transmissions (T) et en un éventuel rejet (60) du paquet le plus récent si le nombre de paquets en cours de transmission excède une valeur prédéterminée.

34. Procédé selon une des revendications 1 à 33, **caractérisé en ce qu'**il comporte une étape de contrôle (55) de charge pour chacune des cellules de la zone simulée (ZS), mise en oeuvre par un module (LC) de contrôle de charge du système (1) d'optimisation, lors d'une diminution de l'utilisation des ressources d'au moins un serveur (ER) de la zone simulée (ZS), consistant en l'utilisation d'au moins un algorithme de contrôle de charge préalablement enregistré dans les moyens (11) de mémorisation du système (1) d'optimisation, et comportant les étapes suivantes :
- vérification (551) des ressources exploitées, au niveau d'au moins un paramètre parmi la puissance, les canaux utilisés et les paramètres de multiplexage par codes et par le temps ou le type de tranches de temps utilisé, dans la zone simulée (ZS), pour détecter au moins un serveur (ER) possédant des ressources inexploitées ;
- sélection (552) d'au moins un paquet parmi les paquets, dits défavorisés, utilisant un débit minimum sur les canaux de transmission du serveur (ER) possédant des ressources inexploitées ;
- surclassement (66) des paramètres de transmission du paquet défavorisé sélectionné, par augmentation (661) d'une valeur d'au moins un paramètre du support (B) utilisé par ce paquet défavorisé sélectionné jusqu'à atteindre un niveau d'exploitation satisfaisant, défini dans l'algorithme de contrôle de charge.

35. Procédé selon la revendication 34, **caractérisé en ce que** l'étape de contrôle (55) de charge de chacune des cellules de la zone simulée (ZS) est associée à une étape de détection d'éventuelles oscillations entre deux valeurs d'au moins un paramètre du support (B) utilisé par un paquet (P) en cours de reconfiguration par le module (LC) de contrôle de charge et, le cas échéant, d'une attribution de la valeur minimum atteinte par l'oscillation à ce paramètre.

36. Procédé selon une des revendications 30 à 35, **caractérisé en ce que** l'étape de contrôle (55) de charge de chacune des cellules de la zone simulée (ZS) est mise en oeuvre par activation du module (LC) de contrôle de charge par le module (CL) de contrôle d'exploitation, pour améliorer la qualité de la transmission (T) des paquets (P) des différents terminaux mobiles communicants présents dans au moins une cellule dans laquelle a lieu la perturbation définie par le module (EM) gestionnaire d'évènements.

37. Procédé selon une des revendications 30 à 36, **caractérisé en ce que** l'étape de contrôle (55) de charge de chacune des cellules de la zone simulée (ZS) est mise en oeuvre par activation automatique du module (LC) de contrôle de charge, lorsque la puissance requise par un canal (CH) de transmission d'un paquet augmente au-delà d'un maximum autorisé, et consiste en une sélection (552) automatique de ce paquet comme paquet excessif puis un déclassement (65) des paramètres de transmission de ce paquet excessif sélectionné.

38. Procédé selon une des revendications 27 à 37, **caractérisé en ce que** l'étape de contrôle (54) de l'admissibilité de la transmission (T) du paquet (P) du terminal (2) mobile requérant consiste en l'utilisation, par le module (CAC) de contrôle d'admission, d'au moins un algorithme de contrôle d'admissibilité parmi au moins un algorithme de contrôle d'admissibilité en fonction du codage et au moins un algorithme de contrôle d'admissibilité en fonction de tranches de temps, préalablement enregistrés dans les moyens (11) de mémorisation du système (1) d'optimisation et comporte les étapes suivantes :
- définition (541) de l'ensemble (AS) actif de cellules disponibles pour la transmission (T) du paquet (P) du terminal (2) requérant, par mesure et classement d'une pluralité de serveurs (ER) de la zone simulée (ZS), dont le nombre dépend de la localisation et du type du terminal (2) requérant ;
- vérification (542) de la disponibilité de ressources, pour chacune des cellules de la zone simulée (ZS), au niveau d'au moins un paramètre parmi la puissance, les canaux et les paramètres de multiplexage par codes et par le temps ou le type de tranches de temps utilisé, puis classement des serveurs (ER) de l'ensemble actif (AS) en fonction de leur participation (Ec/lo) à la puissance totale des signaux échangés avec le terminal (2) mobile communicant ;
- définition de la puissance requise par les canaux de transmission du paquet (P) pour chacune des cellules et vérification (543) que cette puissance requise par chacune des cellules n'excède pas la puissance maximum du support (B) définie pour la transmission (T) du paquet (P) du terminal (2) requérant ;
- vérification (544) que le statut d'au moins une des cellules permet l'admission de transmissions (T) de données par un nouveau terminal mobile communicant.

39. Procédé selon la revendication 38, **caractérisé en ce que** l'utilisation, par le module (CAC) de contrôle d'admission, d'au moins un algorithme de contrôle d'admissibilité en fonction du codage résulte en une décision (545), en fonction du trafic, de l'admissibilité de la transmission (T) du paquet (P) du terminal (2) mobile requérant, cette décision (545) consistant en l'une des étapes suivantes :
- acceptation (61) de la transmission (T) du paquet (P) du terminal (2) requérant, lorsque les conditions nécessaires pour l'admission d'une nouvelle transmission (T) sont remplies, après sélection (58) d'un serveur (ER) pour la transmission (T) du paquet (P) et sélection (59) du support (B) à utiliser pour cette transmission (T), avec allocation de paramètres de codage initiaux les plus élevés possibles dans le serveur (ER), en fonction du nombre de canaux disponibles et de la puissance requise, puis allocation d'une portion de temps (TP) initiale;
- rejet (60) de la transmission (T) du paquet (P) du terminal (2) mobile requérant par le serveur (ER), lorsque le nombre de canaux disponibles est insuffisant ou lorsque la puissance requise est trop élevée, même pour les paramètres de codage les moins élevés disponibles sur le serveur (ER).

40. Procédé selon la revendication 38, **caractérisé en ce que** l'utilisation, par le module (CAC) de contrôle d'admission, d'au moins un algorithme de contrôle d'admissibilité en fonction de tranches de temps résulte en une décision (545), en fonction du trafic, de l'admissibilité de la transmission (T) du paquet (P) du terminal (2) mobile requérant, cette décision (545) consistant en l'une des étapes suivantes lorsque le paquet (CS) utilise un aiguillage par circuit :
- acceptation (61) de la transmission (T) du paquet (P) du terminal (2) requérant, lorsque les conditions nécessaires pour l'admission d'une nouvelle transmission (T) sont remplies, après sélection (58) d'un serveur (ER) pour la transmission (T) du paquet (P) et sélection (59) du support (B) à utiliser pour cette transmission (T), avec allocation d'une tranche de temps du type débit total si une telle tranche de temps est disponible sur le serveur (ER) ou allocation d'une tranche de temps du type demi-débit si le paquet (P) est un appel en demi-débit ;
- reconfiguration (64) par utilisation d'au moins un algorithme de reconfiguration de la transmission (T) de données lorsque les conditions nécessaires pour l'admission d'une nouvelle transmission (T) ne sont pas remplies et que les moyens (11) de mémorisation du système (1) d'optimisation stockent au moins un algorithme de reconfiguration, pour permettre une modification des données relatives au support (B), et augmenter les chances d'admission de la transmission (T) ;
- rejet (60) de la transmission (T) du paquet (P) du terminal (2) mobile requérant, lorsque les conditions nécessaires à l'admission ne sont pas remplies et que les moyens (11) de mémorisation du système (1) d'optimisation ne stockent pas d'algorithme de reconfiguration ou que le trafic au sein de la zone simulée (ZS) ne permet pas une reconfiguration (64) efficace de la transmission (T) du paquet (P).

41. Procédé selon la revendication 38, **caractérisé en ce que** l'étape de reconfiguration (64) par utilisation d'au moins un algorithme de reconfiguration de la transmission (T) du paquet (P), mise en oeuvre par le module (CAC) de contrôle d'admission lorsque les conditions nécessaires pour l'admission d'une nouvelle transmission, définies par l'algorithme de contrôle d'admissibilité en fonction de tranches de temps, n'ont pas été remplies et que les moyens (11) de mémorisation du système (1) d'optimisation stockent au moins un algorithme de reconfiguration, résulte :
- soit en une recherche (67) d'un appel auquel une tranche de temps de type débit total est allouée, puis, le cas échéant, allocation d'une tranche de type demi-débit à cet appel et allocation de la tranche de temps de type débit total ainsi libérée à la nouvelle transmission ;
- soit en une recherche (68) d'une tranche de temps de type mixte, et, le cas échéant, allocation de cette tranche de temps mixte à la nouvelle transmission, puis adaptation de cette tranche de temps mixte à la nouvelle transmission (T) à aiguillage par circuit.

42. Procédé selon la revendication 38, **caractérisé en ce que** l'utilisation, par le module (CAC) de contrôle d'admission, d'au moins un algorithme de contrôle d'admissibilité en fonction de tranches de temps résulte en une décision (545), en fonction du trafic, de l'admissibilité de la transmission (T) du paquet (P) du terminal (2) mobile requérant, cette décision (545) consistant en l'une des étapes suivantes lorsque le paquet (PS) utilise un aiguillage par paquets :
- recherche d'un bloc de transmission consistant en une combinaison de tranches de temps du type exclusivement à paquets et de tranches de temps du type mixte dans un support (B) puis, le cas échéant, acceptation (61) de la transmission (T) du paquet (P) du terminal (2) requérant et allocation de ce bloc à la nouvelle transmission ;
- rejet (60) de la transmission (T) du paquet (P) du terminal (2) mobile requérant, lorsque aucun bloc de transmission n'est disponible pour l'acceptation de la nouvelle transmission.

43. Procédé selon une des revendications 1 à 42, **caractérisé en ce qu'**il est mis en oeuvre par une application (102) de simulation et d'optimisation de ressources, exécutée sur les moyens (10) de traitement du système (1) d'optimisation de ressources et contrôlant les moyens (10) de traitement et l'interopérabilité du module (CT) de contrôle du trafic, du module (CAC) de contrôle d'admissibilité, du module (LC) de contrôle de charge et du module (CL) de contrôle d'exploitation des ressources et accédant aux moyens (11) de mémorisation du système (1) d'optimisation pour le chargement des données nécessaires aux différents modules, le procédé comportant une étape d'installation (47) de l'application (102) sur le système (1) d'optimisation par enregistrement, dans les moyens (11) de mémorisation du système (1) d'optimisation, de données permettant l'exécution de l'application (102) sur les moyens (10) de traitement du système (1) d'optimisation.

44. Procédé selon la revendication 43, **caractérisé en ce que** l'étape d'installation (47) de l'application (102) sur le système (1) d'optimisation comporte une étape d'implémentation (48) de l'application (102) d'optimisation au sein d'un environnement logiciel fourni par un outil (103) de planification de cellules exécuté sur des moyens de traitement d'au moins un serveur (ER) au sein de la zone de couverture du réseau (RT), par enregistrement, dans des moyens de mémorisation du serveur (ER), de données permettant l'exécution de l'application (102) d'optimisation de ressources au sein de l'outil (103) de planification du serveur (ER) qui constitue ainsi un système (1) d'optimisation.

45. Procédé selon une des revendications 1 à 44, **caractérisé en ce que** les étapes de définition (50) de la perturbation et de sélection (52) d'une zone simulée (ZS) sont accompagnées d'une étape de chargement dans une mémoire (101) de travail, de type mémoire vive ou à temps d'accès très court, du système (1) d'optimisation de ressources, d'au moins certaines des données stockées dans les moyens (11) de mémorisation du système (1) d'optimisation.

## Claims

1. Method of simulation and optimisation of the operation of the resources available in a coverage area of a mobile telephone network (RT) consisting of a set of zones of influence, referred to as cells, of a plurality of transmitters/receivers (ER), referred to as servers, of which the operation of the resources depends upon the transmission (T) of data sets, referred to as packets (P), required by at least one communicating mobile terminal (2), referred to as the applicant terminal, present in their zone of influence, **characterised in that** on the one hand it is implemented by processing means (10) of at least one resource optimisation system (1) and on the other hand it includes the following steps:
- definition (50) by an event management module (EM) of the optimisation system (1) of a variation, referred to as a disturbance, of at least one transmission (T) of packets (P) required within the network (RT), wherein the disturbance is defined on the basis of at least one statistical distribution map (CR) stored in memory means (11) of the optimisation system (1) and including data representing transmissions (T) of data packets (P) of a plurality of communicating mobile terminals present in a specific geographical zone during a defined time slot,
- selection (52) of a set of cells including at least the cell in which the disturbance occurs and defining a simulated zone (ZS) within the distribution map (CR) by means of a resource operation control module, and then use of a routing algorithm by the operation control module (CL) in order to define a routing path (CP) of the simulated zone (ZS) and to successively optimise the resources of the servers (ER) covering the successive cells of the routing path (CP),
- definition (80) by the event management module (EM) of data representing at least one parameter relating to the transmission (T) of the packets (P) within each of the cells of the simulated zone (ZS) from amongst at least parameters of time multiplexing of the packet (P), code multiplexing of the packet (P) and power required.

2. Method as claimed in Claim 1, **characterised in that** the step of definition (80) of at least one parameter from amongst parameters of time multiplexing of the packet (P), code-multiplexing of the packet (P) and power required, by the event management module (EM), includes at least one of the following steps:
- definition (81) of time periods, referred to as subframes (SF), enabling time multiplexing of the packets (P) in the course of at least one frame (F) of transmission (T),
- definition (82) of codes enabling the code multiplexing of the packets (P) in the course of at least one frame (F) of transmission (T),
- definition (83) of the power allocated to each of the packets (P) in the course of at least one frame (F) of transmission (T),
- definition (85) of a type of time slot used for the transmission of packets (P) according to the different types of service provided by the servers (ER), wherein this type of time slot is either a full-rate time slot, or a half-rate time slot, or a packet-only time slot, or a mixed slot.

3. Method as claimed in Claim 2, **characterised in that** the step of definition (82) of codes includes a step of determination (821) of the number of codes attributed to each of the packets (P) and a step (822) of determination of the type of modulation used for these codes.

4. Method as claimed in either Claim 2 or Claim 3, **characterised in that** the steps of definition (81) of the subframes, definition (82) of the codes and definition (83) of the power are implemented, for each of the packets (P), by a packet scheduling module (SP) making it possible to determine the codes and the subframes by means of which each of the packets (P) will be transmitted in the course of at least one frame (F) of transmission (T), as well as the power allocated to each of the packets (P).

5. Method as claimed in either Claim 2 or Claim 3, **characterised in that** the step of definition (81) of the subframes (SF) is replaced by a step of evaluation (81b) of a portion (TP) of time occupied by the transmission (T) of each of the packets (P), without defining subframes (SF) but considering only the total time during which each of the packets (P) is transmitted.

6. Method as claimed in Claim 5, **characterised in that** the step of evaluation (81b) of the time portion (TP) occupied by the transmission (T) of each of the packets (P) is based upon an approximation consisting of a calculation (811) of the average power used in the course of time for the transmission of each of the packets (P) and of a spreading (812) of the power over the total time portion (TP) occupied by each of the packets (P) by the use by the event management module (EM) of at least one algorithm from amongst the following algorithms for time distribution of the packets:
- an algorithm, referred to as an individual transmission algorithm, according to which a single packet (P) is transmitted in the course of each of the subframes (SF), then using all of the power available during this subframe (SF),
- an algorithm, referred to as a grouped transmission algorithm, according to which a plurality of packets (P) is transmitted during one and the same time portion (TP), by multiplexing by codes, these packets each using a portion of the total available power.

7. Method as claimed in Claim 6, **characterised in that** it includes a step of determination (84) of the interference detected by each of the servers (ER) responsible for the transmission (T) of each of the packets (P) during the time portion (TP) in the course of which they are transmitted, this step being implemented by means of the step of definition (83) of the power allocated to each of the packets (P) in the course of at least one frame (F) of transmission (T) and by means of the use of the algorithms for time distribution of the packets by the event management module (EM), this determination (84) of the detected interference enabling the calculation of a signal-to-noise ratio for each of the packets (P).

8. Method as claimed in either Claim 6 or Claim 7, **characterised in that** the use of the grouped transmission algorithm by the event management module (EM) is accompanied by a step (814) of allocation of different time portions (TP) to the different packets (P) transmitted in the course of a frame (F) of transmission (T), by the use of an algorithm from amongst the following algorithms for allocation of a time portion:
- an algorithm, referred to as a fair-share algorithm, according to which the time portion (TP) allocated to each of the packets (P) is a function of the total time of the frame (F) of transmission (T) divided by the number of packets (P) to be transmitted,
- an algorithm, referred to as a maximising algorithm, according to which the time portion (TP) allocated to each of the packets (P) is a function of a value of at least one parameter relating to the transmission (T) of the packet (P) divided by the sum of the values of this parameter or these parameters for the other packets (P).

9. Method as claimed in any one of Claims 1 to 8, **characterised in that** it includes a preliminary step of establishment (51) of at least one distribution map (CR) including data representing the traffic and the location of the servers (ER) in the coverage area of the network (RT), these data representing the traffic corresponding to quantitative and qualitative measurements of the location of a plurality of communicating mobile terminals and of servers operating in the coverage zone of the network (RT) and of the transmissions (T) of data packets (P) effected in the course of time sl ots chosen for their statistical significance, wherein the data corresponding to these measurements are recorded in the storage means (11) of the optimisation system (1).

10. Method as claimed in any one of Claims 1 to 9, **characterised in that** it includes a step of establishment (51) of at least one distribution map (CR) including data representing the traffic and the location of servers in the coverage area of the network (RT), the data representing the traffic being generated by the event management module (EM) and representing on the one hand the location of a plurality of communicating mobile terminals distributed randomly in a coverage area of the network (RT) according to a predetermined density and on the other hand the transmissions (T) of data packets (P) required by these terminals assigned randomly to the different terminals present in the network (RT), based on random laws stored in the memory means (1) of the optimisation system (1).

11. Method as claimed in any one of Claims 1 to 10, **characterised in that** it includes a step of recording in the memory means (11) of the optimisation system (1) of at least one routing algorithm enabling the operation control module (CL) to define a routing path (CP) consisting of selection of any cell in the simulated zone (ZS) and then a plurality of iterations for the selection of a cell adjacent to the previously selected cell until all the cells in the simulated zone (ZS) have been successively selected in ascending order as a function of their distance in relation to the first cell selected.

12. Method as claimed in any one of Claims 1 to 10, **characterised in that** it includes a step of recording in the memory means (11) of the optimisation system (1) of at least one routing algorithm defining concentric circles centred around the cell in which the disturbance has occurred and enabling the operating control module (CL) to define a routing path (CP) consisting of successive selections of the cells in the simulated zone (ZS) through which these concentric circles pass in ascending order as a function of the distance of these cells in relation to the first cell selected.

13. Method as claimed in any one of Claims 1 to 12, **characterised in that** the step of use of the routing algorithm by the operation control module (CL) is accompanied by a step of creation of data representing a grid for separation of the simulated zone (ZS) into divisions (D) each including an index obtained from the co-ordinates of the cells and enabling location of each of the divisions and classification thereof in ascending order as a function of their distance in relation to a central division.

14. Method as claimed in Claim 13, **characterised in that** the step of use of the routing algorithm by the operation control module (CL) results in the definition of concentric circles centred around the cell in which the disturbance occurs and is accompanied by a step of defining a routing path (CP) including at least one vector indicating the path to be taken from one division (D) to the other within the simulated zone (ZS) in order to enable successive selections of the divisions (D) of the simulated zone (ZS) through which these concentric circles pass and successive selections of the cells contained in each of these divisions (D) in ascending order as a function of their distance in relation to a central division.

15. Method as claimed in either Claim 13 or Claim 14, **characterised in that** the data representing the grid for separation of the simulated zone (ZS) into divisions include data represent the co-ordinates of the division enabling the operation control module (CL) to determine the location of the cells as well as the divisions (D) and neighbouring cells.

16. Method as claimed in any one of Claims 1 to 12, **characterised in that** the step of use of the routing algorithm by the operation control module (CL) is accompanied by a step of creation, for each cell in the simulated zone (ZS), of data representing the neighbouring cells in the simulated zone (ZS), in such a way as to define a routing path (CP) for each of the cells, one after the other.

17. Method as claimed in Claim 16, **characterised in that** the routing path in the cells within a division (D) is determined in a random manner.

18. Method as claimed in any one of Claims 1 to 17, **characterised in that** the step of use of the routing algorithm by the operation control module (CL) is accompanied by the creation, for each cell in the simulated zone (ZS), of data representing a marker indicating the cells already visited during the passage through the simulated zone by the operation control module.

19. Method as claimed in any one of Claims 1 to 18, **characterised in that** the step of definition (50) of the disturbance consists of a random and automatic selection of a communicating mobile terminal (2) in a distribution map (CR) extracted from the memory means (11) of the optimisation system (1) and **in that** the step (52) of selection of a set of cells defining a simulated zone (ZS) within the distribution map (CR) consists of selection of at least one server (ER) of which the cell can cover the position at which this terminal is located in the distribution map (CR).

20. Method as claimed in any one of Claims 1 to 18, **characterised in that** the steps of definition (50) of the disturbance and selection (52) of a set of cells defining a simulated zone (ZS) within the distribution map (CR) consist of selection of a communicating mobile terminal (2) present in the coverage area of the network (RT) and of at least the servers (ER) of which the cells can cover the position at which this terminal is located in the distribution map (CR) based upon information entered and recorded by a user of the resource optimisation system (1) by interactive means (12) between the user and the resource optimisation system (1).

21. Method as claimed in any one of Claims 1 to 20, **characterised in that** on the one hand the step of definition (50) of the disturbance is implemented during a request for transmission (T) of a data packet (P) by an applicant mobile terminal (2) present in the coverage area of an operational mobile telephone network (RT) and consists of location of the applicant communicating mobile terminal (2) in the coverage area of the network (RT) and identification of the type of transmission (T) which it requires, and on the other hand the step of selection of a set of cells defining a simulated zone (ZS) within the distribution map (CR) consists of selection of at least one server (ER) of which the cell can cover the position at which this terminal (2) is located in the distribution map (CR).

22. Method as claimed in any one of Claims 1 to 22, **characterised in that** the step of definition (80) of data representing at least one parameter relating to the transmission (T) of the packets (P) is implemented by the resource optimisation system (1), either in a random and automatic manner, or based upon information entered and recorded by a user of the resource optimisation system (1), or based upon transmission parameters required by a communicating mobile terminal (2) during a transmission request.

23. Method as claimed in any one of Claims 1 to 22, **characterised in that** the step of definition (50) of the disturbance by the event management module (EM) includes at least one of the following steps:
- request (501) for a new transmission (T) managed by an event control module (TE),
- ending (502) of a transmission (T) managed by the event control module (TE),
- expiration of a delay in transmission (T) managed by the event control module (TE),
- simulation (504) of the mobility of the communicating mobile terminal (2) responsible for the disturbance, managed by a mobility simulation module (MS),
- changing (505) of the transmissions (T) of current packets managed by a packet scheduling module (SP).

24. Method as claimed in Claim 23, **characterised in that** the step of simulation (504) of the mobility of the communicating mobile terminal (2) responsible for the disturbance consists of one of the following steps:
- modelling of a speed of movement of the communicating mobile terminal (2) by changing (506) of the required signal-to-noise ratio, enabling modelling of the level of losses or of the gain due to the variations in the strength of the signal detected by the mobile communicating terminals (2),
- or changing (508) of the location of the communicating mobile terminal (2) in the distribution map (CR) by selection of a neighbouring communicating mobile terminal (2) in the map (CR).

25. Method as claimed in any one of Claims 1 to 24, **characterised in that** it includes a step (53) of control (53) of the traffic between the servers (ER) of the simulated zone (ZS) and the communicating mobile terminals present in the simulated zone (ZS), implemented by a traffic control module (CT) of the optimisation system (1) defining, for each of the current transmissions (T), sessions for the transmission (T) of packets (P), transmission carriers (B) and channels (CH) for transmission of these packets (P), this step being accompanied by at least one of the steps of definition (80) of the multiplexing and power parameters.

26. Method as claimed in Claim 25, **characterised in that** the step of control (53) of the traffic by the traffic control module (CT) of the optimisation system (1) consists of definition of a plurality of parameters relating to the services and to the resources used by the communicating mobile terminals present in the simulated zone (ZS), this definition resulting from at least one step of extraction (531) of data representing these parameters, from a distribution map (CR) and a possible step of creation (532) of data representing these parameters based upon information entered by a user of the optimisation system (1) in such a way as to enable at least one of the following steps:
- definition (533) of sessions corresponding to transmissions (T) of data packets between the servers (ER) of the simulated zone (ZS) and each of the communicating mobile terminals present, with definition (534) of the packets (P) transiting in the course of the sessions;
- definition of at least one carrier associated with each of the transmissions (T) of each of the communicating mobile terminals, with definition of at least one parameter from amongst the parameters relating to the type of carrier (B), the data rate of the carrier (B), the quality of the signal required, the transmission channels (CH) used for each of the cells, and the range of authorised power levels.

27. Method as claimed in Claim 2, **characterised in that** it includes a step of control (54) of the acceptability of the transmission (T) of this packet (P), by a call admission control module (CAC) of the resource optimisation system (1) performing a definition (541) of a set (AS), referred to as an active set, of cells available within the simulated zone (ZS) by verification (542) of the availability in the simulated zone (ZS) of at least one parameter from amongst the power, the channels and the parameters for code and time multiplexing or the type of time slots used, and then classification of the servers (ER) of the active set (AS) as a function of their participation (Ec/lo) in the total power of the signals exchanged with the communicating mobile terminal (2), the call admission control module (CAC) then making of a decision (545) as a function of the traffic concerning the acceptability of the transmission (T) of this packet (P) by at least one transmission path, referred to as a carrier (B), and at least one channel (CH) for transmission of the packet (P) via at least one server (ER) covering one of the cells of the active set (AS).

28. Method as claimed in any one of Claims 1 to 27, **characterised in that** it includes an operation control step (56) implemented by an operation control module (CL) of the optimisation system (1) during a variation in the number of packets (P) transmitted within the simulated zone (ZS) and consisting of a verification (561) of at least one parameter used by the communicating mobile terminals in the cells constituting the simulated zone (ZS) from amongst at least the power and the parameters for code multiplexing and time multiplexing or the type of time slots used, and then adjustment (562) of this parameter or these parameters for at least one server (ER) covering at least one cell in the simulated zone (ZS).

29. Method as claimed in any one of Claims 1 to 28, **characterised in that** it includes a load control step (55) for each of the cells in the simulated zone (ZS) implemented by a load control module (LC) of the optimisation system (1) during excessive use of the resources of at least one server (ER) of the simulated zone (ZS), consisting of the use of at least one load control algorithm from amongst at least one constant power load control algorithm and at least one variable power load control algorithm previously stored in the memory means (11) of the optimisation system (1) and including the following steps:
- verification (551) of the resources used at the level of at least one parameter from amongst the power, the channels used and the code multiplexing and time multiplexing parameters or the type of time slots used in the cells constituting the simulated zone (ZS) in order to select at least one server (ER) of which the resources are operated excessively;
- selection (552) of at least one packet from amongst the packets, referred to as excess packets, using the maximum power or using a maximum throughput on the transmission channels between the communicating mobile terminals present and the server (ER) of which the resources are used excessively;
- decision (70) between rejection (60) of the selected excessive packet and downgrading (65) of the transmission parameters of the selected excessive packet.

30. Method as claimed in either Claim 28 or 29, **characterised in that** the step of decision (70) between rejection (60) of the selected excessive packet and downgrading (65) of the transmission parameters of the selected excessive packet during the load control (55) by the load control module (LC) depends upon the load control algorithm used and includes the following steps:
- verification (71) of the type of switching, by circuit or by packet, used by the selected excessive packet;
- verification (72) of the parameters of the carrier (B) used by the selected excessive packet;
- verification (73) of a list of servers (ER) of the active set (AS) classified as a function of their participation (Ec/lo) to the total power of the signals exchanged with the communicating mobile terminal (2) in order to determine whether there exists another server (ER) capable of enabling transmission of the selected excessive packet when the power of the signal supplied by a server (ER) is insufficient.

31. Method as claimed in either Claim 28 or Claim 29, **characterised in that** the step of decision (70) between rejection (60) of the selected excessive packet and downgrading (65) of the transmission parameters of the selected excess packet during the step of load control (55) by the use of at least one constant power load control algorithm consists of maintaining constant the power initially allocated to the packets (P) during the entire duration of their transmission (T) and downgrading (65) of the code multiplexing parameters as a function of the instantaneous signal-to-noise ratio in such a way as to reduce the throughput of the selected excessive packet whilst maintaining the signal-to-noise ratio above its required value, or a rejection (60) of the selected excessive packet (P) if the required signal-to-noise ratio cannot be maintained.

32. Method as claimed in either Claim 28 or Claim 29, **characterised in that** the step of decision (70) between rejection of the selected excessive packet and downgrading (65) of the transmission parameters of the selected excessive packet during the load control step (55) by the use of at least one variable power load control algorithm, consists of:
- either downgrading (65) of both the code multiplexing parameters initially allocated to the packets (P) and the power parameters as a function of the instantaneous signal-to-noise ratio in such a way as to reduce the throughput of the selected excessive packet whilst maintaining the signal-to-noise ratio above its required value,
- or, when the power cannot be regulated, downgrading (65) of only the code multiplexing parameters as a function of the instantaneous signal-to-noise ratio in such a way as to reduce the throughput of the selected excessive packet whilst maintaining the signal-to-noise ratio above its required value,
- or rejection (60) of the selected excessive packet (P) if the required signal-to-noise ratio cannot be maintained.

33. Method as claimed in any one of Claims 1 to 28, **characterised in that** it includes a load control step (55) of each of the cells in the simulated zone (ZS) implemented by a load control module (LC) of the optimisation system (1) by the use of at least one time slot load control algorithm, either when a mixed time slot is used only for the transmission of a circuit-switched packet (CS) whereas it normally enables either the transmission of both packet-switched packets (PS) and circuit-switched packets (CS), or when a packet (P) is abandoned, this load control step consisting of an allocation fairly shared resources to all of the packets (P) in the course of transmission as a function of the capacity of the communicating mobile terminals (2) responsible for these transmissions (T) and possible rejection of the most recent packet if the number of packets in the course of transmission exceeds a predetermined value.

34. Method as claimed in any one of Claims 1 to 33, **characterised in that** it includes a load control step (55) for each of the cells in the simulated zone (ZS) implemented by a load control module (LC) of the optimisation system (1) during a reduction in the use of the resources of at least one server (ER) of the simulated zone (ZS) consisting of the use of at least one load control algorithm previously recorded in the memory means (11) of the optimisation system (1), and including the following steps:
- verification (551) of the resources used at the level of at least one parameter from amongst the power, the channels used and the code multiplexing and time multiplexing parameters or the type of time slots used in the simulated zone (ZS) in order to detect at least one server (ER) having unused resources;
- selection (552) of at least one packet from amongst the packets, referred to as disadvantaged packets, using a minimum throughput on the transmission channels of the server (ER) having unused resources;
- upgrading (66) of the transmission parameters of the selected disadvantaged packet by increasing (661) of a value of at least one parameter of the carrier (B) used by this selected disadvantaged packet until a satisfactory operation level, defined in the load control algorithm, is attained.

35. Method as claimed in Claim 34, **characterised in that** the load control step (55) of each of the cells in the simulated zone (ZS) is associated with a step of detection of any oscillations between two values of at least one parameter of the carrier (B) used by a packet (P) in the course of reconfiguration by the load control module (LC) and, where appropriate, attribution of the minimum value attained by the oscillation to this parameter.

36. Method as claimed in any one of Claims 30 to 25, **characterised in that** the load control step (55) of each of the cells in the simulated zone (ZS) is implemented by activation of the load control module (LC) by the operation control module (CL) in order to improve the quality of the transmission (T) of the packets (P) of the different communicating mobile terminals present in at least one cell in which the disturbance occurs, as defined by the event management module (EM).

37. Method as claimed in any one of Claims 30 to 35, **characterised in that** the load control step (55) of each of the cells in the simulated zone (ZS) is implemented by automatic activation of the load control module (LC) when the power required by a channel (CH) for transmission of a packet increases beyond an authorised maximum and consists of automatic selection (552) of this packet as an excessive packet and then downgrading (65) of the transmission parameters of this selected excessive packet.

38. Method as claimed in any one of Claims 27 to 37, **characterised in that** the step of control (54) of the admissibility of the transmission (T) of the packet (2) of the applicant mobile terminal (2) consists of the use by the admission control module (CAC) of at least one admissibility control algorithm from amongst at least one algorithm for admissibility control as a function of the coding and at least one algorithm for admissibility control as a function of time slots, previously recorded in the memory means (11) of the optimisation system (1), and includes the following steps:
- definition (541) of the active set (AS) of cells available for the transmission (T) of the packet (P) of the applicant terminal (2) by measurement and classification of a plurality of servers (ER) of the simulated zone (ZS), the number of which depends upon the location and the type of the applicant terminal (2);
- verification (542) of the availability of resources, for each of the cells in the simulated zone (ZS), at the level of at least one parameter from amongst the power, the channels and the parameters for code multiplexing and time multiplexing or the type of time slots used, and then classification of the servers (ER) of the active set (AS) as a function of their participation (Ec/lo) in the total power of the signals exchanged with the communicating mobile terminal (2);
- definition of the power required by the transmission channels of the packet (P) for each of the cells and verification (543) that this power required by each of the cells does not exceed the maximum power of the carrier (B) defined for the transmission (T) of the packet (P) of the applicant terminal (2);
- verification (544) that the status of at least one of the cells enables the admission of transmissions (T) of data by a new communicating mobile terminal.

39. Method as claimed in Claim 38, **characterised in that** the use by the admission control module (CAC) of at least one algorithm for admission control as a function of the coding results in a decision (545), as a function of the traffic, concerning the admissibility of the transmission (T) of the packet (P) of the applicant mobile terminal (2), this decision (545) consisting of one of the following steps:
- acceptance (61) of the transmission (T) of the packet (P) of the applicant terminal (2) when the conditions necessary for the admission of a new transmission (T) are satisfied, after selection (58) of a server (ER) for the transmission (T) of the packet (P) and selection (59) of the carrier (B) to be used for this transmission (T), with allocation of the highest possible initial coding parameters in the server (ER) as a function of the number of channels available and the power required, and then allocation of an initial time portion (TP);
- rejection (60) of the transmission (T) of the packet (P) of the applicant mobile terminal (2) by the server (ER) when the number of channels available is insufficient or when the power required is too high, even for the lowest coding parameters available on the server (ER).

40. Method as claimed in Claim 38, **characterised in that** the use by the admission control module (CAC) of at least algorithm for admission control as a function of time slots results in a decision (545), as a function of the traffic, concerning the admissibility of the transmission (T) of the packet (P) of the applicant mobile terminal (2), this decision (545) consisting of one of the following steps when the packet (CS) uses circuit switching:
- acceptance (61) of the transmission (T) of the packet (P) of the applicant terminal (2) when the conditions necessary for the admission of a new transmission (T) are satisfied after selection (58) of a server (ER) for the transmission (T) of the packet (P) and selection (59) of the carrier (B) to be used for this transmission (T), with allocation of a time slot of the full-rate type if such a time slot is available on the server (ER) or allocation of a time slot of the half-rate type if the packet (P) is a half-rate call;
- reconfiguration (64) by the use of at least one reconfiguration algorithm of the transmission (T) of data when the conditions necessary for the admission of a new transmission (T) are not satisfied and the memory means (11) of the optimisation system (1) holding at least one reconfiguration algorithm, in order to enable a modification of the data relating to the carrier (B) and to increase the chances of admission of the transmission (T);
- rejection of the transmission (T) of the packet (P) of the applicant mobile terminal (2) when the conditions necessary for the admission are not satisfied and the memory means (11) of the optimisation system (1) hold no reconfiguration algorithm or the traffic within the simulated zone (ZS) does not allow an effective reconfiguration (54) of the transmission (T) of the packet (P).

41. Method as claimed in Claim 38, **characterised in that** the step of reconfiguration (64) by the use of at least one algorithm for reconfiguration of the transmission (T) of the packet (P) implemented by the admission control module (CAC) when the conditions necessary for the admission of a new transmission, defined by the algorithm for admission control as a function of time slots, have not been satisfied and the memory means (11) of the optimisation system (1) hold at least one reconfiguration algorithm, results in:
- either a search (67) for a call to which a time slot of the full-rate type is allocated, and then, where appropriate, allocation of a slot of the half-rate type to this call and allocation to the new transmission of the time slot of the full-rate type thus freed;
- or a search (68) for a time slot of the mixed type, and, where appropriate, allocation of this mixed time slot to the new transmission, and then adaptation of this mixed time-slot to the new circuit-switched transmission (T).

42. Method as claimed in Claim 38, **characterised in that** the use by the admission control module (CAC) of at least algorithm for admission control as a function of time slots results in a decision (545), as a function of the traffic, concerning the admissibility of the transmission (T) of the packet (P) of the applicant mobile terminal (2), this decision (545) consisting of one of the following steps when the packet (PS) uses packet switching:
- a search for a transmission block consisting of a combination of time slots of the packet-only type and time slots of the mixed type in a carrier (B) and then, where appropriate, acceptance (61) of the transmission (T) of the packet (P) of the applicant terminal (2) and allocation of this block to the new transmission;
- rejection (60) of the transmission (T) of the packet (P) of the applicant mobile terminal (2) when no transmission block is available for acceptance of the new transmission.

43. Method as claimed in any one of Claims 1 to 42, **characterised in that** it is implemented by an application (102) for the simulation and optimisation of resources executed on the processing means (10) of the resource optimisation system (1) and controlling the processing means (10) and the interoperability of the traffic control module (CT), the admissibility control module (CAC), the load control module (LC) and the resource operation control module (CL) and accessing the memory means (11) of the optimisation system (1) for loading of the data necessary for the different modules, the method including a step of installation (47) of the application (102) on the optimisation system (1) by the recording, in the memory means (11) of the optimisation system (1) of data enabling the execution of the application (102) on the processing means (10) of the optimisation system (1).

44. Method as claimed in Claim 43, **characterised in that** the step of installation (47) of the application (102) on the optimisation system (1) includes a step of implementation (48) of the optimisation application (102) within a software environment supplied by a cell planning tool (103) executed on the processing means of at least one server (ER) within the coverage area of the network (RT) by the recording, in memory means of the server (ER), of data enabling the execution of the application (102) for optimisation of the resources within the cell planning tool (103) of the server (ER) which thus constitutes an optimisation system (1).

45. Method as claimed in any one of Claims 1 to 44, **characterised in that** the steps of definition (50) of the disturbance and selection (52) of a simulated zone (ZS) are accompanied by a step of loading into a working memory (101), of the volatile or very fast access type, of the resource optimisation system (1) of at least certain data stored in the memory means (11) of the optimisation system (1).

## Patentansprüche

1. Verfahren zum Simulieren und Optimieren der Nutzung der Ressourcen, die in einem Abdeckungsbereich eines Mobilfunknetzes (RT) verfügbar sind, das aus einer Menge von als Zellen bezeichneten Einflussbereichen einer Mehrzahl von als Server bezeichneten Sendern/Empfängern (ER) besteht, deren Ressourcen-Nutzung von den Übertragungen (T) von Datenmengen abhängt, die als Pakete (P) bezeichnet werden, die von mindestens einem als anfordernd bezeichneten Kommunikationsendgerät (2) angefordert werden, das sich in ihrem Einflussbereich befindet, einerseits **dadurch gekennzeichnet, dass** es mittels Verarbeitungsmitteln (10) von mindestens einem System (1) zur Optimierung von Ressourcen durchgeführt wird, und andererseits **dadurch**, dass es die folgenden Schritte aufweist:
- Definieren (50) mittels eines Moduls (EM) zur Verwaltung von Ereignissen des Optimierungssystems (1) einer als Störung bezeichneten Variation von mindestens einer Übertragung (T) von Paketen (P), die innerhalb des Netzes (RT) angefordert wird, wobei die Störung ausgehend von mindestens einer Statistische-Verteilungs-Karte (CR) definiert wird, die in Speichermitteln (11) des Optimierungssystems (1) gespeichert ist und Daten aufweist, die für Übertragungen (T) von Paketen (P) von Daten einer Mehrzahl von mobilen Kommunikationsendgeräten repräsentativ sind, die sich während eines bestimmten Zeitschlitzes in einem bestimmten geographischen Bereich befinden,
- Auswählen (52) einer Menge von Zellen, die mindestens die Zelle aufweist, in der die Störung stattfindet, und die eine Simulationszone (ZS) innerhalb der Verteilungskarte (CR) definiert, mittels eines Moduls (CL) zur Steuerung der Nutzung der Ressourcen, anschließend Anwenden eines Strecken-Algorithmus mittels des Moduls (CL) zur Nutzungssteuerung zum Definieren eines Streckenpfades (CP) der Simulationszone (ZS) und zum sukzessiven Optimieren der Ressourcen der Server (ER), die die nachfolgenden Zellen des Streckenpfades (CP) abdecken,
- Definieren (80) von Daten mittels des Ereignis-Verwaltungs-Moduls (EM), die für mindestens einen Parameter in Bezug auf die Übertragung (T) der Pakete (P) innerhalb von jeder der Zellen der Simulationszone (ZS) repräsentativ sind, aus mindestens Paket-(P)-ZeitMultiplex-, Paket-(P)-Code-Multiplex- und Erforderliche-Leistung-Parametern.

2. Verfahren gemäß Anspruch 1, **dadurch gekennzeichnet, dass** der Schritt des Definierens (80) von mindestens einem Parameter aus Paket-(P)-Zeit-Multiplex-, Paket-(P)-Code-Multiplex- und Erforderliche-Leistung-Parametern mittels des Ereignis-Verwaltungs-Moduls (EM) mindestens einen der folgenden Schritte aufweist:
- Definieren (81) von Zeiträumen, die als Subrahmen (SF) bezeichnet werden, die das Zeit-Multiplexen der Pakete (P) während mindestens eines Rahmens (F) zur Übertragung (T) ermöglichen,
- Definieren (82) von Codes, die das Code-Multiplexen der Pakete (P) während mindestens eines Rahmens (F) zur Übertragung (T) ermöglichen,
- Definieren (83) der Leistung, die jedem der Pakete (P) während mindestens eines Rahmens (F) zur Übertragung (T) zugewiesen wird,
- Definieren (85) eines Typs von Zeitschlitz, der für die Übertragung der Pakete (P) gemäß den verschiedenen Arten von Diensten, die von den Servern (ER) bereitgestellt werden, verwendet wird, wobei der Typ von Zeitschlitz entweder einem Gesamtraten-Zeitschlitz oder einem Halbraten-Zeitschlitz oder einem Nur-Paket-Zeitschlitz oder einem Misch-Zeitschlitz entspricht.

3. Verfahren gemäß Anspruch 2, **dadurch gekennzeichnet, dass** der Schritt des Definierens (2) von Codes einen Schritt des Bestimmens (821) der Anzahl von jedem der Pakete (P) zugewiesenen Codes und einen Schritt (822) des Bestimmens des für die Codes verwendeten Modulationstyps aufweist.

4. Verfahren gemäß einem der Ansprüche 2 und 3, **dadurch gekennzeichnet, dass** die Schritte des Definierens (81) der Subrahmen (SF), des Definierens (82) der Codes und des Definierens (83) der Leistung für jedes der Pakete (P) mittels eines Paket-Planungs-Moduls (SP) durchgeführt werden, das das Bestimmen der Codes und der Subrahmen, mittels derer jedes der Pakete (P) während mindestens eines Rahmens (F) zur Übertragung (T) übertragen wird, sowie der jedem der Pakete (P) zugeordneten Leistung, ermöglicht.

5. Verfahren gemäß einem der Ansprüche 2 und 3, **dadurch gekennzeichnet, dass** der Schritt des Definierens (81) der Subrahmen (SF) durch einen Schritt (81b) des Evaluierens eines Zeitabschnitts (TP) ersetzt wird, der von der Übertragung (T) von jedem der Pakete (P) belegt wird, ohne dass Subrahmen (SF) definiert werden, wobei jedoch nur die Gesamtdauer berücksichtigt wird, während der jedes der Pakete (P) übertragen wird.

6. Verfahren gemäß Anspruch 5, **dadurch gekennzeichnet, dass** der Schritt (81b) des Evaluierens des Zeitabschnitts (TP), der von der Übertragung (T) von jedem der Pakete (P) belegt wird, auf einer Annäherung beruht, die aus einer Berechnung (811) der mittleren Leistung, die während des Zeitraums für die Übertragung von jedem der Pakete (P) genutzt wird, und aus einem Ausdehnen (812) der Leistung über den gesamten Zeitabschnitt (TP), der von jedem der Pakete (P) belegt wird, besteht, mittels der Anwendung durch das Ereignis-Verwaltungs-Modul (EP) mindestens eines Algorithmus aus den folgenden Algorithmen zur zeitlichen Verteilung der Pakete:
- eines sogenannten Einzelübertragungs-Algorithmus, gemäß dem während jedem der Subrahmen (SF) ein einziges Paket (P) übertragen wird, wobei dann während des Subrahmens (SF) die gesamte verfügbare Leistung genutzt wird,
- eines sogenannten Gruppenübertragungs-Algorithmus, gemäß dem während eines selben .Zeitabschnitts (TP) mittels eines Code-Multiplexens eine Mehrzahl von Paketen (P) übertragen wird, wobei die Pakete (P) dann jeweils einen Teil der gesamten verfügbaren Leistung nutzen.

7. Verfahren gemäß Anspruch 6, **dadurch gekennzeichnet, dass** es einen Schritt des Ermittelns (84) der Interferenz aufweist, die von jedem der Server (ER), die für die Übertragung (T) von jedem der Pakete (P) verantwortlich sind, während des Zeitabschnitts (TP), während dessen diese übertragen werden, wahrgenommen wird, wobei der Schritt mittels des Schrittes des Definierens (83) der jedem der Pakete (P) während mindestens einem Rahmen (F) zur Übertragung (T) zugeordneten Leistung und mittels der Anwendung der Algorithmen für die zeitliche Verteilung der Pakete mittels des Ereignis-Verwaltungs-Moduls (EP) durchgeführt.wird, wobei das Ermitteln (84) der wahrgenommenen Interferenz ein Berechnen eines Signal-Rausch-Verhältnisses für jedes der Pakete (P) ermöglicht.

8. Verfahren gemäß einem der Ansprüche 6 und 7, **dadurch gekennzeichnet, dass** die Anwendung des Gruppenübertragungs-Algorithmus mittels des Ereignis-Verwaltungs-Moduls (EM) von einem Schritt (814) des Zuweisens verschiedener Zeitabschnitte (TP) zu den verschiedenen während eines Rahmens (F) zur Übertragung (T) übertragenen Pakete (P) begleitet wird, mittels der Anwendung eines Algorithmus aus den folgenden Algorithmen für die Zuweisung eines Zeitabschnitts:
- eines sogenannten egalitären Algorithmus, gemäß dem der Zeitabschnitt (TP), der jedem der Pakete (P) zugeordnet wird, abhängig ist von der Gesamtzeit des Rahmens (F) für die Übertragung (T) geteilt durch die Anzahl von-zu übertragenden Paketen (P), und
- eines sogenannten Maximierungs-Algorithmus, gemäß dem der Zeitabschnitt (TP), der jedem der Pakete (P) zugeordnet wird, abhängig ist von einem Wert mindestens eines Parameters in Bezug auf die Übertragung (T) des Pakets (P) geteilt durch die Summe der Werte des Parameters (der Parameter) für die anderen Pakete (P).

9. Verfahren gemäß einem der Ansprüche 1 bis 8, **dadurch gekennzeichnet, dass** es einen vorangehenden Schritt des Erstellens (51) von mindestens einer Verteilungskarte (CR) aufweist, die Daten aufweist, die für den Verkehr und die Position der Server (ER) in dem Abdeckungsbereich des Netzes (RT) repräsentativ sind, wobei die Daten, die für den Verkehr repräsentativ sind, quantitativen und qualitativen Maßnahmen zur Lokalisierung einer Mehrzahl von mobilen Kommunikationsendgeräten und Servern, die in dem Abdeckungsbereich des Netzes (RT) arbeiten, und Übertragungen (T) von Paketen (P) von Daten entsprechen, die während Zeitschlitzen erfolgen, die wegen ihrer statistischen Signifikanz ausgewählt werden, wobei die Daten den Maßnahmen entsprechen, die in den Speichermitteln (11) des Optimierungssystems (1) gespeichert sind.

10. Verfahren gemäß einem der Ansprüche 1 bis 9, **dadurch gekennzeichnet, dass** es einen Schritt des Erstellens (51) von mindestens einer Verteilungskarte (CR) aufweist, die Daten aufweist, die für den Verkehr und die Lokalisierung der Server in dem Abdeckungsbereich des Netzes (RT) repräsentativ sind, wobei die für den Verkehr repräsentativen Daten mittels des Ereignis-Verwaltungs-Moduls (EM) erzeugt werden, und einerseits die Lokalisierung einer Mehrzahl von mobilen Kommunikationsendgeräten, die zufällig in dem Abdeckungsbereich des Netzes (RT) gemäß einer vorbestimmten Dichte verteilt sind, und andererseits die Übertragungen (T) von Paketen (P) von Daten repräsentieren, die von den Endgeräten angefordert werden, die zufällig den verschiedenen Endgeräten zugewiesen werden, die sich in dem Netzwerk (RT) befinden, ausgehend von Zufallsgesetzen, die in den Speichermitteln (11) des Optimierungssystems (1) gespeichert sind.

11. Verfahren gemäß einem der Ansprüche 1 bis 10, **dadurch gekennzeichnet, dass** es eines Schritt des Speicherns in den Speichermitteln (11) des Optimierungssystems (1) von mindestens einem Wege-Algorithmus aufweist, der dem Nutzungs-Steuer-Modul (CL) das Definieren eines Wegepfades (CP) ermöglicht, der aus einer Auswahl einer beliebigen Zelle der Simulationszone (ZS) und anschließend einer Mehrzahl von Iterationen einer Auswahl einer Zelle besteht, die benachbart zu der zuvor ausgewählten Zelle ist, bis alle Zellen der Simulationszone (ZS) nacheinander in einer ansteigenden Reihenfolge abhängig von ihrer Entfernung relativ zu der ersten ausgewählten Zelle ausgewählt sind.

12. Verfahren gemäß einem der Ansprüche 1 bis 10, **dadurch gekennzeichnet, dass** es einen Schritt des Speicherns in den Speichermitteln (11) des Optimierungssystems (1) von mindestens einem Wege-Algorithmus aufweist, der konzentrische Kreise definiert, die um die Zelle herum zentriert sind, in der die Störung stattfindet, und der dem Nutzungs-Steuer-Modul (CL) das Definieren eines Wegepfades (CP) ermöglicht, der aus aufeinanderfolgenden Auswahlen der Zellen der Simulationszone (ZS) besteht, durch die die konzentrischen Kreise passieren, in einer ansteigenden Reihenfolge in Abhängigkeit von der Entfernung der Zellen relativ zu der ersten ausgewählten Zelle.

13. Verfahren gemäß einem der Ansprüche 1 bis 12, **dadurch gekennzeichnet, dass** der Schritt des Anwendens des Wege-Algorithmus durch das Nutzungs-Steuerungs-Modul (CL) von einem Schritt des Erzeugens von Daten begleitet wird, die für ein Gitter zum Zerlegen der Simulationszone (ZS) in Teile (D) repräsentativ sind, die jeweils einen Index aufweisen, der ausgehend von den Koordinaten der Zellen erhalten wird und das Lokalisieren von jedem der Abschnitte sowie deren Klassifizieren in einer aufsteigenden Reihenfolge in Abhängigkeit von ihrer Entfernung relativ zu dem zentralen Abschnitt ermöglicht.

14. Verfahren gemäß Anspruch 13, **dadurch gekennzeichnet, dass** der Schritt des Anwendens eines Wege-Algorithmus mittels des Nutzungs-Steuer-Moduls (CL) zu einer Definition von konzentrischen Kreisen führt, die um die Zelle herum zentriert sind, in der die Störung stattfindet, und von einem Schritt des Definierens eines Wegepfades (CP) begleitet wird, der mindestens einen Vektor aufweist, der den zurückzulegenden Weg von einem Teil (D) zu dem anderen innerhalb der Simulationszone (ZS) anzeigt, zum Ermöglichen von aufeinanderfolgendem Auswählen der Teile (D) der Simulationszone (ZS), durch die die konzentrischen Kreise passieren, sowie von aufeinanderfolgendem Auswählen der Zellen, die in jedem der Teile (D) enthalten sind, in einer aufsteigenden Reihenfolge in Abhängigkeit von ihrer Entfernung relativ zu einem zentralen Teil.

15. Verfahren gemäß einem der Ansprüche 13 und 14, **dadurch gekennzeichnet, dass** die Daten, die für das Gitter zum Zerlegen der Simulationszone (ZS) in Teile (D) repräsentativ sind, Daten aufweisen, die für die Koordinaten des Teils, der dem Nutzungs-Steuer-Modul (CL) das Bestimmen der Lokalisierung der Zellen ermöglicht, sowie der benachbarten Teile (D) und Zellen repräsentativ sind.

16. Verfahren gemäß einem der Ansprüche 1 bis 12, **dadurch gekennzeichnet, dass** der Schritt des Anwendens des Wege-Algorithmus mittels des Nutzungs-Steuer-Moduls (CL) von einem Schritt des Erzeugens von Daten für jede Zelle der Simulationszone (ZS) begleitet wird, die für die benachbarten Zellen in der Simulationszone (ZS) repräsentativ sind, so dass ein Wegepfad (CP) von jeder der Zellen nacheinander definiert wird.

17. Verfahren gemäß Anspruch 16, **dadurch gekennzeichnet, dass** der Wegepfad der Zellen innerhalb eines Teils (D) zufällig bestimmt wird.

18. Verfahren gemäß einem der Ansprüche 1 bis 17, **dadurch gekennzeichnet, dass** der Schritt des Anwendens des Wege-Algorithmus mittels des Nutzungs-Steuer-Moduls (CL) von einem Erzeugen von Daten für jede Zelle der Simulationszone (ZS) begleitet wird, die für einen Markierer repräsentativ sind, der die während des Durchlaufens der Simulationszone mittels des Nutzungs-Steuer-Moduls (CL) bereits durchquerten Zellen anzeigt.

19. Verfahren gemäß einem der Ansprüche 1 bis 18, **dadurch gekennzeichnet, dass** der Schritt des Definierens (50) der Störung aus einer zufälligen und automatischen Auswahl eines mobilen Kommunikationsendgerätes (2) in einer Verteilungskarte (CR) besteht, die aus den Speichermittelns (11) des Optimierungssystems (1) extrahiert wird, und dass der Schritt (52) des Auswählens einer Menge von Zellen, die eine Simulationszone (ZS) innerhalb der Verteilungskarte (CR) definieren, aus einer Auswahl von mindestens einem Server (ER) besteht, dessen Zelle den Standort abdecken kann, an dem sich das Endgerät in der Verteilungskarte (CR) befindet.

20. Verfahren gemäß einem der Ansprüche 1 bis 18, **dadurch gekennzeichnet, dass** die Schritte des Definierens (50) der Störung und des Auswählens (52) einer Menge von Zellen, die eine Simulationszone (ZS) innerhalb der Verteilungskarte (CR) definieren, aus einer Auswahl eines mobilen Kommunikationsendgerätes (2), das sich im Abdeckungsbereich des Netzes (RT) befindet, und mindestens der Server (ER) bestehen, deren Zellen die Position abdecken können, an der sich das Endgerät in der Verteilungskarte (CR) befindet, ausgehend von Informationen, die von einem Benutzer des Ressourcen-Optimierungssystems (1) eingegeben und gespeichert werden, mit Hilfe von interaktiven Mitteln (12) zwischen dem Benutzer und dem Ressourcen-Optimierungssystem (1).

21. Verfahren gemäß einem der Ansprüche 1 bis 20, einerseits **dadurch gekennzeichnet, dass** der Schritt des Definierens (50) der Störung bei einer Anfrage zur Übertragung (T) eines Pakets (P) von Daten durch ein anforderndes mobiles Endgerät (2) durchgeführt wird, das sich im Abdeckungsbereich eines im Einsatz befindlichen Mobiltelefon-Netzes (RT) befindet, und aus einer Lokalisierung des anfordernden mobilen Kommunikationsendgerätes (2) im Abdeckungsbereich des Netzes (RT) sowie einer Identifizierung des Typs von Übertragung (T), die es anfordert, besteht, und dass andererseits der Schritt (52) des Auswählens einer Gesamtheit von Zellen, die eine Simulationszone (ZS) innerhalb der Verteilungskarte (CR) definieren, aus einer Auswahl von mindestens einem Server (ER) besteht, dessen Zelle die Position abdecken kann, an der sich das Endgerät (2) in der Verteilungskarte (CR) befindet.

22. Verfahren gemäß einem der Ansprüche 1 bis 21, **dadurch gekennzeichnet, dass** der Schritt des Definierens (80) von Daten, die für mindestens einen Parameter in Bezug auf die Übertragung (T) der Pakete (P) repräsentativ sind, mittels des Ressourcen-Optimierungssystems (1) entweder per Zufall und automatisch, oder ausgehend von Informationen, die von einem Benutzer des Ressourcen-Optimierungssystems (1) eingegeben und gespeichert werden, oder ausgehend von Übertragungsparametern durchgeführt wird, die bei einer Übertragungsanfrage von einem mobilen Kommunikationsendgerät (2) angefordert werden.

23. Verfahren gemäß einem der Ansprüche 1 bis 22-, **dadurch gekennzeichnet, dass** der Schritt des Definierens (50) der Störung mittels des Ereignis-Verwaltungs-Moduls (EM) mindestens einen der folgenden Schritte aufweist:
- Anfordern (501) einer neuen Übertragung (T), gesteuert von einem Modul (TE) zur Steuerung der Ereignisse,
- Beenden (502) einer Übertragung (T), gesteuert von dem Modul (TE) zur Steuerung der Ereignisse,
- Ablaufen (503) einer Übertragungsfrist (T), gesteuert von dem Modul (TE) zur Steuerung der Ereignisse,
- Simulieren (504) der Mobilität des mobilen Kommunikationsendgerätes (2), das für die Störung verantwortlich ist, gesteuert von einem Modul (MS) zur Mobilitäts-Simulierung,
- Ändern (505) der Übertragungen (T) von aktuellen Paketen, gesteuert von einem Paket-Planungs-Modul (SP).

24. Verfahren gemäß Anspruch 23, **dadurch gekennzeichnet, dass** der Schritt des Simulierens (504) der Mobilität des mobilen Kommunikationsendgerätes (2), das für die Störung verantwortlich ist, aus einem der folgenden Schritte besteht:
- Modellieren einer Bewegungsgeschwindigkeit des mobilen Kommunikationsendgerätes (2) durch Ändern (506) des angeforderten Signal-Rausch-Verhältnisses, wobei dies ein Modellieren der Höhe der Verluste oder der Verstärkung aufgrund der Variationen der Stärke des von den mobilen Kommunikationsendgeräten (2) wahrgenommenen Signals ermöglicht, oder
- Ändern (508) der Position des mobilen Kommunikationsendgerätes (2) in der Verteilungskarte (CR) mittels Auswählens eines benachbarten mobilen Kommunikationsendgerätes (2) in der Karte (CR).

25. Verfahren gemäß einem der Ansprüche 1 bis 24, **dadurch gekennzeichnet, dass** es einen Schritt des Steuern (53) des Verkehrs zwischen den Servern (ER) der Simulationszone (ZS) und den mobilen Kommunikationsendgeräten aufweist, die sich in der Simulationszone (ZS) befinden, wobei dieser mittels eines Moduls (CT) zur Steuerung des Verkehrs des Optimierungssystems (1) durchgeführt wird, das für jede der laufenden Übertragungen (T) Sitzungen zur Übertragung (T) von Paketen (P), Übertragungsmedien (B) und Übertragungskanäle (CH) für die Pakete (P) definiert, wobei der Schritt von mindestens einem der Schritte des Definierens (80) der Multiplex- und Leistungs-Parameter begleitet wird.

26. Verfahren gemäß Anspruch 25, **dadurch gekennzeichnet, dass** der Schritt des Steuerns (53) des Verkehrs mittels des Moduls (CT) zur Steuerung des Verkehrs des Optimierungssystems (1) aus einem Definieren einer Mehrzahl von Parametern in Bezug auf die Dienste und die Ressourcen besteht, die von den mobilen Kommunikationsendgeräten genutzt werden, die sich in der Simulationszone (ZS) befinden, wobei sich das Definieren aus mindestens einem Schritt (531) des Extrahierens von für die Parameter repräsentativen Daten aus einer einer Verteilungskarte (CR), und aus einem möglichen Schritt des Erzeugens (532) von für die Parameter repräsentativen Daten aus Informationen, die von einem Benutzer des Optimierungssystems (1) eingegeben werden, ergibt, so dass mindestens einer der folgenden Schritte ermöglicht wird:
- Definieren (533) von Sitzungen, die Übertragungen (T) von Datenpaketen zwischen den Servern (ER) der Simulationszone (ZS) und jedem der anwesenden mobilen Kommunikationsendgeräte entsprechen, zusammen mit dem Definieren (534) der Pakete (P), die während der Sitzungen durchlaufen,
- Definieren (535) von mindestens Träger (B), der mit jeder der Übertragungen (T) von jedem der mobilen Kommunikationsendgeräte verknüpft ist, zusammen mit dem Definieren von mindestens einem Parameter aus den Parametern in Bezug auf die Art des Trägers (B), den Takt des Trägers (B), die benötigte Signal-Qualität, die Übertragungskanäle (CH), die für jede der Zellen verwendet werden, und den genehmigten Leistungsbereich.

27. Verfahren gemäß einem der Ansprüche 1 bis 26, **dadurch gekennzeichnet, dass** es aufweist: einen Schritt des Steuerns (54) der Zulassung der Übertragung (T) des Pakets (P) mittels eines Moduls (CAC) zur Steuerung des Zulassens der Anrufe des Systems (1) zur Optimierung von Ressourcen, das eine Definition (541) einer als aktive Menge bezeichneten Menge (AS) von in der Simulationszone (ZS) verfügbaren Zellen realisiert, mittels des verifizierens (542) der Verfügbarkeit in der Simulationszone (ZS) von mindestens einem Parameter von der Leistung, den Kanälen und den Code-Multiplex- und Zeitmultiplex-Parametern oder der verwendeten Art von Zeitschlitzen, und anschließend des Klassifizierens der Server (ER) der aktiven Menge (AS) in Abhängigkeit von ihrem Anteil (Ec/Io) an der Gesamtleistung der Signale, die mit dem mobilen Kommunikationsendgerät (2) ausgetauscht werden, wobei das Modul (CAC) zur Steuerung des Zulassens der Anrufe dann eine Entscheidung (545) trifft, in Abhängigkeit von dem Verkehr, der Zulassung der Übertragung (T) des Pakets (P) mittels mindestens eines Übertragungswegs, der als Träger (B) bezeichnet wird, und mindestens eines Kanals (CH) zur Übertragung des Pakets (P) über mindestens einen Server (ER), der eine der Zellen der aktiven Menge (AS) abdeckt.

28. Verfahren gemäß einem der Ansprüche 1 bis 27, **dadurch gekennzeichnet, dass** es einen Schritt zur Steuerung (56) der Nutzung aufweist, der von einem Modul (CL) zur Steuerung der Nutzung des Optimierungssystems (1) bei einer Variation der Anzahl von Paketen (P), die innerhalb der Simulationszone (ZS) übertragen werden, durchgeführt wird, und aus folgendem besteht: einem Verifizieren (561) von mindestens einem Parameter, der von den mobilen Kommunikationsendgeräten in den Zellen verwendet wird, die die Simulationszone (ZS) bilden, aus mindestens der Leistung und den Code-Multiplex- und ZeitMultiplex-Parametern oder der verwendeten Art von Zeitschlitzen, und anschließend dem Anpassen (562) des Parameters (der Parameter) für mindestens einen Server (ER), der mindestens eine Zelle der Simulationszone (ZS) abdeckt.

29. Verfahren gemäß einem der Ansprüche 1 bis 28, **dadurch gekennzeichnet, dass** es einen Schritt der Belastungs-Steuerung (55) für jede der Zellen der Simulationszone (ZS) aufweist, der mittels eines Moduls (LC) zur Steuerung der Belastung des Optimierungssystems (1) bei einer übermäßigen Nutzung der Ressourcen von mindestens einem Server (ER) der Simulationszone (ZS) durchgeführt wird, der aus der Anwendung von mindestens einem Belastungs-Steuerungs-Algorithmus aus mindestens einem Algorithmus zur Steuerung der Belastung mit konstanter Leistung und mindestens einem Algorithmus zur Steuerung der Belastung mit variabler Leistung, die zuvor in den Speichermitteln (11) des Optimierungssystems (1) gespeichert wurden, besteht, und die folgenden Schritte aufweist:
- Verifizieren (551) der genutzten Ressourcen in Bezug auf mindestens einen Parameter aus der Leistung, den verwendeten Kanälen und den Code-Multiplex- und ZeitMultiplex-Parametern oder der verwendeten Art von Zeitschlitzen in den Zellen, die die Simulationszone (ZS) bilden, zum Auswählen von mindestens einem Server (ER), dessen Ressourcen übermäßig genutzt werden,
- Auswählen (552) von mindestens einem Paket aus den Paketen, die als Überschuss-Pakete bezeichnet werden, mittels der maximalen Leistung oder mittels eines maximalen Durchflusses auf den Übertragungskanälen zwischen den anwesenden mobilen Kommunikationsendgeräten und dem Server (ER), dessen Ressourcen auf übermäßige Art genutzt werden,
- Entscheiden (70) zwischen einem Zurückweisen (60) des ausgewählten Überschuss-Pakets und einem Herabsetzen (65) der Übertragungsparameter des ausgewählten Überschuss-Pakets.

30. Verfahren gemäß einem der Ansprüche 28 und 29, **dadurch gekennzeichnet, dass** der Schritt des Entscheidens (70) zwischen einem Zurückweisen (60) des ausgewählten Überschuss-Pakets und einem Herabsetzen (65) der Übertragungsparameter des ausgewählten Überschuss-Pakets bei der Steuerung (55) der Belastung mittels des Belastungs-Steuerungs-Moduls (LC) von dem angewendeten Belastungs-Steuerungs-Algorithmus abhängt und die folgenden Schritte aufweist:
- Verifizieren (71) der Art der Vermittlung über Schaltkreis oder über Paket, die von dem ausgewählten Überschuss-Paket verwendet wird,
- Verifizieren (72) der Parameter des Trägers (B), der von dem ausgewählten Überschuss-Paket verwendet wird,
- Verifizieren (73) einer Liste von Servern (ER) der aktiven Menge (AS), die in Abhängigkeit von ihrem Anteil (Ec/Io) an der Gesamtleistung der mit dem mobilen Kommunikationsendgerät (2) ausgetauschten Signale klassifiziert werden, zum Ermitteln, ob es einen anderen Server (ER) gibt, der zum Ermöglichen der Übertragung des ausgewählten Überschuss-Pakets geeignet ist, wenn die Leistung des Signals, das von einem Server (ER) ausgegeben wird, nicht ausreicht.

31. Verfahren gemäß einem der Ansprüche 28 und 29, **dadurch gekennzeichnet, dass** der Schritt des Entscheidens (70) zwischen einem Zurückweisen (60) des ausgewählten Überschuss-Pakets und einem Herabsetzen (65) der Übertragungsparameter des ausgewählten Überschuss-Pakets während des Schrittes der Belastungssteuerung (55) mittels der Anwendung von mindestens einem Algorithmus zur Belastungssteuerung mit konstanter Leistung aus folgendem besteht: einem konstanten Aufrechterhalten der Leistung, die den Paketen (P) zu Beginn zugewiesen wird, während der gesamten Dauer ihrer Übertragung (T) und einem Herabsetzen (65) der Code-Multiplex-Parameter in Abhängigkeit von dem momentanen Signal-Rauschverhältnis, so dass der Durchfluss des ausgewählten Überschuss-Pakets verringert wird, wobei gleichzeitig das Signal-Rausch-Verhältnis über seinem angeforderten Wert gehalten wird, oder einem zurückweisen (60) des ausgewählten Überschuss-Pakets (P), wenn das erforderliche Signal-Rausch-Verhältnis nicht aufrechterhalten werden kann.

32. Verfahren gemäß einem der Ansprüche 28 und 29, **dadurch gekennzeichnet, dass** der Schritt des Entscheidens (70) zwischen einem zurückweisen (60) des ausgewählten Überschuss-Pakets und einem Herabsetzen (65) der Übertragungsparameter des ausgewählten Überschuss-Pakets während des Schrittes der Belastungssteuerung (55) mittels der Anwendung von mindestens einem Algorithmus zur Steuerung der Belastung mit variabler Leistung aus folgendem besteht:
- entweder einem gleichzeitigen Herabsetzen (65) der anfangs den Paketen (P) zugewiesenen Code-Multiplex-Parameter und den Leistungsparametern in Abhängigkeit von dem aktuellen Signal-Rausch-Verhältnis, so dass der Durchfluss des ausgewählten Überschuss-Pakets verringert wird, wobei gleichzeitig das Signal-Rausch-Verhältnis über seinem erforderlichen Wert gehalten wird,
- oder, wenn die Leistung nicht reguliert werden kann, einem Herabsetzen (65) nur der Code-Multiplex-Parameter in Abhängigkeit von dem momentanen Signal-Rausch-Verhältnis, so dass der Durchfluss des ausgewählten Überschuss-Pakets verringert wird, wobei gleichzeitig das Signal-Rausch-Verhältnis über seinem erforderlichen Wert gehalten wird,
- oder einem Zurückweisen (60) des ausgewählten Überschuss-Pakets (P), wenn das erforderliche Signal-Rausch-Verhältnis nicht aufrechterhalten werden kann.

33. Verfahren gemäß einem der Ansprüche 1 bis 28, **dadurch gekennzeichnet, dass** es einen Schritt zur Steuerung der Belastung (55) für jede der Zellen der Simulationszone (ZS) aufweist, der von einem Modul (LC) zur Steuerung der Belastung des Optimierungssystems (1) durchgeführt wird, mittels der Anwendung von mindestens einem Zeitschlitz-Belastungs-Steuerungs-Algorithmus, entweder wenn ein gemischter Zeitschlitz nur für die Übertragung eines Pakets (CS) mit Leitungs-vermittlung verwendet wird, wobei normalerweise die gleichzeitige Übertragung (PS) von Paketen mit Paket-Vermittlung und von Paketen (CS) mit Leitungs-Vermittlung ermöglicht wird, oder wenn ein Paket (P) aufgegeben wird, wobei der Schritt zur Steuerung der Belastung aus einer Zuweisung von egalitären Ressourcen zu der Menge der Pakete (P), die gerade übertragen werden, in Abhängigkeit von der Kapazität der für die Übertragungen (T) verantwortlichen mobilen Kommunikationsendgeräte, und einem möglichen Zurückweisen (60) des neuesten Pakets besteht, wenn die Anzahl von Paketen, die gerade übertragen werden, einen vorbestimmten Wert überschreitet.

34. Verfahren gemäß einem der Ansprüche 1 bis 33, **dadurch gekennzeichnet dass** es einen Schritt des Steuerns-(55) der Belastung für jede der Zellen der Simulationszone (ZS) aufweist, der mittels eines Moduls (LC) zur Steuerung der Belastung des Optimierungssystems (1) durchgeführt wird, der bei einer Verringerung der Nutzung der Ressourcen von mindestens einem Server (ER) der Simulationszone (ZS), aus der Anwendung von mindestens einem Belastungs-Steuerungs-Algorithmus besteht, der zuvor in den Speichermitteln (11) des Optimierungssystems (1) gespeichert wurde, und die folgenden Schritte aufweist:
- Verifizieren (551) der genutzten Ressourcen in Bezug auf mindestens einen Parameter aus der Leistung, den verwendeten Kanälen und den Code-Multiplex- und ZeitMultiplex-Parametern oder der verwendeten Art von Zeitschlitzen in der Simulationszone (ZS) zum Detektieren von mindestens einem Server (ER), der ungenutzte Ressourcen aufweist,
- Auswählen (552) von mindestens einem Paket aus den Paketen, die als benachteiligt bezeichnet werden, mittels eines maximalen Durchflusses auf den Übertragungskanälen des Servers (ER), der ungenutzte Ressourcen aufweist,
- Heraufsetzen (66) der Übertragungsparameter des ausgewählten benachteiligten Pakets mittels Erhöhens (661) eines Wertes von mindestens einem von dem ausgewählten benachteiligten Paket verwendeten Träger-Parameter (B), bis zum Erreichen eines zufriedenstellenden Nutzungspegels, der in dem Algorithmus zur Steuerung der Belastung definiert ist.

35. Verfahren gemäß Anspruch 34, **dadurch gekennzeichnet, dass** der Schritt des Steuerns (55) der Belastung von jeder der Zellen der Simulationszone (ZS) mit einem Schritt des Detektierens von möglichen Schwankungen zwischen zwei Werten von mindestens einem Parameter des Trägers (B), der von einem Paket (P) während der Rekonfiguration durch das Modul (LC) zur Steuerung der Belastung verwendet wird, und gegebenenfalls einer Zuweisung des durch die Schwankung erhaltenen Minimalwertes zu diesem Parameter verknüpft ist.

36. Verfahren_gemäß einem der Ansprüche 30 bis 35, **dadurch gekennzeichnet, dass** der Schritt des Steuerns (55) der Belastung von jeder der Zellen der Simulationszone (ZS) mittels Aktivierens des Moduls (LC) zur Steuerung der Belastung durch das Modul (CL) zur Steuerung der Nutzung durchgeführt wird, zum Verbessern der Qualität der Übertragung (T) der Pakete (P) der verschiedenen mobilen Kommunikationsendgeräte, die sich in mindestens einer Zelle befinden, in der die Störung stattfindet, die von dem Ereignis-Verwaltungs-Modul (EM) definiert wird.

37. Verfahren gemäß einem der Ansprüche 30 bis 36, **dadurch gekennzeichnet, dass** der Schritt des Steuerns (55) der Belastung von jeder der Zellen der Simulationszone (ZS) mittels automatischen Aktivierens des Moduls (LC) zur Steuerung der Belastung durchgeführt wird, wenn die von einem Kanal (CH) zur Übertragung eines Pakets benötigte Leistung über ein autorisiertes Maximum ansteigt, und aus einer automatischen Auswahl (552) des Pakets als Überschuss-Paket und anschließend einem Herabsetzen (65) der Übertragungsparameter des ausgewählten Überschuss-Pakets besteht.

38. Verfahren gemäß einem der Ansprüche 27 bis 37, **dadurch gekennzeichnet, dass** der Schritt des Steuerns (54) der Zulassung der Übertragung (T) des Pakets (P) des anfordernden mobilen Endgerätes (2) aus der Anwendung durch das Modul (CAC) zur Zulassungs-Steuerung, von mindestens einem Zulassungs-Steuerungs-Algorithmus aus mindestens einem Algorithmus zur Steuerung der Zulassung in Abhängigkeit von der Codierung und mindestens einem Algorithmus zur Steuerung der Zulassung in Abhängigkeit von Zeitschlitzen besteht, die zuvor in den Speichermitteln (11) des Optimierungssystems (1) gespeichert wurden, und die folgenden Schritte aufweist:
- Definieren (541) der aktiven Menge (AS) von Zellen, die für die Übertragung (T) des Pakets (P) des anfordernden Endgerätes (2) verfügbar sind, mittels Messens und Klassifizierens einer Mehrzahl von Servern (ER) der Simulationszone (ZS), deren Anzahl von der Lokalisierung und dem Typ des anfordernden Endgerätes (2) abhängt,
- Verifizieren (542) der Verfügbarkeit von Ressourcen für jede der Zellen der Simulationszone (ZS) in Bezug auf mindestens einen Parameter aus der Leistung, den Kanälen und den Code-Multiplex- und Zeit-Multiplex-Parametern oder dem verwendeten Typ von Zeitschlitzen, anschließend Klassifizieren der Server (ER) der aktiven Menge (AS) in Abhängigkeit von ihrem Anteil (Ec/Io) an der gesamten Leistung der Signale, die mit dem mobilen Kommunikationsendgerät (2) ausgetauscht werden,
- Definieren der Leistung, die von den Kanälen zur Übertragung des Pakets (P) für jede der Zellen benötigt wird und Verifizieren (543), dass die von jeder der Zellen benötigte Leistung nicht die maximale Leistung des Trägers (B) überschreitet, die für die Übertragung (T) des Pakets (P) des anfordernden Endgerätes (2) definiert ist, und
- Verifizieren (544), dass der Status von mindestens einer der Zellen das Zulassen der Übertragungen (T) von Daten mittels eines neuen mobilen Kommunikationsendgerätes ermöglicht.

39. Verfahren gemäß Anspruch 38, **dadurch gekennzeichnet, dass** das Anwenden von mindestens einem Zulassungs-Steuerungs-Algorithmus durch das Modul (CAC) zur Zulassungs-Steuerung in Abhängigkeit von der Codierung je nach dem Verkehr zu einer Entscheidung (545) über die Zulassung der Übertragung (T) des Pakets (P) des anfordernden mobilen Endgerätes (2) führt, wobei die Entscheidung (545) aus einem der folgenden Schritte besteht:
- Akzeptieren (61) der Übertragung (T) des Pakets (P) des anfordernden Endgerätes (2), wenn die Bedingungen, die für das Zulassen einer neuen Übertragung (T) erforderlich sind, erfüllt sind, nach dem Auswählen (58) eines Servers (ER) für die Übertragung (T) des Pakets (P) und dem Auswählen (59) des Trägers (B), der für die Übertragung (T) zu verwenden ist, zusammen mit dem Zuweisen von möglichst hohen Anfangs-Codierungs-Parametern in dem Server (ER) in Abhängigkeit von der Anzahl von verfügbaren Kanälen und der benötigten Leistung, dann Zuweisen eines Anfangs-zeitabschnitts (TP),
- Zurückweisen (60) der Übertragung (T) des Pakets (P) des anfordernden mobilen Endgerätes (2) durch den Server (ER), wenn die Anzahl von verfügbaren Kanälen nicht ausreicht oder wenn die benötigte Leistung zu hoch ist, selbst für die niedrigsten Codierungsparameter, die auf dem Server (ER) verfügbar sind.

40. Verfahren gemäß Anspruch 38, **dadurch gekennzeichnet, dass** das Anwenden von mindestens einem Algorithmus zur Steuerung der Zulassung in Abhängigkeit von Zeitschlitzen mittels des Moduls (CAC) zur Zulassungs-Steuerung abhängig von dem Verkehr zu einer Entscheidung (545) über die Zulassung der Übertragung (T) des Pakets (P) des anfordernden mobilen Endgerätes (2) führt, wobei die Entscheidung (545) aus einem der folgenden Schritte besteht, wenn das Paket (CS) eine Leitungs-vermittlung verwendet:
- Akzeptieren (61) der Übertragung (T) des Pakets (P) des anfordernden Endgerätes (2), wenn die Bedingungen, die für das Zulassen einer neuen Übertragung (T) erforderlich sind, erfüllt sind, nach dem Auswählen (58) eines Servers (ER) für die Übertragung (T) des Pakets (P) und dem Auswählen (59) des Trägers (B), der für die Übertragung (T) zu verwenden ist, zusammen mit dem Zuweisen eines Zeitschlitzes des Gesamtraten-Typs, wenn ein derartiger Zeitschlitz auf dem Server (ER) verfügbar ist, oder dem Zuweisen eines Zeitschlitzes des Halbraten-Typs, wenn das Paket (P) ein Halbraten-Anruf ist,
- Rekonfiguration (64) mittels des Anwendens von mindestens einem Algorithmus für das Rekonfigurieren der Übertragung (T) von Daten, wenn die Bedingungen, die für das Zulassen einer neuen Übertragung (T) erforderlich sind, nicht erfüllt sind und die Speichermittel (11) des Optimierungssystems (1) mindestens einen Rekonfigurations-Algorithmus speichern, zum Ermöglichen einer Modifizierung der Daten in Bezug auf den Träger (B) und zum Erhöhen der Möglichkeit des Zulassens der Übertragung (T),
- Zurückweisen (60) der Übertragung (T) des Pakets (P) des anfordernden mobilen Endgerätes (2), wenn die Bedingungen, die für das Zulassen erforderlich sind, nicht erfüllt sind und wenn die Speichermittel (11) des Optimierungssystems (1) keinen Rekonfigurations-Algorithmus speichern oder der Verkehr in der Simulationszone (ZS) keine effiziente Rekonfiguration (64) der Übertragung (T) des Pakets (P) ermöglicht.

41. Verfahren gemäß Anspruch 38, **dadurch gekennzeichnet, dass** der Schritt des Rekonfigurierens (64) mittels des Anwendens von mindestens einem Algorithmus zur Rekonfiguration der Übertragung (T) des Pakets (P), der mittels des Moduls (CAC) zur Zulassungs-Steuerung durchgeführt wird, wenn die notwendigen Bedingungen für das Zulassen einer neuen Übertragung, die durch den Algorithmus zur Steuerung der Zulassung in Abhängigkeit von Zeitschlitzen definiert werden, nicht erfüllt sind und die Speichermittel (11) des Optimierungssystems (1) mindestens einen Rekonfigurations-Algorithmus speichern, zu folgendem führt:
- entweder zu einer Suche (67) nach einem Anruf, dem ein Zeitschlitz des Gesamtraten-Typs zugewiesen ist, dann, gegebenenfalls zum Zuweisen eines Zeitschlitzes des Halbraten-Typs zu dem Anruf und zum Zuweisen des Zeitschlitzes des Gesamtraten-Typs, der somit frei ist, zu der neuen Übertragung,
- oder zu einer Suche (68) nach einem Zeitschlitz des Mischtyps, und gegebenenfalls zum Zuweisen des gemischten Zeitschlitzes zu der neuen Übertragung, und anschließend zum Anpassen des gemischten Zeitschlitzes an die neue Übertragung (T) mit Leitungs-Vermittlung.

42. Verfahren gemäß Anspruch 38, **dadurch gekennzeichnet, dass** das Anwenden von mindestens einem Algorithmus zur Steuerung der Zulassung in Abhängigkeit von Zeitschlitzen mittels des Moduls (CAC) zur Steuerung der Zulassung in Abhängigkeit von dem Verkehr zu einer Entscheidung (545) über die Zulassung der Übertragung (T) des Pakets (P) des anfordernden mobilen Endgerätes (2) führt, wobei die Entscheidung (545) aus einem der folgenden Schritte besteht, wenn das Paket (PS) eine Paket-Vermittlung verwendet:
- Suchen eines Übertragungsblock, bestehend aus einer Kombination von Zeitschlitzen ausschließlich des Paket-Typs und von Zeitschlitzen des Misch-Typs in einem Träger (B), dann gegebenenfalls Akzeptieren (61) der Übertragung (T) des Pakets (P) des anfordernden Endgerätes (2) und Zuweisen des Blocks zu der neuen Übertragung,
- zurückweisen (60) der Übertragung (T) des Pakets (P) des anfordernden mobilen Endgerätes (2), wenn kein Übertragungsblock für das Akzeptieren der neuen Übertragung verfügbar ist.

43. Verfahren gemäß einem der Ansprüche 1 bis 42, **dadurch gekennzeichnet, dass** es mittels einer Anwendung (102) des Simulierens und Optimierens von Ressourcen durchgeführt wird, die auf den Verarbeitungsmitteln (10) des Systems zur Optimierung von Ressourcen (1) durchgeführt wird und die Verarbeitungsmittel (10) und die Interoperabilität des Moduls (CT) zur Steuerung des Verkehrs, des Moduls (CAC) zur Steuerung der Zulassung, des Moduls (LC) zur Steuerung der Belastung und des Moduls (CL) zur Steuerung der Nutzung der Ressourcen steuert und auf die Speichermittel (11) des Optimierungssystems (1) zum Laden der notwendigen Daten in die verschiedenen Module zugreift, wobei das Verfahren einen Schritt des Installierens (47) der Anwendung (102) auf dem Optimierungssystem (1) mittels Speicherns in den Speichermitteln (11) des Optimierungssystems (1) von Daten aufweist, die das Ausführen der Anwendung (102) auf den Verarbeitungsmitteln (10) des Optimierungssystems (1) ermöglichen.

44. Verfahren gemäß Anspruch 43, **dadurch gekennzeichnet, dass** der Schritt des Installierens (47) der Anwendung (102) auf dem Optimierungssystem (1) einen Schritt des Implementierens (48) der Anwendung (102) zur Optimierung in einer Software-Umgebung aufweist, die von einem Zellen-Planungswerkzeug (103) bereitgestellt wird, das auf den Verarbeitungsmitteln von mindestens einem Server (ER) innerhalb des Abdeckungsbereichs des Netzes (RT) ausgeführt wird, mittels Speicherns in Speichermitteln des Servers (ER) von Daten, die das Ausführen der Anwendung (102) zur Optimierung von Ressourcen in dem Planungswerkzeug (103) des Servers (ER) ermöglichen, der somit ein Optimierungswerkzeug (1) bildet.

45. Verfahren gemäß einem der Ansprüche 1 bis 44, **dadurch gekennzeichnet, dass** die Schritte des Definierens (50) der Störung und des Auswählens (52) einer Simulationszone (ZS) von einem Schritt des Ladens von zumindest einigen der in den Speichermitteln (11) des Optimierungssystems (1) gespeicherten Daten in einen Arbeitsspeicher (101) des Typs eines Speichers mit Direktzugriff oder mit sehr kurzer Zugriffszeit des Systems (1) zur Optimierung von Ressourcen begleitet werden.
